# EUROPEAN PATENT SPECIFICATION

(11) **EP 3 165 738 B1**
(45) Date of publication and mention of the grant of the patent: **30.10.2019**
(21) Application number: 15815815.4
(22) Date of filing: 03.07.2015
(51) Int. Cl.: F01N 13/08, B62M 7/02, F01N 3/20, F01N 3/24, F01N 3/28, F01N 13/18

(54) **STRADDLED VEHICLE WITH SINGLE-CYLINDER FOUR-STROKE ENGINE UNIT**
GRÄTSCHSITZFAHRZEUG MIT EINZYLINDER-VIERTAKT-MOTOREINHEIT
VÉHICULE À ENFOURCHER AVEC GROUPE MOTEUR À QUATRE TEMPS MONOCYLINDRIQUE

(30) Priority: 04.07.2014 JP 2014138376
(43) Date of publication of application: 10.05.2017
(73) Proprietor: Yamaha Hatsudoki Kabushiki Kaisha, Iwata-shi, Shizuoka 438-8501 (JP)
(72) Inventor: NISHIGAKI, Masato, Iwata-shi Shizuoka 438-8501 (JP); ARAKI, Yuji, Iwata-shi Shizuoka 438-8501 (JP); ISHIZAWA, Kazuhiro, Iwata-shi Shizuoka 438-8501 (JP); WAKIMURA, Makoto, Iwata-shi Shizuoka 438-8501 (JP)
(74) Representative: Zimmermann, Tankred Klaus
(86) International application number: PCT/JP2015/069358
(87) International publication number: WO 2016/002959

(56) References cited:
- EP-A1- 2 299 082
- DE-A1-102006 003 116
- JP-A- H06 185 360
- JP-A- 2005 163 618
- JP-A- 2005 163 618
- JP-A- 2006 152 962
- JP-A- 2006 207 571
- JP-A- 2007 187 004
- JP-A- 2008 144 613
- JP-A- 2008 223 644
- JP-A- 2008 223 644
- JP-A- 2008 303 787
- JP-A- 2009 108 824
- JP-A- 2010 083 308
- JP-A- 2011 052 605
- JP-A- 2011 074 801
- JP-A- 2013 173 498

## Description

### [Technical Field]

The present invention relates to a straddled vehicle and a single-cylinder four-stroke engine unit.

### [Background Art]

A straddled vehicle in which a catalyst configured to purify exhaust gas is provided in a silencer is known.

On the other hand, there is a straddled vehicle on which a single-cylinder four-stroke engine unit including a horizontal cylinder member is mounted (see, e.g., JP 2006-207571 A). An engine main body of the single-cylinder four-stroke engine unit includes a cylinder member and a crankcase member. A cylinder hole is formed through the cylinder member. The horizontal cylinder member is a cylinder member in which the central axis (hereinafter, cylinder axis) of the cylinder hole extends in a front-rear direction of the straddled vehicle. The crankcase member includes a crankshaft which extends in a left-right direction of the straddled vehicle.

According to JP 2006-207571 A, a catalyst is provided on an exhaust pipe which is upstream of a silencer. The activity of the catalyst increases as the temperature rises. As the catalyst is provided on the exhaust pipe upstream of the silencer, exhaust gas reaches the catalyst while maintaining a high temperature. This improves the purification performance of the catalyst purifying the exhaust gas. Furthermore, as the catalyst is provided outside the silencer, the silencer is decreased in size. As such, according to JP 2006-207571 A, the silencer is decreased in size and the purification performance of the catalyst purifying the exhaust gas is improved.

Examples of further straddled vehicles are described in JP 2010-083308 A, JP 2008-303787 A, DE 10 2006 003 116 A1, EP 2 299 082 A1, JP 2008-223644 A and JP 2005-163618 A, of which JP 2008-303787 A describes a straddled vehicle according to the preamble of claim 1.

### [Summary of Invention]

An object of the present invention is to provide a straddled vehicle including a single-cylinder four-stroke engine unit including a horizontal cylinder member, in which the purification performance of a catalyst purifying exhaust gas is improved while the structure of an exhauster is simplified.

This object is achieved by a straddled vehicle defined in claim 1.

When the structure recited in JP 2006-207571 A is used, the purification performance of the catalyst purifying the exhaust gas is improved. However, running tests with this structure have proved that a complicated structure of an exhauster is required to secure the durability of the exhauster against vibrations. The exhauster includes an exhaust pipe, a catalyst, and a silencer.

### [Solution to Problem]

The inventors of the subject application examined vibrating states of a straddled vehicle including a single-cylinder four-stroke engine unit. An exhaust pipe of the single-cylinder four-stroke engine unit is smaller in cross-section than a collective exhaust pipe of a multi-cylinder engine unit. The rigidity of the exhaust pipe of the single-cylinder four-stroke engine is therefore lower than the collective exhaust pipe of the multi-cylinder engine unit. Furthermore, the path length in the horizontal direction of an exhaust pipe of a single-cylinder four-stroke engine unit including a horizontal cylinder member is longer than the path length in the horizontal direction of an exhaust pipe of a single-cylinder four-stroke engine unit in which the cylinder axial line extends in the up-down direction. Due to this, the rigidity of the exhaust pipe of the single-cylinder four-stroke engine unit including the horizontal cylinder member is lower than the exhaust pipe of the single-cylinder four-stroke engine unit in which the cylinder axial line extends in the up-down direction.

The exhaust pipe is supported by the engine main body. Furthermore, the exhaust pipe is connected to the silencer. The engine main body is supported by a vehicle body frame of the straddled vehicle. Furthermore, the silencer is supported by the vehicle body frame or the engine main body of the straddled vehicle. The support rigidity of the engine main body and the support rigidity of the silencer are therefore high. In the straddled vehicle of JP 2006-207571 A, a heavy catalyst is provided in the middle of the exhaust pipe which is narrow and has a small cross-sectional area. In the straddled vehicle of JP 2006-207571 A, when viewed in the up-down direction, the catalyst is provided to be deviated from a line connecting the downstream end of the cylinder exhaust passage member of the engine main body with high support rigidity and the upstream end of the silencer with high support rigidity. In addition to the above, the engine unit of the straddled vehicle tends to vibrate in an up-down direction. The catalyst therefore tends to vibrate in the up-down direction. As such, in the straddled vehicle of JP 2006-207571 A, the rigidity of the exhaust pipe is low and the heavy catalyst tends to vibrate in the up-down direction. Due to this, in a straddled vehicle which employs the structure of JP 2006-207571 A, a supporting structure firmly supporting a catalyst is required to obtain durability against vibrations of an exhauster in an up-down direction. It was found that the structure of the exhauster was complicated for this reason.

Under this circumstance, the inventors of the subject application noticed that, when the straddled vehicle is viewed in the up-down direction, the downstream end of the cylinder exhaust passage member and the upstream end of the silencer are at different positions both in the direction parallel to the central axis of the cylinder hole and the direction orthogonal to the central axis of the cylinder hole. The inventors then found that the heavy catalyst is preferably provided at a position close to the line connecting the downstream end of the cylinder exhaust passage member with the upstream end of the silencer. With this, the inventors found that the vibration of the catalyst in the up-down direction was restrained.

A straddled vehicle of the present teaching is a straddled vehicle on which a single-cylinder four-stroke engine unit is mounted, the single-cylinder four-stroke engine unit comprising: an engine main body including a crankcase member and a horizontal cylinder member, the crankcase member including a crankshaft extending in a left-right direction of the straddled vehicle, and the horizontal cylinder member including one combustion chamber which is partially formed of an inner surface of a cylinder hole and a single-combustion-chamber cylinder exhaust passage member in which exhaust gas exhausted from the one combustion chamber flows being formed, a central axis of the cylinder hole extending in a front-rear direction of the straddled vehicle; a single-combustion-chamber exhaust pipe which constitutes a part of an exhauster, the single-combustion-chamber exhaust pipe including, at least at a part thereof, a single-combustion-chamber exhaust pipe member having an upstream end connected to a downstream end of the single-combustion-chamber cylinder exhaust passage member; a single-combustion-chamber silencer including a discharge port exposed to the atmosphere and connected to the downstream end of the single-combustion-chamber exhaust pipe member, the single-combustion-chamber silencer being configured to restrain sound generated by the exhaust gas by allowing the exhaust gas to flow from the downstream end of the single-combustion-chamber exhaust pipe to the discharge port, the single-combustion-chamber silencer being arranged so that, when the straddled vehicle is viewed in an up-down direction, an upstream end of the single-combustion-chamber silencer is remote from the downstream end of the single-combustion-chamber cylinder exhaust passage member in a direction parallel with the central axis of the cylinder hole and in a direction vertical to the central axis of the cylinder hole, and the single-combustion-chamber silencer constituting a part of the exhauster; and a single-combustion-chamber main catalyst provided in the single-combustion-chamber exhaust pipe member, the single-combustion-chamber main catalyst purifying the exhaust gas exhausted from the one combustion chamber most in an exhaust path extending from the one combustion chamber to the discharge port, and the single-combustion-chamber main catalyst constituting a part of the exhauster, the single-combustion-chamber main catalyst is arranged such that, when the straddled vehicle is viewed in the up-down direction, an upstream end and a downstream end of the single-combustion-chamber main catalyst are distant from each other in a direction in parallel to the central axis of the cylinder hole and in a direction orthogonal to the central axis of the cylinder hole, when the straddled vehicle is viewed in the up-down direction, the center of the upstream end of the single-combustion-chamber silencer is provided one of leftward and rightward of the center of the downstream end of the single-combustion-chamber cylinder exhaust passage member in a left-right direction of the straddled vehicle, when the straddled vehicle is viewed in the up-down direction, the center of the downstream end of the single-combustion-chamber main catalyst is provided the one of leftward and rightward of the center of the upstream end of the single-combustion-chamber main catalyst in the left-right direction of the straddled vehicle, and when the straddled vehicle is viewed in the up-down direction, the single-combustion-chamber main catalyst being provided to at least partially overlap a quadrangle formed of a linear line which passes the downstream end of the single-combustion-chamber cylinder exhaust passage member and is parallel to the central axis of the cylinder hole, a linear line which passes the downstream end of the single-combustion-chamber cylinder exhaust passage member and is parallel to the central axis of the crankshaft, a linear line which passes the upstream end of the single-combustion-chamber silencer and is parallel to the central axis of the cylinder hole, and a linear line which passes the upstream end of the single-combustion-chamber silencer and is parallel to the central axis of the crankshaft.

The single-cylinder four-stroke engine unit is mounted on the straddled vehicle of the present teaching. The single-cylinder four-stroke engine unit includes the engine main body, the single-combustion-chamber exhaust pipe, the single-combustion-chamber silencer, and the single-combustion-chamber main catalyst. The engine main body includes the crankcase member and the horizontal cylinder member. The crankcase member includes the crankshaft which extends in the left-right direction. Furthermore, one combustion chamber and the single-combustion-chamber cylinder exhaust passage member are formed in the horizontal cylinder member. Furthermore, the horizontal cylinder is provided so that the central axis of the cylinder hole extends in the front-rear direction of the straddled vehicle. The exhauster includes the single-combustion-chamber exhaust pipe, the single-combustion-chamber silencer, and the single-combustion-chamber main catalyst. The single-combustion-chamber exhaust pipe member is formed at least at a part of the single-combustion-chamber exhaust pipe. The upstream end of the single-combustion-chamber exhaust pipe member is connected to the downstream end of the single-combustion-chamber cylinder exhaust passage member. The downstream end of the single-combustion-chamber cylinder exhaust passage member is equivalent to an outlet of the engine main body.

The single-combustion-chamber silencer is provided with a discharge port which is exposed to the atmosphere. The single-combustion-chamber silencer is connected to the downstream end of the single-combustion-chamber exhaust pipe member. The single-combustion-chamber silencer allows in the exhaust gas flowing from the downstream end of the single-combustion-chamber exhaust pipe to the discharge port. The single-combustion-chamber silencer reduces noise generated by the exhaust gas. The single-combustion-chamber main catalyst is provided inside the single-combustion-chamber exhaust pipe member. The single-combustion-chamber main catalyst purifies the exhaust gas exhausted from one combustion chamber most in the exhaust path extending from the one combustion chamber to the discharge port.

When the straddled vehicle is viewed in the up-down direction, the upstream end of the single-combustion-chamber silencer and the downstream end of the single-combustion-chamber cylinder exhaust passage member are remote from each other in the direction parallel to the central axis of the cylinder hole. Furthermore, the upstream end of the single-combustion-chamber silencer and the downstream end of the single-combustion-chamber cylinder exhaust passage member are distant from each other in the direction orthogonal to the central axis of the cylinder hole. When the straddled vehicle is viewed in the up-down direction, the center of the upstream end of the single-combustion-chamber silencer is one of leftward and rightward of the center of the downstream end of the single-combustion-chamber cylinder exhaust passage member in the left-right direction of the straddled vehicle. Furthermore, when the straddled vehicle is viewed in the up-down direction, the center of the downstream end of the single-combustion-chamber main catalyst is positioned at one of leftward and rightward of the center of the upstream end of the single-combustion-chamber main catalyst in the left-right direction of the straddled vehicle.

In addition to the above, when the straddled vehicle is viewed in the up-down direction, the single-combustion-chamber main catalyst is provided to at least partially overlap a quadrangle formed of a linear line which passes the downstream end of the single-combustion-chamber cylinder exhaust passage member and is parallel to the central axis of the cylinder hole, a linear line which passes the downstream end of the single-combustion-chamber cylinder exhaust passage member and is parallel to the central axis of the crankshaft, a linear line which passes the upstream end of the single-combustion-chamber silencer and is parallel to the central axis of the cylinder hole, and a linear line which passes the upstream end of the single-combustion-chamber silencer and is parallel to the central axis of the crankshaft.

For the reason above, the single-combustion-chamber main catalyst is provided to be close to the linear line connecting the center of the downstream end of the single-combustion-chamber cylinder exhaust passage member with the center of the upstream end of the single-combustion-chamber silencer. The path length of the single-combustion-chamber exhaust pipe member is therefore shortened as compared to cases where the single-combustion-chamber main catalyst is not provided at the position described above. This makes it possible to secure the durability against the vibrations in the up-down direction of the exhauster, without needing a complicated supporting structure for supporting the single-combustion-chamber main catalyst. The structure of the exhauster is therefore simplified.

In addition to the above, the single-cylinder four-stroke engine unit of the straddled vehicle of the present teaching includes the horizontal cylinder member which is disposed so that the central axis of the cylinder hole extends in the front-rear direction. The single-combustion-chamber exhaust pipe is therefore short. Due to this, the single-combustion-chamber main catalyst provided in the single-combustion-chamber exhaust pipe is positioned to be closer to the downstream end of the single-combustion-chamber cylinder exhaust passage member. In other words, the single-combustion-chamber main catalyst is provided to be close to one combustion chamber. Due to this, the purification performance of the single-combustion-chamber main catalyst purifying the exhaust gas is improved.

Due to this, according to the present teaching, the purification performance of the single-combustion-chamber main catalyst purifying the exhaust gas is improved while the structure of the exhauster is simplified.

In the straddled vehicle of the present teaching, the single-combustion-chamber main catalyst is provided so that a path length from the downstream end of the single-combustion-chamber main catalyst to the upstream end of the single-combustion-chamber silencer is shorter than a path length from the downstream end of the single-combustion-chamber cylinder exhaust passage member to the upstream end of the single-combustion-chamber main catalyst.

According to this arrangement, the single-combustion-chamber main catalyst is provided so that a path length from the downstream end of the single-combustion-chamber main catalyst to the upstream end of the single-combustion-chamber silencer is shorter than a path length from the downstream end of the single-combustion-chamber cylinder exhaust passage member to the upstream end of the single-combustion-chamber main catalyst. Due to this, the path length from the downstream end of the single-combustion-chamber main catalyst to the upstream end of the single-combustion-chamber silencer is shortened. The single-combustion-chamber main catalyst is therefore positioned to be relatively close to the single-combustion-chamber silencer. It is hence possible to utilize the supporting structure that supports the silencer as the supporting structure to support the single-combustion-chamber main catalyst. The structure of the exhauster is therefore simplified.

In the straddled vehicle of the present teaching, the single-combustion-chamber main catalyst is provided at least partially frontward of the central axis of the crankshaft in the front-rear direction of the straddled vehicle.

According to the arrangement above, the single-combustion-chamber main catalyst is provided at least partially frontward of the central axis of the crankshaft in the front-rear direction of the straddled vehicle. Due to this, the path length from the downstream end of the single-combustion-chamber cylinder exhaust passage member to the upstream end of the single-combustion-chamber main catalyst is shortened. The single-combustion-chamber main catalyst is therefore positioned to be relatively close to the one combustion chamber. The decrease in temperature of the exhaust gas flowing into the single-combustion-chamber main catalyst is therefore restrained. Due to this, the purification performance of the single-combustion-chamber main catalyst purifying the exhaust gas is improved.

In the straddled vehicle of the present teaching, preferably, the single-combustion-chamber exhaust pipe member includes a catalyst-provided passage member in which the single-combustion-chamber main catalyst is provided and an upstream passage member connected to an upstream end of the catalyst-provided passage member, and a cross-sectional area of the catalyst-provided passage member cut along the direction orthogonal to the flow direction of the exhaust gas is larger than a cross-sectional area of at least a part of the upstream passage member cut along a direction orthogonal to the flow direction of the exhaust gas.

According to this arrangement, the single-combustion-chamber exhaust pipe member includes the catalyst-provided passage member in which the single-combustion-chamber main catalyst is provided. The single-combustion-chamber exhaust pipe member includes the upstream passage member connected to the upstream end of the catalyst-provided passage member. Furthermore, the cross-sectional area of the catalyst-provided passage member cut along the direction orthogonal to the flow direction of the exhaust gas is larger than at least a part of the cross-sectional area of the upstream passage member cut along the direction orthogonal to the flow direction of the exhaust gas. The purification performance of the single-combustion-chamber main catalyst purifying the exhaust gas is therefore improved as compared to cases where the cross-sectional area of the catalyst-provided passage member cut along the direction orthogonal to the flow direction of the exhaust gas is identical to or smaller than the cross-sectional area of the upstream passage member cut along the direction orthogonal to the flow direction of the exhaust gas.

In the straddled vehicle of the present teaching, preferably, the single-combustion-chamber main catalyst is provided so that the path length from the downstream end of the single-combustion-chamber main catalyst to the upstream end of the single-combustion-chamber silencer is shorter than a path length from the one combustion chamber to the upstream end of the single-combustion-chamber main catalyst.

According to this arrangement, the single-combustion-chamber main catalyst is provided so that a path length from the downstream end of the single-combustion-chamber main catalyst to the upstream end of the single-combustion-chamber silencer is shorter than a path length from the one combustion chamber to the upstream end of the single-combustion-chamber main catalyst. Due to this, the path length from the upstream end of the single-combustion-chamber silencer to the downstream end of the single-combustion-chamber main catalyst is shortened. The single-combustion-chamber main catalyst is therefore positioned to be relatively close to the single-combustion-chamber silencer. It is hence possible to utilize the supporting structure that supports the silencer as the supporting structure that supports the single-combustion-chamber main catalyst. The structure of the exhauster is therefore simplified.

In the straddled vehicle of the present teaching, preferably, the single-combustion-chamber main catalyst is provided at least partially rearward of the central axis of the crankshaft in the front-rear direction of the straddled vehicle.

According to the arrangement above, the single-combustion-chamber main catalyst is provided at least partially rearward of the central axis of the crankshaft in the front-rear direction of the straddled vehicle. Due to this, the path length from the upstream end of the single-combustion-chamber silencer to the downstream end of the single-combustion-chamber main catalyst is shortened. The single-combustion-chamber main catalyst is therefore positioned to be relatively close to the single-combustion-chamber silencer. It is hence possible to utilize the supporting structure that supports the silencer as the supporting structure to support the single-combustion-chamber main catalyst. The structure of the exhauster is therefore simplified.

In the straddled vehicle of the present teaching, preferably, the single-combustion-chamber main catalyst is provided at least partially behind a linear line orthogonal to the central axis of the cylinder hole and orthogonal to the central axis of the crankshaft, in the front-rear direction of the straddled vehicle.

In the straddled vehicle of the present teaching, the single-combustion-chamber main catalyst is provided at least partially behind a linear line orthogonal to the central axis of the cylinder hole and orthogonal to the central axis of the crankshaft, in the front-rear direction of the straddled vehicle. Due to this, the path length from the downstream end of the single-combustion-chamber main catalyst to the upstream end of the single-combustion-chamber silencer is shortened. The single-combustion-chamber main catalyst is therefore positioned to be relatively close to the single-combustion-chamber silencer. It is hence possible to utilize the supporting structure that supports the silencer as the supporting structure to support the single-combustion-chamber main catalyst. The structure of the exhauster is therefore simplified.

In the straddled vehicle of the present teaching, preferably, the single-combustion-chamber main catalyst is provided at least partially in front of a linear line orthogonal to the central axis of the cylinder hole and orthogonal to the central axis of the crankshaft, in the front-rear direction of the straddled vehicle.

According to this arrangement, the single-combustion-chamber main catalyst is provided at least partially in front of a linear line orthogonal to the central axis of the cylinder hole and orthogonal to the central axis of the crankshaft, in the front-rear direction of the straddled vehicle. Due to this, the path length from the downstream end of the single-combustion-chamber cylinder exhaust passage member to the upstream end of the single-combustion-chamber main catalyst is shortened. The single-combustion-chamber main catalyst is therefore positioned to be relatively close to the one combustion chamber. The decrease in temperature of the exhaust gas flowing into the single-combustion-chamber main catalyst is therefore restrained. Due to this, the purification performance of the single-combustion-chamber main catalyst purifying the exhaust gas is further improved.

In the straddled vehicle of the present teaching, preferably, the single-combustion-chamber exhaust pipe member includes a catalyst-provided passage member in which the single-combustion-chamber main catalyst is provided, and the single-cylinder four-stroke engine unit includes a catalyst protector which at least partially covers an outer surface of the catalyst-provided passage member.

In the straddled vehicle of the present teaching, preferably, at least a part of the single-combustion-chamber exhaust pipe member, which is upstream in the flow direction of the single-combustion-chamber main catalyst, is formed of a multi-walled pipe which includes an inner pipe and at least one outer pipe covering the inner pipe.

According to this arrangement, at least a part of the single-combustion-chamber exhaust pipe member, which is upstream of the single-combustion-chamber main catalyst in the flow direction of the exhaust gas, is formed of a multi-walled pipe. The multi-walled pipe includes an inner pipe and at least one outer pipe which covers the inner pipe. With the multi-walled pipe, the decrease in temperature of the exhaust gas flowing into the single-combustion-chamber main catalyst is restrained. This restrains a decrease in the purification performance of purifying the exhaust gas.

In the straddled vehicle of the present teaching, preferably, the single-cylinder four-stroke engine unit includes a single-combustion-chamber upstream sub-catalyst which is provided upstream in the flow direction of the single-combustion-chamber main catalyst in the single-combustion-chamber cylinder exhaust passage member or the single-combustion-chamber exhaust pipe, the single-combustion-chamber upstream sub-catalyst being configured to purify the exhaust gas.

According to this arrangement, the single-combustion-chamber upstream sub-catalyst is provided in the single-combustion-chamber cylinder exhaust passage member or the single-combustion-chamber exhaust pipe. The single-combustion-chamber upstream sub-catalyst is provided upstream of the single-combustion-chamber main catalyst. The single-combustion-chamber upstream sub-catalyst purifies the exhaust gas. Therefore the exhaust gas is purified in the single-combustion-chamber upstream sub-catalyst in addition to the single-combustion-chamber main catalyst. The purification performance of the catalysts purifying the exhaust gas is therefore further improved.

In the straddled vehicle of the present teaching, preferably, the single-cylinder four-stroke engine unit includes a single-combustion-chamber downstream sub-catalyst which is provided downstream in the flow direction of the single-combustion-chamber main catalyst in the single-combustion-chamber exhaust pipe or the single-combustion-chamber silencer, the single-combustion-chamber downstream sub-catalyst being configured to purify the exhaust gas.

According to this arrangement, the single-combustion-chamber downstream sub-catalyst is provided in the single-combustion-chamber exhaust pipe member or the single-combustion-chamber silencer. The single-combustion-chamber downstream sub-catalyst is provided downstream of the single-combustion-chamber main catalyst. The single-combustion-chamber downstream sub-catalyst purifies the exhaust gas. Therefore the exhaust gas is purified in the single-combustion-chamber downstream sub-catalyst in addition to the single-combustion-chamber main catalyst. The purification performance of the catalysts purifying the exhaust gas is therefore further improved.

In the straddled vehicle of the present teaching, preferably, the single-cylinder four-stroke engine unit includes: a single-combustion-chamber upstream oxygen detector which is provided upstream in the flow direction of the single-combustion-chamber main catalyst in the single-combustion-chamber cylinder exhaust passage member or the single-combustion-chamber exhaust pipe, the single-combustion-chamber upstream oxygen detector being configured to detect the oxygen density in the exhaust gas; and a controller configured to process a signal from the single-combustion-chamber upstream oxygen detector.

In the straddled vehicle of the present teaching, preferably, the single-cylinder four-stroke engine unit includes a fuel supplier which is configured to supply fuel to the one combustion chamber, and the controller is configured to control an amount of the fuel supplied to the one combustion chamber by the fuel supplier based on a signal from the single-combustion-chamber upstream oxygen detector.

In the straddled vehicle of the present teaching, preferably, the single-cylinder four-stroke engine unit includes a single-combustion-chamber downstream oxygen detector which is provided downstream in the flow direction of the single-combustion-chamber main catalyst in the single-combustion-chamber exhaust pipe or the single-combustion-chamber silencer, and the controller is configured to process a signal from the single-combustion-chamber upstream oxygen detector and a signal from the single-combustion-chamber downstream oxygen detector.

In the straddled vehicle of the present teaching, preferably, the single-cylinder four-stroke engine unit includes a fuel supplier which is configured to supply fuel to the one combustion chamber, and the controller is configured to control an amount of the fuel supplied to the one combustion chamber by the fuel supplier based on the signal from the single-combustion-chamber upstream oxygen detector and the signal from the single-combustion-chamber downstream oxygen detector.

In the straddled vehicle of the present teaching, preferably, the controller determines the purification capability of the single-combustion-chamber main catalyst based on the signal from the single-combustion-chamber downstream oxygen detector, and a notification unit is provided to perform the notification when the controller determines that the purification capability of the single-combustion-chamber main catalyst has lowered to a predetermined level.

### [Advantageous Effects]

According to the present teaching, the purification performance of a catalyst purifying exhaust gas is improved while the structure of an exhauster is simplified in a straddled vehicle on which a single-cylinder four-stroke engine unit including a horizontal cylinder member is mounted.

### [Brief Description of Drawings]

FIG. 1 is a side view of a motorcycle related to Embodiment 1 of the present teaching.
FIG. 2 is a side view showing a state in which a vehicle body cover, etc. have been removed from the motorcycle of FIG. 1.
FIG. 3 is a bottom view of FIG. 2.
FIG. 4 is a control block diagram of the motorcycle of FIG. 1.
FIG. 5 is a schematic diagram of an engine main body and an exhaust system of the motorcycle of FIG. 1.
FIG. 6 is a schematic diagram in which parts of the engine main body and the exhauster shown in FIG. 3 are enlarged.
FIG. 7 is a schematic diagram showing a modification of FIG. 6.
FIG. 8 is a schematic diagram showing a comparative example of FIG. 6.
FIG. 9 is a side view of a motorcycle related to Embodiment 2 of the present teaching.
FIG. 10 is a bottom view of FIG. 9.
FIG. 11 is a side view showing a state in which a vehicle body cover, etc. have been removed from the motorcycle of FIG. 9.
FIG. 12 is a bottom view of FIG. 11.
FIG. 13 is a schematic diagram of an engine main body and an exhaust system of the motorcycle of FIG. 9.
FIG. 14 is a side view of a motorcycle related to Embodiment 3 of the present teaching.
FIG. 15 is a bottom view of FIG. 14.
FIG. 16 is a side view showing a state in which a vehicle body cover, etc. have been removed from the motorcycle of FIG. 14.
FIG. 17 is a bottom view of FIG. 16.
FIG. 18 is a schematic diagram of an engine main body and an exhaust system of the motorcycle of FIG. 14.
FIG. 19 is a schematic diagram of an engine main body and an exhaust system of the motorcycle of another embodiment of the present teaching.
FIG. 20 is a partial cross-section of an exhaust pipe used in the motorcycle of another embodiment of the present teaching.
FIG. 21 is a partial enlarged view of the side view of the motorcycle related to another example.

### [Description of Embodiments]

The following describes an embodiment of the present teaching with reference to figures. Described below is an example in which a straddled vehicle of the present teaching is applied to a motorcycle. Hereinafter, frontward, rearward, leftward, and rightward indicate frontward, rearward, leftward, and rightward of a rider of the motorcycle. In this regard, it is assumed that the motorcycle is provided on a horizontal plane. The signs F, Re, L, and R in the figures indicate frontward, rearward, leftward, and rightward, respectively.

### (Embodiment 1)

### [Overall Structure]

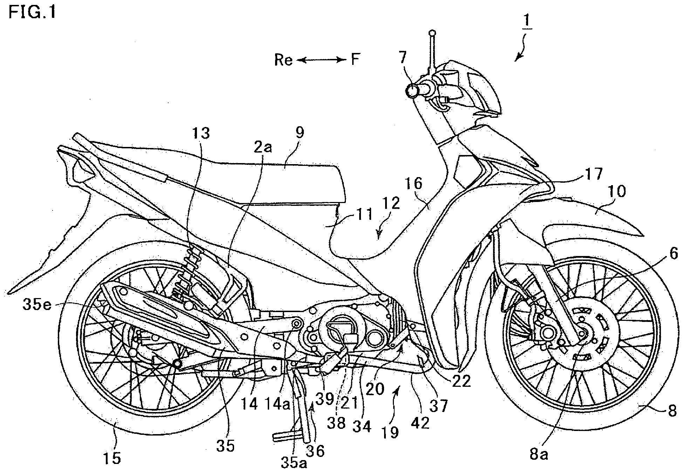

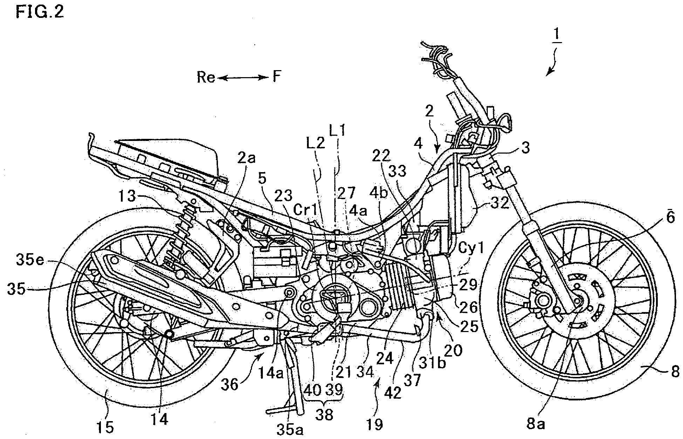

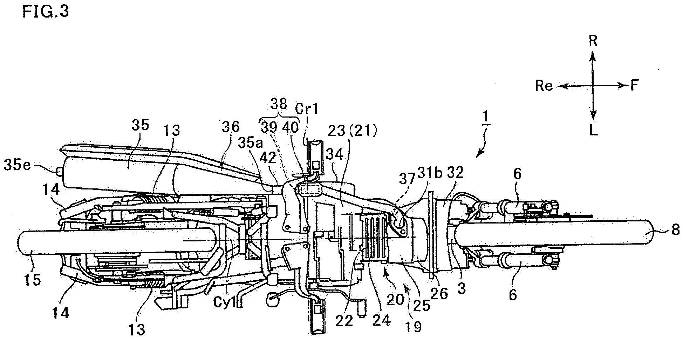

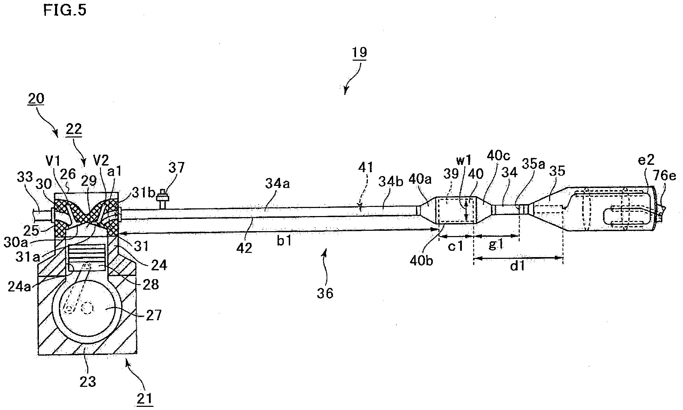

FIG. 1 is a side view of a motorcycle related to Embodiment 1 of the present teaching. FIG. 2 is a side view showing a state in which a vehicle body cover, etc. have been removed from the motorcycle of Embodiment 1. FIG. 3 is a bottom view showing the state in which the vehicle body cover, etc. have been removed from the motorcycle of Embodiment 1. FIG. 5 is a schematic diagram of an engine and an exhaust system of the motorcycle of Embodiment 1.

A straddled vehicle of Embodiment 1 is a so-called underbone-type motorcycle 1. As shown in FIG. 2, the motorcycle 1 is provided with a vehicle body frame 2. The vehicle body frame 2 includes a head pipe 3, a main frame 4, and a seat rail 5. The main frame 4 extends rearward and downward from the head pipe 3. The seat rail 5 extends rearward and upward from an intermediate portion of the main frame 4.

A steering shaft is rotatably inserted into the head pipe 3. A handlebar 7 is provided at an upper part of the steering shaft (see FIG. 1). A display (not illustrated) is provided in the vicinity of the handlebar 7. The display is configured to display vehicle speed, engine rotation speed, warnings, and the like.

Paired left and right front forks 6 are supported at a lower part of the steering shaft. An axle shaft 8a is fixed to a lower end portion of each front fork 6. A front wheel 8 is rotatably attached to the axle shaft 8a. A fender 10 is provided above and behind the front wheel 8.

The seat rail 5 supports a seat 9 (see FIG. 1). As shown in FIG. 2, the seat rail 5 is connected to upper end portions of paired left and right rear shock absorbers 13. Lower end portions of the rear shock absorbers 13 are supported by rear portions of paired left and right rear arms 14. Front portions of the rear arms 14 are connected to the vehicle body frame 2 via pivot shafts 14a. The rear arms 14 are swingable about the pivot shafts 14a in an up-down direction. A rear wheel 15 is supported by rear portions of the rear arms 14.

As shown in FIG. 2, an engine main body 20 is provided below the main frame 4. The engine main body 20 is supported by the vehicle body frame 2. To be specific, an upper portion of the engine main body 20 is fixed, by a bolt 4b, to a bracket 4a of the main frame 4. To be more specific, an upper front portion of a subsequently-described crankcase member 21 of the engine main body 20 is fixed to the bracket 4a. A rear portion of the engine main body 20 is also fixed to another bracket of the vehicle body frame 2. An air cleaner 32 is provided at a location which is below the main frame 4 and above the engine main body 20.

As shown in FIG. 1, the motorcycle 1 is provided with a vehicle body cover 11 which covers the vehicle body frame 2, etc. The vehicle body cover 11 includes a main cover 16 and a front cover 17. The front cover 17 is provided in front of the head pipe 3. The main cover 16 is provided behind the head pipe 3. The main cover 16 covers the main frame 4 and the seat rail 5. The main cover 16 and the front cover 17 covers left and right portions of a front portion of the engine main body 20. The front cover 17 covers left and right portions of the air cleaner 32.

The main frame 4 and the vehicle body cover 11 are low in height at portions between the seat 9 and the head pipe 3. For this reason, when viewed in a vehicle left-right direction, the underbone-type motorcycle 1 has a recess 12 at a location which is behind the head pipe 3, in front of the seat 9, and above the main frame 4. This recess 12 allows a rider to easily straddle the motorcycle 1.

The motorcycle 1 includes a single-cylinder four-stroke engine unit 19. The single-cylinder four-stroke engine unit 19 includes the engine main body 20, the air cleaner 32, an intake pipe 33, an exhaust pipe (single-combustion-chamber exhaust pipe) 34, a silencer 35, a main catalyst (single-combustion-chamber main catalyst) 39, and an upstream oxygen detector (single-combustion-chamber upstream oxygen detector) 37. As detailed subsequently, the exhaust pipe 34 includes an exhaust pipe member (single-combustion-chamber exhaust pipe member) 42 which forms at least a part of the exhaust pipe 34.

The engine main body 20 is a single-cylinder four-stroke engine. As shown in FIG. 2 and FIG. 3, the engine main body 20 includes the crankcase member 21 and a cylinder member (horizontal cylinder member) 22. The cylinder member 22 extends frontward from the crankcase member 21.

The crankcase member 21 includes a crankcase main body 23. The crankcase member 21 includes a crankshaft 27, a transmission mechanism, and the like which are housed in the crankcase main body 23. Hereinafter, the central axis Cr1 of the crankshaft 27 is referred to as a crankshaft axis Cr1. The crankshaft axis Cr1 extends in the left-right direction. Lubricating oil is stored in the crankcase main body 23. The oil is conveyed by an oil pump (not illustrated) and is circulated in the engine main body 20.

The cylinder member 22 includes a cylinder body 24, a cylinder head 25, a head cover 26, and components housed in the members 24 to 26. As shown in FIG. 2, the cylinder body 24 is connected to a front portion of the crankcase main body 23. The cylinder head 25 is connected to a front portion of the cylinder body 24. The head cover 26 is connected to a front portion of the cylinder head 25.

As shown in FIG. 5, a cylinder hole 24a is formed in the cylinder body 24. The cylinder hole 24a houses a piston 28 so that the piston 28 is able to reciprocate. The piston 28 is connected to the crankshaft 27 via a connecting rod. Hereinafter, the central axis Cy1 of the cylinder hole 24a is referred to as a cylinder axis Cy1. As shown in FIG. 2, the engine main body 20 is disposed so that the cylinder axis Cy1 extends in the front-rear direction (horizontal direction). To be more specific, the direction in which the cylinder axis Cy1 extends from the crankcase member 21 to the cylinder member 22 is frontward and upward. The angle of inclination of the cylinder axis Cy1 with respect to the horizontal direction is 0 degrees or greater and 45 degrees or less.

As shown in FIG. 5, one combustion chamber 29 is formed in the cylinder member 22. The combustion chamber 29 is formed of an inner surface of the cylinder hole 24a of the cylinder body 24, the cylinder head 25, and the piston 28. In other words, a part of the combustion chamber 29 is formed by the inner surface of the cylinder hole 24a. A leading end portion of an ignition plug (not illustrated) is provided in the combustion chamber 29. The ignition plug ignites a gas mixture of fuel and air in the combustion chamber 29. As shown in FIG. 2, the combustion chamber 29 is positioned frontward of the crankshaft axis Cr1. In other words, a linear line which passes the crankshaft axis Cr1 and is parallel to the up-down direction is L1 so that when viewed in the left-right direction, the combustion chamber 29 is positioned in front of the linear line L1.

As shown in FIG. 5, a cylinder intake passage member 30 and a cylinder exhaust passage member 31 (a single-combustion-chamber cylinder exhaust passage member) are formed in the cylinder head 25. Specifically, the passage member is a structure forming a space (path) through which gas or the like passes. In the cylinder head 25, an intake port 30a and an exhaust port 31a are formed in a wall portion forming the combustion chamber 29. The cylinder intake passage member 30 extends from the intake port 30a to an inlet formed in the outer surface (upper surface) of the cylinder head 25. The cylinder exhaust passage member 31 extends from the exhaust port 31a to an outlet formed in the outer surface (lower surface) of the cylinder head 25. Air passes through the inside of the cylinder intake passage member 30 and is then supplied to the combustion chamber 29. Exhaust gas exhausted from the combustion chamber 29 passes through the cylinder exhaust passage member 31.

An intake valve V1 is provided in the cylinder intake passage member 30. An exhaust valve V2 is provided in the cylinder exhaust passage member 31. The intake valve V1 and the exhaust valve V2 are activated by a valve operating mechanism (not illustrated) which is linked with the crankshaft 27. The intake port 30a is opened and closed by the movement of the intake valve V1. The exhaust port 31a is opened and closed by the movement of the exhaust valve V2. The intake pipe 33 is connected an end portion (inlet) of the cylinder intake passage member 30. The exhaust pipe 34 is connected an end portion (outlet) of the cylinder exhaust passage member 31.

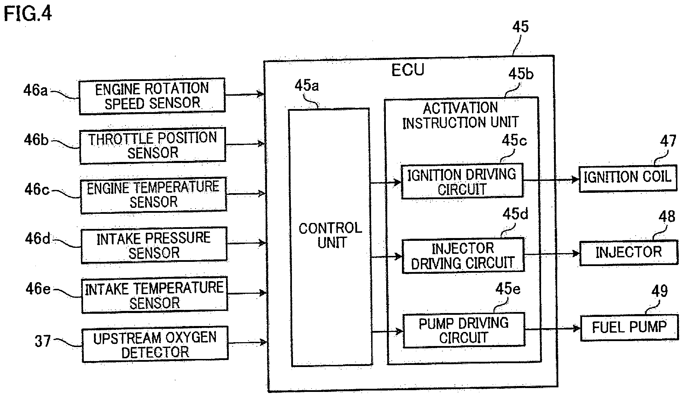

An injector 48 (see FIG. 4) is provided in the cylinder intake passage member 30 or the intake pipe 33. The injector 48 is provided to supply fuel to the combustion chamber 29. To be more specific, the injector 48 injects fuel in the cylinder intake passage member 30 or the intake pipe 33. The injector 48 may be provided to inject fuel in the combustion chamber 29. A throttle valve (not illustrated) is provided in the intake pipe 33.

As shown in FIG. 2, when viewed in the left-right direction, the intake pipe 33 extends upward from the upper surface of the cylinder head 25. The intake pipe 33 is connected to the air cleaner 32. The air cleaner 32 is configured to purify the air supplied to the engine main body 20. The air purified while passing through the air cleaner 32 is supplied to the engine main body 20 via the intake pipe 33.

The structure of the exhaust system is detailed subsequently.

Subsequently, control of the single-cylinder four-stroke engine unit 19 is described. FIG. 4 is a control block diagram of the motorcycle of Embodiment 1.

As shown in FIG. 4, the single-cylinder four-stroke engine unit 19 includes an engine rotation speed sensor 46a, a throttle position sensor 46b (throttle position sensor), an engine temperature sensor 46c, an intake pressure sensor 46d, and an intake temperature sensor 46e. The engine rotation speed sensor 46a detects the rotation speed of the crankshaft 27, i.e., the engine rotation speed. The throttle position sensor 46b detects the opening degree of a throttle valve (not illustrated) (hereinafter, throttle opening degree). The engine temperature sensor 46c detects the temperature of the engine main body. The intake pressure sensor 46d detects the pressure (intake pressure) in the intake pipe 33. The intake temperature sensor 46e detects the temperature (intake temperature) in the intake pipe 33.

The single-cylinder four-stroke engine unit 19 includes an electronic control unit (ECU) 45 which is configured to control the engine main body 20. The electronic control unit 45 is equivalent to a controller of the present teaching. The electronic control unit 45 is connected to sensors such as the engine rotation speed sensor 46a, the engine temperature sensor 46c, the throttle position sensor 46b, the intake pressure sensor 46d, the intake temperature sensor 46e, and a vehicle speed sensor. The electronic control unit 45 is further connected to an ignition coil 47, the injector 48, a fuel pump 49, a display (not illustrated), and the like. The electronic control unit 45 includes a control unit 45a and an activation instruction unit 45b. The activation instruction unit 45b includes an ignition driving circuit 45c, an injector driving circuit 45d, and a pump driving circuit 45e.

Upon receiving a signal from the control unit 45a, the ignition driving circuit 45c, the injector driving circuit 45d, and the pump driving circuit 45e drive the ignition coil 47, the injector 48, and the fuel pump 49, respectively. As the ignition coil 47 is driven, spark discharge occurs at the ignition plug and the gas mixture is ignited. The fuel pump 49 is connected to the injector 48 via a fuel hose. As the fuel pump 49 is driven, fuel in a fuel tank (not illustrated) is pressure-fed to the injector 48.

The control unit 45a is a microcomputer, for example. Based on a signal from the upstream oxygen detector 37, a signal from the engine rotation speed sensor 46a or the like, the control unit 45a controls the ignition driving circuit 45c, the injector driving circuit 45d, and the pump driving circuit 45e. The control unit 45a controls an ignition timing by controlling the ignition driving circuit 45c. The control unit 45a controls a fuel injection amount by controlling the injector driving circuit 45d and the pump driving circuit 45e.

To improve the purification efficiency of the main catalyst 39 and the combustion efficiency, the air-fuel ratio of the air-fuel mixture in the combustion chamber 29 is preferably equal to the theoretical air-fuel ratio (stoichiometry). The control unit 45a increases or decreases the fuel injection amount according to need.

The following describes an example of control of the fuel injection amount (combustion control) by the control unit 45a.

To begin with, the control unit 45a calculates a basic fuel injection amount based on signals from the engine rotation speed sensor 46a, the throttle position sensor 46b, the engine temperature sensor 46c, and the intake pressure sensor 46d. To be more specific, an intake air amount is calculated by using a map in which a throttle opening degree and an engine rotation speed are associated with an intake air amount and a map in which an intake pressure and an engine rotation speed are associated with an intake air amount. Based on the intake air amount calculated based on the maps, a basic fuel injection amount with which a target air-fuel ratio is achieved is determined. When the throttle opening degree is small, the map in which an intake pressure and an engine rotation speed are associated with an intake air amount is used. When the throttle opening degree is great, the map in which a throttle opening degree and an engine rotation speed are associated with an intake air amount is used.

In addition to the above, based on a signal from the upstream oxygen detector 37, the control unit 45a calculates a feedback correction value for correcting the basic fuel injection amount. To be more specific, based on a signal from the upstream oxygen detector 37, it is determined whether or not the air-fuel mixture is lean or rich. The term "rich" indicates a state in which fuel is excessive as compared to the theoretical air-fuel ratio. The term "lean" indicates a state in which air is excessive as compared to the theoretical air-fuel ratio. When determining that the air-fuel mixture is lean, the control unit 45a calculates the feedback correction value so that the next fuel injection amount is increased. On the other hand, when determining that the air-fuel mixture is rich, the control unit 45a calculates the feedback correction value so that the next fuel injection amount is decreased.

In addition to the above, the control unit 45a calculates a correction value for correcting the basic fuel injection amount, based on the engine temperature, the outside temperature, the outside atmosphere, or the like. Furthermore, the control unit 45a calculates a correction value in accordance with transient characteristics at acceleration and deceleration.

The control unit 45a calculates the fuel injection amount based on the basic fuel injection amount and the correction values such as the feedback correction value. Based on the fuel injection amount calculated in this way, the fuel pump 49 and the injector 48 are driven. As such, the electronic control unit 45 (controller) processes a signal from the upstream oxygen detector 37. Furthermore, the electronic control unit 45 (controller) performs combustion control based on a signal from the upstream oxygen detector 37.

### [Structure of Exhaust System]

The following describes an exhaust system of the motorcycle 1 of Embodiment 1. In the description of the exhaust system in this specification, the term "upstream" indicates upstream in the direction in which exhaust gas flows. The term "downstream" indicates downstream in the direction in which exhaust gas flows. Furthermore, in the description of the exhaust system in this specification, the term "path direction" indicates the direction in which exhaust gas flows.

As described above, the single-cylinder four-stroke engine unit 19 includes the engine main body 20, the exhaust pipe 34, the silencer 35, the main catalyst 39, and the upstream oxygen detector 37. The exhaust pipe 34 includes an exhaust pipe member 42 which forms at least a part of the exhaust pipe 34. The exhaust pipe member 42 is a part of the exhaust pipe 34, which is exposed to the outside. Exposing to the outside means that it is not in the cylinder exhaust passage member 31 or the silencer 35. The single-cylinder four-stroke engine unit is provided with an exhauster 36. This exhauster 36 includes the exhaust pipe 34, the silencer 35, and the main catalyst 39. The silencer 35 is provided with a discharge port 35e which is exposed to the atmosphere. The path extending from the combustion chamber 29 to the discharge port 35e is referred to as an exhaust path 41 (see FIG. 5). The exhaust path 41 is formed of the cylinder exhaust passage member 31, the exhaust pipe 34, and the silencer 35. The exhaust path 41 is a space through which exhaust gas passes.

As shown in FIG. 5, the upstream end of the exhaust pipe 34 is connected to the downstream end 31b of the cylinder exhaust passage member 31. In other words, the upstream end of the exhaust pipe member 42 is connected to the downstream end 31b of the cylinder exhaust passage member 31. The exhaust pipe 34 is supported by the engine main body 20. The downstream end 31b of the cylinder exhaust passage member 31 is equivalent to an outlet of the cylinder exhaust passage member 31. The upstream end of the exhaust pipe 34 may be inserted into the cylinder exhaust passage member 31. The exhaust gas flows into the upstream end of the exhaust pipe 34. The downstream end of the exhaust pipe member 42 is connected to the upstream end 35a of the silencer 35. The exhaust pipe 34 allows the exhaust gas to flow from the downstream end 31b of the cylinder exhaust passage member 31 to the silencer 35. A catalyst unit 38 is provided in the middle of the exhaust pipe member 42. A part of the exhaust pipe member 42, which is upstream of the catalyst unit 38, is referred to as an upstream exhaust pipe member 34a. A part of the exhaust pipe member 42, which is downstream of the catalyst unit 38, is referred to as a downstream exhaust pipe member 34b. While FIG. 5 depicts the exhaust pipe 34 (exhaust pipe member 42) as a linear pipe for simplification, the exhaust pipe 34 is not a linear pipe.

As shown in FIG. 3, the exhaust pipe 34 is provided in the right side part of the motorcycle 1. As shown in FIG. 2, when viewed in the left-right direction, the upstream end of the exhaust pipe 34 is positioned frontward of the crankshaft axis Cr1. The downstream end of the exhaust pipe 34 is positioned rearward of the crankshaft axis Cr1. The exhaust pipe 34 is positioned partially below the crankshaft axis Cr1. The exhaust pipe 34 has two bended portions. The upstream one of the two bended portions is simply referred to as an upstream bended portion. The downstream one of the two bended portions is simply referred to as a downstream bended portion. When viewed in the left-right direction, the upstream bended portion changes the flow direction of the exhaust gas from a direction along the up-down direction to a direction along the front-rear direction. To be more specific, when viewed in the left-right direction, the bended portion changes the flow direction of the exhaust gas from downward to rearward and upward. When viewed in the left-right direction, the downstream bended portion changes the flow direction of the exhaust gas from rearward and upward to rearward. A part which is slightly downstream of the downstream bended portion is positioned below the crankshaft axis Cr1.

The exhaust gas exhausted from the downstream end of the exhaust pipe 34 flows into the silencer 35. The upstream end 35a of the silencer 35 is connected to the downstream end of the exhaust pipe member 42. The silencer 35 allows the exhaust gas to flow from the downstream end of the exhaust pipe 34 to the discharge port 35e. The silencer 35 is configured to restrain pulsation in the exhaust gas. With this, the silencer 35 restrains the volume of the sound (exhaust sound) generated by the exhaust gas. Multiple expansion chambers and multiple pipes connecting the expansion chambers with one another are provided inside the silencer 35. The downstream end of the exhaust pipe 34 is provided inside an expansion chamber of the silencer 35. The downstream end of the exhaust pipe 34 may be connected to the upstream end 35a of the silencer 35. The discharge port 35e exposed to the atmosphere is provided at the downstream end of the silencer 35. As shown in FIG. 5, the path length of the exhaust path extending from the downstream end of the exhaust pipe 34 to the discharge port 35e is referred to as e2. The path length of the expansion chamber in the silencer 35 is the length of the path which connects the center of the inflow port of the expansion chamber to the center of the outflow port of the expansion chamber in the shortest distance. The exhaust gas having passed the silencer 35 is discharged to the atmosphere via the discharge port 35e. As shown in FIG. 2, the discharge port 35e is positioned rearward of the crankshaft axis Cr1.

The silencer 35 is supported by the vehicle body frame 2. A connecting member 2a is connected to a substantially central part in the front-rear direction of an upper part of the silencer 35. The silencer 35 is supported by the vehicle body frame 2 via this connecting member 2a. The silencer 35 may be supported by the engine main body 20.

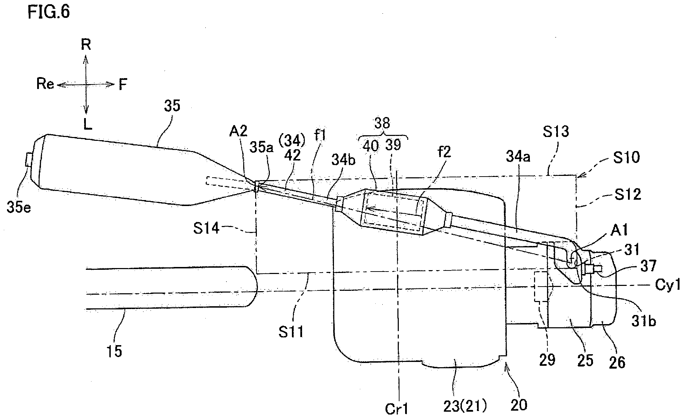

As shown in FIG. 6, when viewed in the up-down direction, the upstream end 35a of the silencer 35 and the downstream end 31b of the cylinder exhaust passage member 31 are distant from each other in the direction parallel to the cylinder axis Cy1. The cylinder axis Cy1 of the present embodiment extends to be parallel to the front-rear direction when viewed in the up-down direction. When viewed in the up-down direction, the upstream end 35a of the silencer 35 and the downstream end 31b of the cylinder exhaust passage member 31 are distant from each other in the front-rear direction. When viewed in the up-down direction, positions which are distant from each other in the direction parallel to the cylinder axis Cy1 may not be lined up in the direction parallel to the cylinder axis Cy1.

As shown in FIG. 6, when viewed in the up-down direction, the upstream end 35a of the silencer 35 and the downstream end 31b of the cylinder exhaust passage member 31 are distant from each other in the direction orthogonal to the cylinder axis Cy1. The cylinder axis Cy1 of the present embodiment extends to be orthogonal to the left-right direction when viewed in the up-down direction. When viewed in the up-down direction, the upstream end 35a of the silencer 35 and the downstream end 31b of the cylinder exhaust passage member 31 are distant from each other in the left-right direction. The direction orthogonal to the cylinder axis Cy1 when viewed in the up-down direction is the direction parallel to the crankshaft axis Cr1.

The main catalyst 39 is provided inside the exhaust pipe member 42. The catalyst unit 38 includes a hollow cylindrical casing 40 and the main catalyst 39. The upstream end of the casing 40 is connected to the upstream exhaust pipe member 34a. The downstream end of the casing 40 is connected to the downstream exhaust pipe member 34b. The casing 40 forms a part of the exhaust pipe member 42. The main catalyst 39 is fixed to the inside of the casing 40. The exhaust gas is purified when passing through the main catalyst 39. All exhaust gas exhausted from the exhaust port 31a of the combustion chamber 29 passes through the main catalyst 39. The main catalyst 39 purifies the exhaust gas exhausted from the combustion chamber 29 most into the exhaust path 41.

The main catalyst 39 is a so-called three-way catalyst. The three-way catalyst removes three substances in exhaust gas, namely hydrocarbon, carbon monoxide, and nitrogen oxide, by oxidation or reduction. The three-way catalyst is a type of oxidation-reduction catalyst. The main catalyst 39 includes a base and catalytic materials attached to the surface of the base. The catalytic materials are formed of a carrier and noble metal. The carrier is provided between the noble metal and the base. The carrier supports the noble metal. This noble metal purifies the exhaust gas. Examples of the noble metal include platinum, palladium, and rhodium which remove hydrocarbon, carbon monoxide, and nitrogen oxide, respectively.

The main catalyst 39 has a porous structure. The porous structure indicates a structure in which many pores are formed cross-sectionally vertical to the path direction of the exhaust path 41. An example of a porous structure is a honeycomb structure. In the main catalyst 39, pores which are sufficiently narrower than the width of the path in the upstream exhaust pipe member 34a are formed.

The main catalyst 39 may be a metal-base catalyst or a ceramic-base catalyst. The metal-base catalyst is a catalyst in which the base is made of metal. The ceramic-base catalyst is a catalyst in which the base is made of ceramic. The base of the metal-base catalyst is formed by, for example, by alternately stacking metal corrugated plates and metal flat plates and winding them. The base of the ceramic-base catalyst is, for example, a honeycomb structured body.

As shown in FIG. 5, the length of the main catalyst 39 in the path direction is referred to as c1. Furthermore, the maximum width of the main catalyst 39 in the direction vertical to the path direction is referred to as w1. The length c1 of the main catalyst 39 is longer than the maximum width w1 of the main catalyst 39. The cross-sectional shape of the main catalyst 39 in the direction orthogonal to the path direction is, for example, circular. The cross-sectional shape may be arranged such that the length in the up-down direction is longer than the length in the left-right direction.

As shown in FIG. 5, the casing 40 includes a catalyst-provided passage member 40b, an upstream passage member 40a, and a downstream passage member 40c. The main catalyst 39 is provided in the catalyst-provided passage member 40b. In the path direction, the upstream end and the downstream end of the catalyst-provided passage member 40b are respectively at the same positions as the upstream end and the downstream end of the main catalyst 39. The cross-sectional area of the catalyst-provided passage member 40b cut along the direction orthogonal to the path direction is substantially constant in the path direction. The upstream passage member 40a is connected to the upstream end of the catalyst-provided passage member 40b. The downstream passage member 40c is connected to the upstream end of the catalyst-provided passage member 40b.

The upstream passage member 40a is at least partially tapered. The tapered part increases its inner diameter toward the downstream side. The downstream passage member 40c is at least partially tapered. The tapered part decreases its inner diameter toward the downstream side. The cross-sectional area of the catalyst-provided passage member 40b cut along the direction orthogonal to the path direction is referred to as B1. In at least a part of the upstream passage member 40a, the cross-sectional area of the upstream passage member 40a cut along the direction orthogonal to the path direction is smaller than the area B1. The at least part of the upstream passage member 40a includes the upstream end of the upstream passage member 40a. In at least a part of the downstream passage member 40c, the cross-sectional area of the downstream passage member 40c cut along the direction orthogonal to the path direction is smaller than the area B1. The at least part of the downstream passage member 40c includes the downstream end of the downstream passage member 40c.

As shown in FIG. 2 and FIG. 3, the main catalyst 39 is partially provided rearward of the crankshaft axis Cr1. In other words, when viewed in the left-right direction, the main catalyst 39 is provided partially behind the linear line L1. In addition to the above, the main catalyst 39 is provided partially frontward of the crankshaft axis Cr1. In other words, when viewed in the left-right direction, the main catalyst 39 is provided partially in front of the linear line L1. As described above, the linear line L1 is a linear line which passes the crankshaft axis Cr1 and extends in a direction parallel to the up-down direction. Furthermore, as shown in FIG. 2, when viewed in the left-right direction, the main catalyst 39 is positioned in front of (below) the cylinder axis Cy1.

As shown in FIG. 2, it is assumed that the linear line which is orthogonal to the cylinder axis Cy1 and orthogonal to the crankshaft axis Cr1 is L2. When viewed in the left-right direction, the main catalyst 39 is partially positioned behind the linear line L2. When viewed in the left-right direction, the main catalyst 39 is provided partially in front of the linear line L2.

As shown in FIG. 5, the path length from the downstream end 31b of the cylinder exhaust passage member 31 to the upstream end of the main catalyst 39 is referred to as b1. The path length b1 is a path length of a passage member formed of the upstream exhaust pipe member 34a and the upstream passage member 40a of the catalyst unit 38. Furthermore, the path length from the downstream end of the main catalyst 39 to the downstream end of the exhaust pipe 34 is referred to as d1. Furthermore, the path length from the downstream end of the main catalyst 39 to the upstream end 35a of the silencer 35 is referred to as g1. The path length g1 is the path length of a passage member formed of the downstream passage member 40c of the catalyst unit 38 and the downstream exhaust pipe member 34b. The path length from the combustion chamber 29 to the upstream end of the main catalyst 39 is a1+b1. The path length from the downstream end of the main catalyst 39 to the discharge port 35e is d1+e2. The path length of an exhaust pipe member 42 is b1+c1+g1.

The main catalyst 39 is provided so that the path length g1 is shorter than the path length b1. The main catalyst 39 is provided so that the path length g1 is shorter than the path length a1+b1. Furthermore, the main catalyst 39 is provided so that the path length d1 is shorter than the path length b1. The main catalyst 39 is provided so that the path length d1 is shorter than the path length a1+b1. Furthermore, the main catalyst 39 is provided so that the path length d1+e2 is shorter than the path length a1+b1.

As shown in FIG. 6, when viewed in the up-down direction, the upstream end of the main catalyst 39 and the downstream end of the main catalyst 39 are distant from each other in a direction (front-rear direction) parallel to the cylinder axis Cy1. Furthermore, when viewed in the up-down direction, the upstream end of the main catalyst 39 and the downstream end of the main catalyst 39 are distant from each other in a direction (left-right direction) vertical to the cylinder axis Cy1.

As shown in FIG. 6, the center of the downstream end 31b of the cylinder exhaust passage member 31 of the engine main body 20 is referred to as A1. Furthermore, the center of the upstream end 35a of the silencer 35 is referred to as A2. Furthermore, a virtual linear line connecting the center A1 with the center A2 is referred to as a virtual linear line f1. The virtual linear line f1 is inclined with respect to the cylinder axis Cy1 when viewed in the up-down direction.

A virtual linear line connecting the center of the upstream end and the center of the downstream end of the main catalyst 39 is referred to as a virtual linear line f2. The main catalyst 39 is positioned so that the virtual linear line f2 is inclined with respect to the cylinder axis Cy1 when viewed in the up-down direction.

The center A2 of the upstream end 35a of the silencer 35 is positioned rightward of the center A1 of the downstream end 31b of the cylinder exhaust passage member 31 when viewed in the up-down direction. Furthermore, when viewed in the up-down direction, the center of the downstream end of the main catalyst 39 is also positioned rightward of the center of the upstream end of the main catalyst 39. When viewed in the up-down direction, the virtual linear line f1 and the virtual linear line f2 are both inclined with respect to the front-rear direction and the left-right direction. When viewed in the up-down direction, the virtual linear line f1 and the virtual linear line f2 are both inclined rightward toward the rear side. In other words, when viewed in the up-down direction, the virtual linear line f1 and the virtual linear line f2 are both extend in a direction between one direction (e.g., R direction) vertical to the cylinder axis Cy1 and another direction (e.g., Re direction) parallel with the cylinder axis Cy1. In the present embodiment, because the cylinder axis Cy1 is parallel to the vehicle front-rear direction when viewed in the up-down direction, one direction parallel to the cylinder axis Cy1 is referred to as the Re direction whereas one direction vertical to the cylinder axis Cy1 is referred to as the R direction. When viewed in the up-down direction, however, the cylinder axis Cy1 may not be parallel to the vehicle front-rear direction.

When viewed in the up-down direction, the main catalyst 39 is provided in an area which at least partially overlaps a quadrangle S10 formed of sides (line segments) S11 to S14. The side S11 is a linear line segment which passes the center A1 of the downstream end 31b of the cylinder exhaust passage member 31 and is parallel to the cylinder axis Cy1. The side S12 is a linear line segment which passes the center A1 of the downstream end 31b of the cylinder exhaust passage member 31 and is parallel to the crankshaft axis Cr1. The side S13 is a linear line segment which passes the center A2 of the upstream end 35a of the silencer 35 and is parallel to the cylinder axis Cy1. The side S14 is a linear line segment which passes the center A2 of the upstream end 35a of the silencer 35 and is parallel to the crankshaft axis Cr1. In FIG. 6, when viewed in the up-down direction, the main catalyst 39 is positioned to entirely overlap the area (quadrangle S10) formed of the sides S11 to S14.

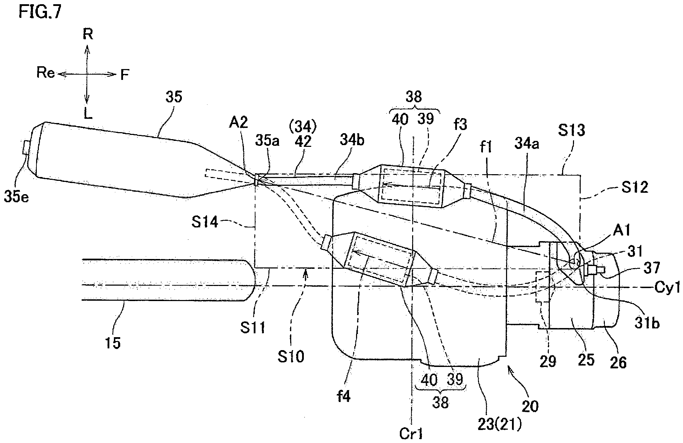

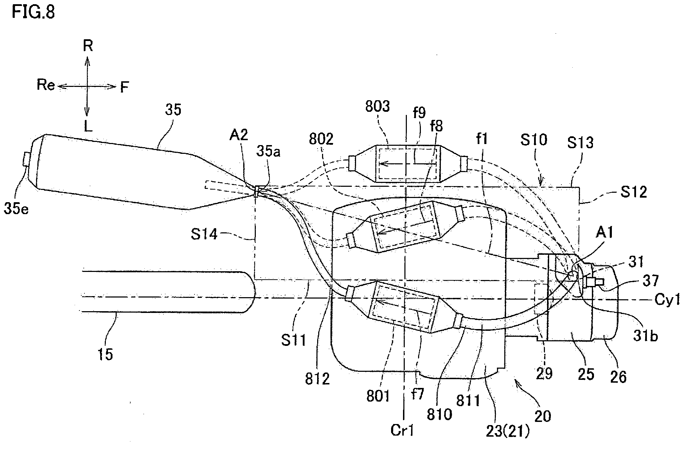

FIG. 7 is a schematic diagram in which parts of the engine main body and the exhauster of a modification of Embodiment 1 are enlarged. FIG. 8 is a schematic diagram in which parts of the engine main body and the exhauster of a comparative example of Embodiment 1 are enlarged. FIG. 7 shows two modifications of the arrangement of the main catalyst 39.

FIG. 7 shows two modifications of the arrangement of the main catalyst 39. FIG. 7 shows two modifications of the arrangement of the main catalyst 39. In FIG. 7, the center A1 of the downstream end 31b of the cylinder exhaust passage member 31 and the center A2 of the upstream end 35a of the silencer 35 are positionally identical to those in FIG. 6. In FIG. 7, the upstream exhaust pipe member 34a and the downstream exhaust pipe member 34b of one of the two modifications are indicated by dotted lines. Virtual linear lines connecting the centers of the upstream ends and the centers of the downstream ends of the main catalysts 39 of the two modifications shown in FIG. 7 are referred to as virtual linear lines f3 and f4.

When viewed in the up-down direction, the main catalyst 39 is provided to partially overlap the quadrangle S10 formed of the sides S11 to S14. In FIG. 7, when viewed in the up-down direction, the main catalyst 39 of each of two modifications is provided to partially overlap the quadrangle formed of the sides S11 to S14. The main catalyst 39 of one modification is positioned to overlap the side S11 which is parallel with the cylinder axis Cy1, when viewed in the up-down direction. The main catalyst 39 of another modification is positioned to overlap the side S13 which is parallel with the cylinder axis Cy1.

In FIG. 7, the virtual linear lines f3 and f4 are inclined with respect to the cylinder axis Cy1 when viewed in the up-down direction. Furthermore, when viewed in the up-down direction, being similar to the virtual linear line f1, the virtual linear line f3 and the virtual linear line f3 are both extend in a direction between one direction (e.g., R direction) vertical to the cylinder axis Cy1 and another direction (e.g., Re direction) parallel with the cylinder axis Cy1.

FIG. 8 shows three comparative examples of the arrangement of the main catalysts 801 to 803. Each of the main catalysts 801 to 803 is provided on an exhaust pipe member 810. The exhaust pipe member 810 includes an upstream exhaust pipe member 811 provided upstream of the upstream end of the main catalyst 801 and a downstream exhaust pipe member 812 provided downstream of the downstream end of the main catalyst 801. In FIG. 8, the upstream exhaust pipe member 811 and the downstream exhaust pipe member 812 of the two comparative examples are indicated by dotted lines. In FIG. 8, the center A1 of the downstream end 31b of the cylinder exhaust passage member 31 and the center A2 of the upstream end 35a of the silencer 35 are positionally identical to those in FIG. 6. Furthermore, virtual linear lines connecting the centers of the upstream ends and the centers of the downstream ends of the main catalysts 801 to 803 shown in FIG. 8 are referred to as virtual linear lines f7 to f9.

As shown in FIG. 8, when viewed in the up-down direction, the main catalysts 801 and 803 are provided not to overlap the quadrangle S10 formed of the sides S11 to S14 at all. The virtual main catalyst 803 is positioned so that the virtual linear line f9 is not inclined with respect to the cylinder axis Cy1 when viewed in the up-down direction.

The center A2 of the upstream end 35a of the silencer 35 is positioned rightward of the center A1 of the downstream end 31b of the cylinder exhaust passage member 31 when viewed in the up-down direction. The main catalyst 802, however, is positioned so that the center of the downstream end is positioned leftward of the center of the upstream end when viewed in the up-down direction. That is to say, the virtual linear line f8 and the virtual linear line f1 do not both extend in a direction between one direction vertical to the cylinder axis Cy1 and another direction parallel with the cylinder axis Cy1. That is to say, as shown in FIG. 8, the virtual linear line f8 extend in a direction between the L direction vertical to the cylinder axis Cy1 and the Re direction parallel to the cylinder axis Cy1. On the other hand, contrary to the virtual linear line f8, the virtual linear line f1 extends in a direction between the R direction vertical to the cylinder axis Cy1 and the Re direction parallel to the cylinder axis Cy1.

In this way, the direction of the virtual linear line f8 of the main catalyst 802 with respect to the cylinder axis Cy1 is different from the direction of the virtual linear line f1. Furthermore, the main catalyst 801 and the main catalyst 803 do not overlap the quadrangle S10 formed of the sides S11 to S14 when viewed in the direction of the linear line L2. With this, the path length of the exhaust pipe member 810 of the main catalysts 801 to 803 shown in the comparative example of FIG. 8 is long. It is found that the path length of the exhaust pipe member 42 when the main catalyst 39 is positioned as shown in FIG. 6 and FIG. 7 is short as compared to the total of the path length of the exhaust pipe member 810 when the main catalysts 801 to 803 are positioned as shown in FIG. 8. The path length of the exhaust pipe member 42 is b1+c1+g1 as shown in FIG. 5.

The upstream oxygen detector 37 is provided on the exhaust pipe 34. The upstream oxygen detector 37 is provided upstream of the main catalyst 39. The upstream oxygen detector 37 is a sensor configured to detect the oxygen density in the exhaust gas. The upstream oxygen detector 37 may be an oxygen sensor configured to detect whether the oxygen density is higher than a predetermined value or not. Alternatively, the upstream oxygen detector 37 may be a sensor (e.g., an A/F sensor: Air Fuel ratio sensor) configured to output a detection signal representing the oxygen density in steps or linearly. The upstream oxygen detector 37 is arranged such that one end portion (detecting portion) is provided inside the exhaust pipe 34 whereas the other end portion is provided outside the exhaust pipe 34. The detecting portion of the upstream oxygen detector 37 is able to detect the oxygen density when it is heated to a high temperature and activated. A detection result of the upstream oxygen detector 37 is output to the electronic control unit 45.

The structure of the motorcycle 1 of Embodiment 1 has been described. The motorcycle 1 of Embodiment 1 has the following characteristics.

As described above, when the motorcycle 1 is viewed in the up-down direction, the upstream end 35a of the silencer 35 is distant from the downstream end 31b of the cylinder exhaust passage member 31 in the direction parallel to the cylinder axis Cy1 and in the direction vertical to the cylinder axis Cy1. Furthermore, the center A2 of the upstream end 35a of the silencer 35 is positioned one rightward and leftward of the center A1 of the downstream end 31b of the cylinder exhaust passage member 31 in the left-right direction of the motorcycle 1, when the motorcycle 1 is viewed in the up-down direction. Furthermore, the center of the downstream end of the main catalyst 39 is positioned the one of rightward and leftward of the center of the upstream end of the main catalyst 39 in the left-right direction of the motorcycle 1, when the motorcycle 1 is viewed in the up-down direction. Furthermore, when the motorcycle 1 is viewed in the up-down direction, the main catalyst 39 is provided to at least partially overlap the quadrangle S10 formed of the sides (line segments) S11 to S14. The side S11 is a line segment which passes the downstream end 31b of the cylinder exhaust passage member 31 and is parallel to the cylinder axis Cy1. The side S12 is a line segment which passes the downstream end 31b of the cylinder exhaust passage member 31 and is parallel to the crankshaft axis Cr1. The side S13 is a line segment which passes the upstream end 35a of the silencer 35 and is parallel to the cylinder axis Cy1. The side S14 is a line segment which passes the upstream end 35a of the silencer 35 and is parallel to the crankshaft axis Cr1.

With the arrangement above, the main catalyst 39 is provided to be close to the linear line connecting the center of the downstream end 31b of the cylinder exhaust passage member 31 with the center of the upstream end 35a of the silencer 35. Furthermore, as compared to cases where the main catalyst 39 is not provided at this position, the following effects are achieved. That is to say, the path length (b1+c1+g1) of the exhaust pipe member 42 from the downstream end 31b of the cylinder exhaust passage member 31 to the upstream end 35a of the silencer 35 is shortened. It is therefore possible to secure the durability of the exhauster 36 against the vibrations in the up-down direction without needing a complicated supporting structure for supporting the main catalyst 39. This exhauster 36 includes the exhaust pipe 34, the main catalyst 39, and the silencer 35. The structure of the exhauster 36 is simplified even if the single-cylinder four-stroke engine unit 19 includes the horizontal cylinder member 22 in which the cylinder axis Cy1 extends in the front-rear direction. The exhaust pipe member 42 is short in the single-cylinder four-stroke engine unit 19 which includes the horizontal cylinder member 22 in which the cylinder axis Cy1 extends in the front-rear direction. Due to this, the main catalyst 39 provided on the exhaust pipe member 42 is positioned to be closer to the downstream end of the cylinder exhaust passage member 31. The main catalyst 39 is therefore provided to be close to the combustion chamber 29. The purification performance of the main catalyst 39 purifying the exhaust gas is therefore improved.

In addition to the above, the exhaust pipe member 42 is provided with the catalyst-provided passage member 40b on which the main catalyst 39 is provided. The exhaust pipe member 42 is provided with an upstream passage member 40a which is connected to the upstream end of the catalyst-provided passage member 40b. Furthermore, the cross-sectional area B1 of the catalyst-provided passage member 40b cut along the direction orthogonal to the flow direction of the exhaust gas is larger than at least a part of the cross-sectional area of the upstream passage member 40a cut along the direction orthogonal to the flow direction of the exhaust gas. The purification performance of the main catalyst 39 purifying the exhaust gas is improved as compared to cases where the cross-sectional area B1 of the catalyst-provided passage member 40b cut along the direction orthogonal to the flow direction of the exhaust gas is identical to or smaller than the cross-sectional area of the upstream passage member 40a cut along the direction orthogonal to the flow direction of the exhaust gas

In addition to the above, the main catalyst 39 is provided so that the path length (g1) from the downstream end of the main catalyst 39 to the upstream end 35a of the silencer 35 is shorter than the path length (a1+b1) from the combustion chamber 29 to the upstream end of the main catalyst 39. Due to this, the path length (g1) from the upstream end 35a of the silencer 35 to the downstream end of the main catalyst 39 is short. The main catalyst 39 is therefore positioned to be relatively close to the silencer 35. It is therefore possible to utilize the supporting structure of the silencer 35 as the supporting structure of the main catalyst 39. The structure of the exhauster 36 is therefore simplified.

In additioin to the above, the main catalyst 39 is provided partially rearward of the crankshaft axis Cr1. Due to this, the path length (g1) from the upstream end 35a of the silencer 35 to the downstream end of the main catalyst 39 is short. The main catalyst 39 is therefore positioned to be relatively close to the silencer 35. It is therefore possible to utilize the supporting structure of the silencer 35 as the supporting structure of the main catalyst 39. The structure of the exhauster 36 is therefore simplified.

In addition to the above, the main catalyst 39 is provided partially frontward of the crankshaft axis Cr1. Due to this, the path length (b1) from the downstream end 31b of the cylinder exhaust passage member 31 to the upstream end of the main catalyst 39 is short. The main catalyst 39 is therefore positioned to be relatively close to the combustion chamber 29. The decrease in temperature of the exhaust gas flowing into the main catalyst 39 is therefore restrained. Due to this, the purification performance of the main catalyst 39 purifying the exhaust gas is further improved.

In addition to the above, the main catalyst 39 is provided partially behind the crankshaft axis Cr1 in the front-rear direction of the straddled vehicle 1. Due to this, the path length (g1) from the upstream end 35a of the silencer 35 to the downstream end of the main catalyst 39 is short. The main catalyst 39 is therefore positioned to be relatively close to the silencer 35. It is therefore possible to utilize the supporting structure of the silencer 35 as the supporting structure of the main catalyst 39. The structure of the exhauster 36 is therefore simplified.

In addition to the above, the main catalyst 39 is provided partially behind the linear line L2 which is orthogonal to the cylinder axis Cy1 and orthogonal to the crankshaft axis Cr1. Due to this, the path length (g1) from the upstream end 35a of the silencer 35 to the downstream end of the main catalyst 39 is short. The main catalyst 39 is therefore positioned to be relatively close to the silencer 35. It is therefore possible to utilize the supporting structure of the silencer 35 as the supporting structure of the main catalyst 39. The structure of the exhauster 36 is therefore simplified.

### (Embodiment 2)

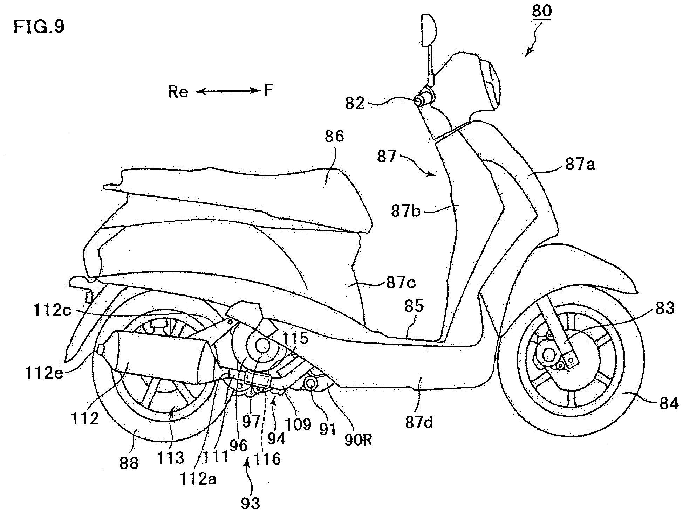

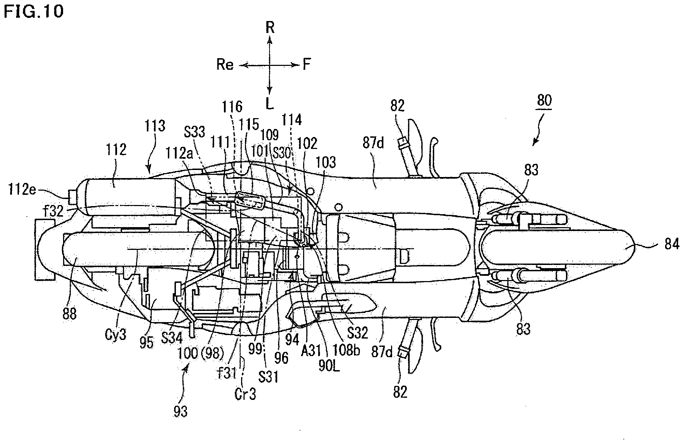

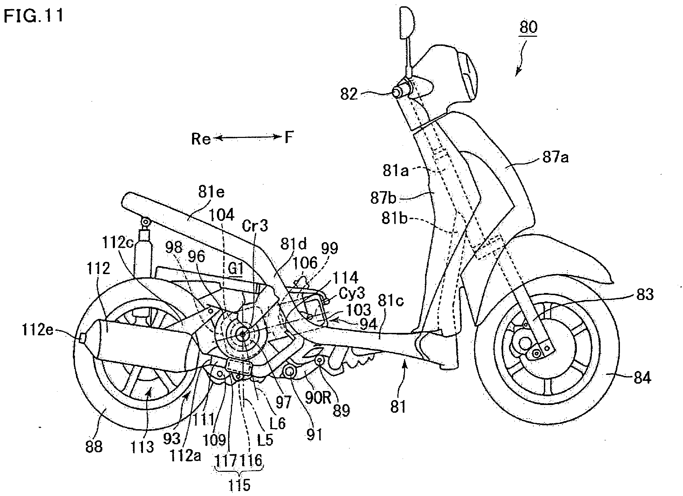

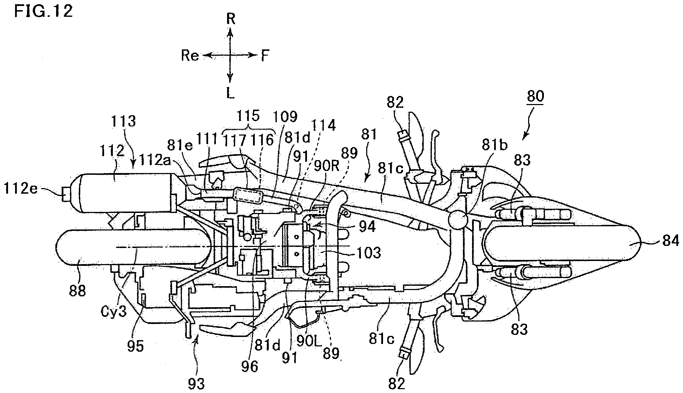

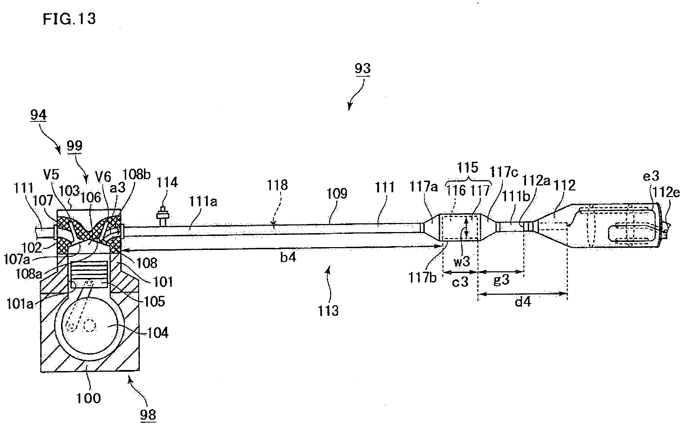

FIG. 9 is a side view of a motorcycle of Embodiment 2 of the present teaching. FIG. 10 is a bottom view of the motorcycle of Embodiment 2. FIG. 11 is a side view showing a state in which a vehicle body cover, etc. have been removed from the motorcycle of Embodiment 2. FIG. 12 is a bottom view showing the state in which the vehicle body cover, etc. have been removed from the motorcycle of Embodiment 2. FIG. 13 is a schematic diagram of an engine and an exhaust system of the motorcycle of Embodiment 2.

A straddled vehicle of Embodiment 2 is a so-called scooter-type motorcycle 80. As shown in FIG. 11, the motorcycle 80 is provided with a vehicle body frame 81. The vehicle body frame 81 includes a head pipe 81a, a main frame 81b, paired left and right side frames 81c, paired left and right rear frames 81d, and paired left and right seat frames 81e. The main frame 81b extends rearward and downward from the head pipe 81a. The paired left and right side frames 81c extend substantially horizontally rearward from a lower end portion of the main frame 81b. The paired left and right rear frame 81d extend rearward and upward from lower end portions of the side frames 81c. The paired left and right seat frames 81e extend horizontally rearward from rear end portions of the rear frames 81d.

A steering shaft is rotatably inserted into the head pipe 81a. A handlebar 82 is provided at an upper part of the steering shaft. A display (not illustrated) is provided in the vicinity of the handlebar 82. The display is configured to display vehicle speed, engine rotation speed, warnings, and the like.

Paired left and right front forks 83 are supported at a lower part of the steering shaft. The lower end portions of the front forks 83 support a front wheel 84 in a rotatable manner.

A foot board 85 (see FIG. 9) is attached to the paired left and right side frames 81c. A rider seated on a subsequently-described seat 86 places his/her feet on this foot board 85.

The seat frames 81e support the seat 86 (see FIG. 9). In the vehicle front-rear direction, the seat 86 extends from an intermediate portion to a rear end portion of the vehicle body frame 81.

A space G1 (see FIG. 11) is formed below the seat 86. A storage box (not illustrated) is provided in this space G1. The storage box is an open-top box. The seat 86 functions as a lid for opening and closing the upper opening of the storage box. The storage box is provided between the left and right seat frames 81e. The storage box is supported by the rear frames 81d and the seat frames 81e.

As shown in FIG. 9, the motorcycle 80 is provided with a vehicle body cover 87 which covers the vehicle body frame 81, etc. The vehicle body cover 87 includes a front cover 87a, a leg shield 87b, a main cover 87c, and an under cover 87d. The front cover 87a is provided in front of the head pipe 81a. The leg shield 87b is provided behind the head pipe 81a. The front cover 87a and the leg shield 87b covers the head pipe 81a and the main frame 81b. The main cover 87c extends upward from a rear portion of the foot board 85. The main cover 87c covers the storage box substantially entirely. The under cover 87d is provided below the front cover 87a, the leg shield 87b, and the main cover 87c. The under cover 87d covers an upper front part of a subsequently-described engine main body 94 from the front, left, and right.

A unit-swinging single-cylinder four-stroke engine unit 93 is attached to the vehicle body frame 81. The single-cylinder four-stroke engine unit 93 includes the engine main body 94 and a power transmission unit 95 (see FIG. 10 and FIG. 12). The power transmission unit 95 is connected to a rear portion of the engine main body 94. The power transmission unit 95 is provided to the left of the engine main body 94. The power transmission unit 95 houses a transmission. The power transmission unit 95 supports a rear wheel 88 in a rotatable manner.

The engine main body 94 and the power transmission unit 95 are configured to be integrally swingable with respect to the vehicle body frame 81. To be more specific, as shown in FIG. 11 and FIG. 12, a right link component 90R and a left link component 90L are connected to left and right end portions of a lower part of the engine main body 94. The right link component 90R and the left link component 90L extend frontward from the engine main body 94. The leading end portions of the right link component 90R and the left link component 90L are rotatably connected to the vehicle body frame 81 via pivot shafts 89. Furthermore, the right link component 90R and the left link component 90L are rotatably connected to the engine main body 94 via pivot shafts 91 (see FIG. 11). It is noted that FIG. 10 does not show some parts such as a subsequently-described shroud 96 of the right link component 90R and the engine main body 94.

The single-cylinder four-stroke engine unit 93 includes the engine main body 94, the power transmission unit 95, an air cleaner (not illustrated), an intake pipe 110 (see FIG. 13), an exhaust pipe 111, a silencer 112, a main catalyst 116 (a single-combustion-chamber main catalyst), and an upstream oxygen detector 114 (a single-combustion-chamber upstream oxygen detector). The single-cylinder four-stroke engine unit 93 further includes an electronic control unit which is similar to the electronic control unit 45 of Embodiment 1. The electronic control unit controls the engine main body 94.

The engine main body 94 is a single-cylinder four-stroke engine. The engine main body 94 is a forced air-cooled engine. The engine main body 94 includes the shroud 96, a fan 97, a crankcase member 98, and a cylinder member (horizontal cylinder member) 99.

The cylinder member 99 extends frontward from the crankcase member 98. The shroud 96 covers the whole circumference of a rear portion of the cylinder member 99. To be more specific, the shroud 96 covers the whole circumference of the entirety of a subsequently-described cylinder body 101 and the entirety of a subsequently-described cylinder head 102. However, the circumference of the exhaust pipe 111 connected to the cylinder head 102 is not covered. The shroud 96 covers the right part of the crankcase member 98.

The fan 97 is provided between the shroud 96 and the crankcase member 98. An inflow port for air intake is formed at a part of the shroud 96 opposing the fan 97. The fan 97 generates an air flow for cooling the engine main body 94. To be more specific, air is introduced or brought into the shroud 96 by the rotation of the fan 97. As this air flow collides with the engine main body 94, the crankcase member 98 and the cylinder member 99 are cooled.

The crankcase member 98 includes a crankcase main body 100 and a crankshaft 104 or the like housed in the crankcase main body 100. The central axis (crankshaft axis) Cr3 of the crankshaft 104 extends in the left-right direction. The fan 97 is integrally and rotatably connected to a right end portion of the crankshaft 104. The fan 97 is driven by the rotation of the crankshaft 104. Lubricating oil is stored in the crankcase main body 100. The oil is conveyed by an oil pump (not illustrated) and is circulated in the engine main body 94.

The cylinder member 99 includes a cylinder body 101, a cylinder head 102, a head cover 103, and components housed in the members 101 to 103. As shown in FIG. 10, the cylinder body 101 is connected to a front portion of the crankcase main body 100. The cylinder head 102 is connected to a front portion of the cylinder body 101. The head cover 103 is connected to a front portion of the cylinder head 102.

As shown in FIG. 13, a cylinder hole 101a is formed in the cylinder body 101. The cylinder hole 101a houses a piston 105 so that the piston 105 is able to reciprocate. The piston 105 is connected to the crankshaft 104 via a connecting rod. Hereinafter, the central axis Cy3 of the cylinder hole 101a is referred to as a cylinder axis Cy3. As shown in FIG. 11, the engine main body 94 is disposed so that the cylinder axis Cy3 extends in the front-rear direction. To be more specific, the direction in which the cylinder axis Cy3 extends from the crankcase member 98 to the cylinder member 99 is frontward and upward. The angle of inclination of the cylinder axis Cy3 with respect to the horizontal direction is 0 degrees or greater and 45 degrees or less.

As shown in FIG. 13, one combustion chamber 106 is formed in the cylinder member 99. The combustion chamber 106 is formed of an inner surface of the cylinder hole 101a of the cylinder body 101, the cylinder head 102, and the piston 105. As shown in FIG. 11, the combustion chamber 106 is positioned frontward of the crankshaft axis Cr3. In other words, a linear line which passes the crankshaft axis Cr3 and is parallel to the up-down direction is L5. When viewed in the left-right direction, the combustion chamber 106 is positioned in front of the linear line L5.

As shown in FIG. 13, a cylinder intake passage member 107 and a cylinder exhaust passage member 108 (a single-combustion-chamber cylinder exhaust passage member) are formed in the cylinder head 102. In the cylinder head 102, an intake port 107a and an exhaust port 108a are formed in a wall portion forming the combustion chamber 106. The cylinder intake passage member 107 extends from the intake port 107a to an inlet formed in the outer surface (upper surface) of the cylinder head 102. The cylinder exhaust passage member 108 extends from the exhaust port 108a to an outlet formed in the outer surface (lower surface) of the cylinder head 102. Air passes through the inside of the cylinder intake passage member 107 and is then supplied to the combustion chamber 106. Exhaust gas exhausted from the combustion chamber 106 passes through the cylinder exhaust passage member 108.

An intake valve V5 is provided in the cylinder intake passage member 107. An exhaust valve V6 is provided in the cylinder exhaust passage member 108. The intake port 107a is opened and closed by movement of the intake valve V5. The exhaust port 108a is opened and closed by movement of the exhaust valve V6. An intake pipe 110 is connected to an end portion (inlet) of the cylinder intake passage member 107. An exhaust pipe 111 is connected to an end portion (outlet) of the cylinder exhaust passage member 108. The path length of the cylinder exhaust passage member 108 is referred to as a3.

As described above, FIG. 10 does not show some parts such as the right link component 90R and the shroud 96. With this arrangement, a connection part of the lower surface of the cylinder head 102 and the exhaust pipe 111 is viewable. As shown in FIG. 10 and FIG. 12, when viewed from below, an upstream end of the exhaust pipe 111 is positioned between the right link component 90R and the left link component 90L. However, as shown in FIG. 11, when viewed in the left-right direction, the exhaust pipe 111 passes above the right link component 90R and the left link component 90L. The exhaust pipe 111 therefore does not pass between the right link component 90R and the left link component 90L.

The single-cylinder four-stroke engine unit 93 includes an ignition plug, a valve operating mechanism, an injector, and a throttle valve in the same manner as the engine main body 20 of Embodiment 1. Furthermore, in the same manner as Embodiment 1, the single-cylinder four-stroke engine unit 93 includes sensors such as an engine rotation speed sensor and a throttle position sensor.

As described above, the single-cylinder four-stroke engine unit 93 includes the engine main body 94, the exhaust pipe 111, the silencer 112, the main catalyst 116, and the upstream oxygen detector 114. The exhaust pipe 111 includes an exhaust pipe member 109 which forms at least a part of the exhaust pipe 111. The exhaust pipe member 109 is a part of the exhaust pipe 111, which is exposed to the outside. The single-cylinder four-stroke engine unit 93 is provided with an exhauster 113. This exhauster 113 includes the exhaust pipe 111, the silencer 112, and the main catalyst 116. The silencer 112 is provided with a discharge port 112e which is exposed to the atmosphere. The path extending from the combustion chamber 106 to the discharge port 112e is referred to as an exhaust path 118 (see FIG. 9). The exhaust path 118 is formed of the cylinder exhaust passage member 108, the exhaust pipe 111, and the silencer 112. The exhaust path 118 is a space through which exhaust gas passes.

As shown in FIG. 13, the upstream end of the exhaust pipe 111 is connected to the downstream end 108b of the cylinder exhaust passage member 108. In other words, the upstream end of the exhaust pipe member 109 is connected to the downstream end 108b of the cylinder exhaust passage member 108. The exhaust pipe 111 is supported by the engine main body 94. The downstream end 108b of the cylinder exhaust passage member 108 is equivalent to an outlet of the cylinder exhaust passage member 108. The upstream end of the exhaust pipe 111 may be inserted into the cylinder exhaust passage member 108. The exhaust gas flows into the upstream end of the exhaust pipe 111. The downstream end of the exhaust pipe member 109 is connected to the upstream end 112a of the silencer 112. The exhaust pipe 111 allows the exhaust gas to flow from the downstream end of the cylinder exhaust passage member 108 to the silencer 112. A catalyst unit 115 is provided in the middle of the exhaust pipe member 109. A part of the exhaust pipe member 109, which is upstream of the catalyst unit 115, is referred to as an upstream exhaust pipe member 111a. A part of the exhaust pipe member 109, which is downstream of the catalyst unit 115, is referred to as a downstream exhaust pipe member 111b. While FIG. 13 depicts the exhaust pipe 111 (exhaust pipe member 109) as a linear pipe for simplification, the exhaust pipe 111 is not a linear pipe.

As shown in FIG. 10, the exhaust pipe 111 is provided in the right side part of the motorcycle 80. As shown in FIG. 11, when viewed in the left-right direction, the upstream end of the exhaust pipe 111 is positioned frontward of the crankshaft axis Cr3. The downstream end of the exhaust pipe 111 is positioned rearward of the crankshaft axis Cr3. The exhaust pipe 111 is positioned partially below the crankshaft axis Cr3. The exhaust pipe 111 has two bended portions. The upstream one of the two bended portions is simply referred to as an upstream bended portion. The downstream one of the two bended portions is simply referred to as a downstream bended portion. When viewed in the left-right direction, the upstream bended portion changes the flow direction of the exhaust gas from downward to rearward and downward. When viewed in the left-right direction, the downstream bended portion changes the flow direction of the exhaust gas from downward and rearward to rearward and upward. A part which is downstream of the downstream bended portion is positioned below the crankshaft axis Cr3. The downstream end of the main catalyst 116 is provided at the downstream bended portion.

The exhaust gas exhausted from the downstream end of the exhaust pipe 111 flows into the silencer 112. The upstream end 112a of the silencer 112 is connected to the downstream end of the exhaust pipe member 109. The silencer 112 allows the exhaust gas to flow from the downstream end of the exhaust pipe 111 to the discharge port 112e. The silencer 112 is configured to restrain pulsation in the exhaust gas. With this, the silencer 112 restrains the volume of the sound (exhaust sound) generated by the exhaust gas. Multiple expansion chambers and multiple pipes connecting the expansion chambers with one another are provided inside the silencer 112. The downstream end of the exhaust pipe 111 is provided inside an expansion chamber of the silencer 112. The discharge port 112e exposed to the atmosphere is provided at the downstream end of the silencer 112. As shown in FIG. 13, the path length of the exhaust path from extending the downstream end of the exhaust pipe 111 to the discharge port 112e is referred to as e3. The exhaust gas having passed the silencer 112 is discharged to the atmosphere via the discharge port 112e. As shown in FIG. 11, the discharge port 112e is positioned rearward of the crankshaft axis Cr3.

The silencer112 is supported by the engine main body 94. A connecting member 112c is connected to an upper part of the silencer 112. The silencer 112 is supported by the engine main body 94 via this connecting member 112c.

As shown in FIG. 10, when viewed in the up-down direction, the upstream end 112a of the silencer 112 and the downstream end 108b of the cylinder exhaust passage member 108 are distant from each other in the direction parallel to the cylinder axis Cy3. Furthermore, when viewed in the up-down direction, the upstream end 112a of the silencer 112 and the downstream end 108b of the cylinder exhaust passage member 108 are distant from each other in the direction parallel to the cylinder axis Cy3.

The main catalyst 116 is provided inside the exhaust pipe member 109. The catalyst unit 115 includes a cylindrical casing 117 and the main catalyst 116. The upstream end of the casing 117 is connected to the upstream exhaust pipe member 111a. The downstream end of the casing 117 is connected to the downstream exhaust pipe member 111b. The casing 117 forms a part of the exhaust pipe member 109. The main catalyst 116 is fixed to the inside of the casing 117. The exhaust gas is purified when passing through the main catalyst 116. All exhaust gas exhausted from the exhaust port 108a of the combustion chamber 106 passes through the main catalyst 116. The main catalyst 116 purifies the exhaust gas exhausted from the combustion chamber 106 most into the exhaust path 118.

The materials of the main catalyst 116 are identical to those of the main catalyst 39 of Embodiment 1. The main catalyst 116 has a porous structure. In the main catalyst 116, pores which are sufficiently narrower than the width of the path in the upstream exhaust pipe member 111a are formed. As shown in FIG. 13, the length of the main catalyst 116 in the path direction is referred to as c3. Furthermore, the maximum width of the main catalyst 116 in the direction orthogonal to the path direction is referred to as w3. The length c3 of the main catalyst 116 is longer than the maximum width w3 of the main catalyst 116.

As shown in FIG. 13, the casing 117 includes a catalyst-provided passage member 117b, an upstream passage member 117a, and a downstream passage member 117c. The main catalyst 116 is provided in the catalyst-provided passage member 117b. In the path direction, the upstream end and the downstream end of the catalyst-provided passage member 117b are respectively at the same positions as the upstream end and the downstream end of the main catalyst 116. The cross-sectional area of the catalyst-provided passage member 117b cut along the direction orthogonal to the path direction is substantially constant. The upstream passage member 117a is connected to the upstream end of the catalyst-provided passage member 117b. The downstream passage member 117c is connected to the upstream end of the catalyst-provided passage member 117b.

The upstream passage member 117a is at least partially tapered. The tapered part increases its inner diameter toward the downstream side. The downstream passage member 117c is at least partially tapered. The tapered part decreases its inner diameter toward the downstream side. The cross-sectional area of the catalyst-provided passage member 117b cut along the direction orthogonal to the path direction is referred to as B3. The cross-sectional area of the upstream end of (at least a part of) the upstream passage member 117a cut along the direction orthogonal to the path direction is smaller than the area B3. In at least a part of the downstream passage member 117c, the cross-sectional area of the downstream passage member 117c cut along the direction orthogonal to the path direction is smaller than the area B3. The at least part of the downstream passage member 117c includes the downstream end of the downstream passage member 117c.

As shown in FIG. 11, the main catalyst 116 is provided partially rearward of the crankshaft axis Cr3. In other words, when viewed in the left-right direction, the main catalyst 116 is provided partially behind the linear line L5. In addition to the above, the main catalyst 116 is provided partially frontward of the crankshaft axis Cr3. In other words, when viewed in the left-right direction, the main catalyst 116 is provided partially in front of the linear line L5. As described above, the linear line L5 is a linear line which passes the crankshaft axis Cr3 and extends in a direction parallel to the up-down direction. Furthermore, as shown in FIG. 11, when viewed in the left-right direction, the main catalyst 116 is positioned in front of (below) the cylinder axis Cy3.

As shown in FIG. 11, it is assumed that the linear line which is orthogonal to the cylinder axis Cy3 and orthogonal to the crankshaft axis Cr3 is L6. When viewed in the left-right direction, the main catalyst 116 is positioned partially behind the linear line L6. When viewed in the left-right direction, the main catalyst 116 is positioned partially in front of the linear line L6.

As shown in FIG. 13, the path length from the downstream end of the cylinder exhaust passage member 108 to the upstream end of the main catalyst 116 is referred to as b4. The path length b4 is a path length of a passage member formed of the upstream exhaust pipe member 111a and the upstream passage member 117a of the catalyst unit 115. Furthermore, the path length from the downstream end of the main catalyst 116 to the downstream end of the exhaust pipe 111 is referred to as d4. Furthermore, the path length from the downstream end of the main catalyst 116 to the upstream end 112a of the silencer 112 is referred to as g3. The path length g3 is the path length of a passage member formed of the downstream passage member 117c of the catalyst unit 115 and the downstream exhaust pipe member 111b. The path length from the combustion chamber 106 to the upstream end of the main catalyst 116 is a3+b4. The path length from the downstream end of the main catalyst 116 to the discharge port 112e is d4+e3. The path length of the exhaust pipe member 109 is b4+c3+g3.

The main catalyst 116 is provided so that the path length g3 is shorter than the path length b4. The main catalyst 116 is provided so that the path length d4 is shorter than the path length b4. The main catalyst 116 is provided so that the path length g3 is shorter than the path length a3+b4. Furthermore, the main catalyst 116 is provided so that the path length d4+e3 is shorter than the path length a3+b4.

As shown in FIG. 10, the center of the downstream end 108b of the cylinder exhaust passage member 108 is referred to as A31. Furthermore, the center of the upstream end 112a of the silencer 112 is referred to as A32. Furthermore, a virtual linear line connecting the center A31 with the center A32 is referred to as a virtual linear line f31. The virtual linear line f31 is inclined with respect to the cylinder axis Cy3 when viewed in the up-down direction.

A virtual linear line connecting the center of the upstream end and the center of the downstream end of the main catalyst 116 is referred to as a virtual linear line f32. The main catalyst 116 is positioned so that the virtual linear line f32 is inclined with respect to the cylinder axis Cy3 when viewed in the up-down direction.

The center A32 of the upstream end 112a of the silencer 112 is provided rightward of the center A31 of the downstream end 108b of the cylinder exhaust passage member 108 when viewed in the up-down direction. Furthermore, when viewed in the up-down direction, the center of the downstream end of the main catalyst 116 is also positioned rightward of the center of the upstream end of the main catalyst 116. When viewed in the up-down direction, the virtual linear line f31 and the virtual linear line f32 are both inclined with respect to the front-rear direction and the left-right direction. In other words, when viewed in the up-down direction, the virtual linear line f31 and the virtual linear line f32 are both extend in one direction (e.g., R direction in FIG. 10) vertical to the cylinder axis Cy3 and another direction (e.g., Re direction in FIG. 10) parallel with the cylinder axis Cy3.

When viewed in the up-down direction, the main catalyst 116 is provided in an area which at least partially overlaps a quadrangle S30. The quadrangle S30 is an area surrounded by sides (line segments) S31 to S34. The side S31 is a linear line segment which passes the center A31 of the downstream end 108b of the cylinder exhaust passage member 108 and is parallel to the cylinder axis Cy3. The side S32 is a linear line segment which passes the center A31 of the downstream end 108b of the cylinder exhaust passage member 108 and is parallel to the crankshaft axis Cr3. The side S33 is a linear line segment which passes the center A32 of the upstream end 112a of the silencer 112 and is parallel to the cylinder axis Cy3. The side S34 is a linear line segment which passes the center A32 of the upstream end 112a of the silencer 112 and is parallel to the crankshaft axis Cr3. In FIG. 10, when viewed in the up-down direction, the main catalyst 116 is positioned to partially overlap the area (quadrangle S30) formed of the sides S31 to S34.

The upstream oxygen detector 114 is provided on the exhaust pipe 111. The upstream oxygen detector 114 is provided upstream of the main catalyst 116. The upstream oxygen detector 114 is a sensor configured to detect the oxygen density in the exhaust gas. The structure of the upstream oxygen detector 114 is identical to that of the upstream oxygen detector of Embodiment 1.

As described above, in the motorcycle 80 of Embodiment 2, the downstream end 108b of the cylinder exhaust passage member 108, the upstream end 112a of the silencer 112, and the main catalyst 116 are disposed to satisfy the positional relationship explained n Embodiment 1. Apart from the above, the arrangements of the components are similar to those in the motorcycle 1 of Embodiment 1. The arrangements similar to those in Embodiment 1 exert effects similar to those described in Embodiment 1.

### (Embodiment 3)

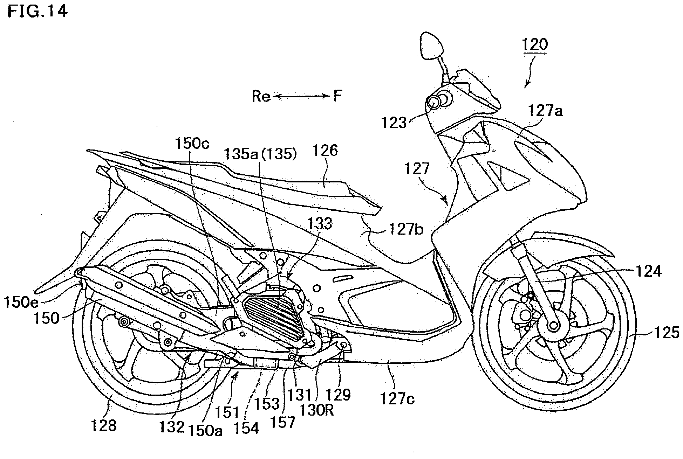

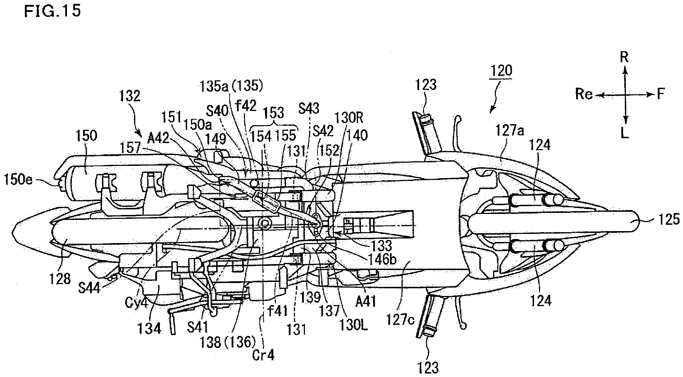

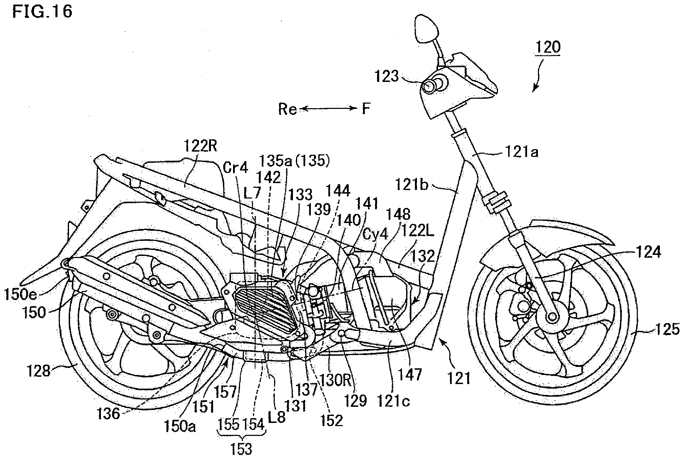

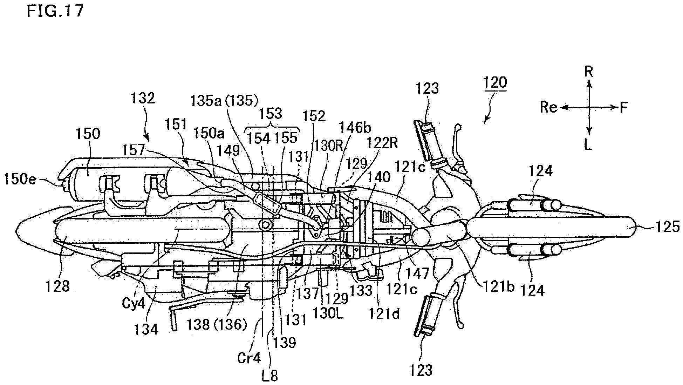

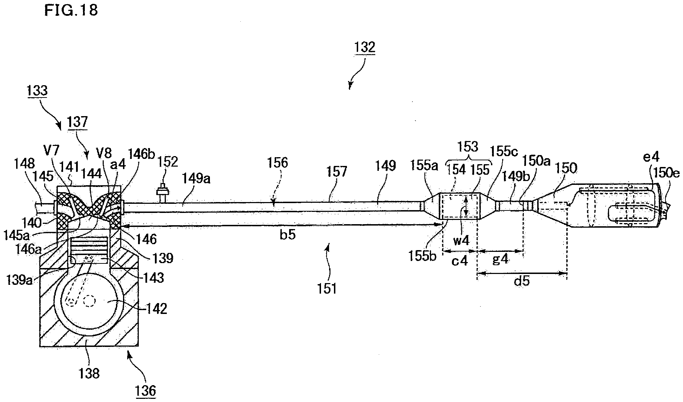

FIG. 14 is a side view of a motorcycle related to Embodiment 3 of the present teaching. FIG. 15 is a bottom view of the motorcycle of Embodiment 3. FIG. 16 is a side view showing a state in which a vehicle body cover, etc. have been removed from the motorcycle of Embodiment 3. FIG. 17 is a bottom view showing the state in which the vehicle body cover, etc. have been removed from the motorcycle of Embodiment 3. FIG. 18 is a schematic diagram of an engine and an exhaust system of the motorcycle of Embodiment 3.

A straddled vehicle of Embodiment 3 is a so-called sport-scooter-type motorcycle 120. As shown in FIG. 16, the motorcycle 120 is provided with a vehicle body frame 121. The vehicle body frame 121 includes a head pipe 121a, a main frame 121b, a right seat rail 122R, a left seat rail 122L, paired left and right under frames 121c, and a crosswise member 121d (see FIG. 17). The main frame 121b extends rearward and downward from the head pipe 121a. From ends at intermediate parts of the main frame 121b to the other ends, the under frames 121c extend rearward and downward and are then curved downward and extend downward in a substantially horizontal direction. As shown in FIG. 17, the crosswise member 121d is connected to the left and right under frames 121c. The crosswise member 121d extends in the left-right direction. As shown in FIG. 16, the left seat rail 122L extends rearward and upward from an intermediate portion of the main frame 121b. As shown in FIG. 17, the right seat rail 122R is connected to a right end portion of the crosswise member 121d. As shown in FIG. 16, from an end on the crosswise member 121d side to the other end, the right seat rail 122R extends upward and is then curved rearward. A rear portion of the right seat rail 122R extends substantially parallel with the left seat rail 122L.

A steering shaft is rotatably inserted into the head pipe 121a. A handlebar 123 is provided at an upper part of the steering shaft. A display (not illustrated) is provided in the vicinity of the handlebar 123. The display is configured to display vehicle speed, engine rotation speed, warnings, and the like.

Paired left and right front forks 124 are supported at a lower part of the steering shaft. The lower end portions of the front forks 124 support a front wheel 125 in a rotatable manner.

The left and right seat rails 122L and 122R support a seat 126 (see FIG. 14).

As shown in FIG. 14, the motorcycle 120 is provided with a vehicle body cover 127 which covers the vehicle body frame 121, etc. The vehicle body cover 127 includes a front cowling 127a, a main cover 127b, and an under cover 127c. The front cowling 127a covers the head pipe 121a and an upper part of the main frame 121b. The main cover 127b and the under cover 127c cover a lower part of the main frame 121b. The main cover 127b covers the right seat rail 122R and the left seat rail 122L. The under cover 127c covers the under frames 121c and the crosswise member 121d. The main cover 127b covers an air cleaner 147 (see FIG. 16) and a front portion of a subsequently-described engine main body 133. The air cleaner 147 is provided in front of the engine main body 133.

A unit-swinging single-cylinder four-stroke engine unit 132 is attached to the vehicle body frame 121. The single-cylinder four-stroke engine unit 132 includes the engine main body 133 and a power transmission unit 134 (see FIG. 15 and FIG. 17). The power transmission unit 134 is connected to a rear portion of the engine main body 133. The power transmission unit 134 is provided to the left of the engine main body 133. The power transmission unit 134 houses a transmission. The power transmission unit 134 supports a rear wheel 128 in a rotatable manner.

The engine main body 133 and the power transmission unit 134 are configured to be integrally swingable with respect to the vehicle body frame 121. To be more specific, as shown in FIG. 16 and FIG. 17, a right link component 130R and a left link component 130L are connected to left and right end portions of a lower part of the engine main body 133. The right link component 130R and the left link component 130L extend frontward from the engine main body 133. The leading end portions of the right link component 130R and the left link component 130L are rotatably connected to the vehicle body frame 121 (the under frames 121c) via pivot shafts 129. Furthermore, the right link component 130R and the left link component 130L are rotatably connected to the engine main body 133 via pivot shafts 131.

The single-cylinder four-stroke engine unit 132 is a water-cooled engine. The single-cylinder four-stroke engine unit 132 includes the engine main body 133, a water cooler 135, the power transmission unit 134, the air cleaner 147 (see FIG. 16 and FIG. 17), an intake pipe 148 (see FIG. 16), an exhaust pipe 149, a silencer 150, a main catalyst 154 (a single-combustion-chamber main catalyst), and an upstream oxygen detector 152 (a single-combustion-chamber upstream oxygen detector). The single-cylinder four-stroke engine unit 132 further includes an electronic control unit which is similar to the electronic control unit 45 of Embodiment 1. The electronic control unit controls the engine main body 133.

The water cooler 135 includes a radiator (not illustrated), a water pump (not illustrated), a fan (not illustrated), and a cover member 135a. The fan is provided to the right of a rear portion of the engine main body 133. The radiator is provided to the right of the fan. The cover member 135a covers the radiator from the right. Furthermore, the cover member 135a covers the radiator and the fan from above, below, front, and rear.

The engine main body 133 is a single-cylinder four-stroke engine. As shown in FIG. 16, the engine main body 133 includes a crankcase member 136 and a cylinder member (horizontal cylinder member) 137. The cylinder member 137 extends frontward from the crankcase member 136.

The crankcase member 136 includes a crankcase main body 138 and a crankshaft 142 or the like housed in the crankcase main body 138. The central axis (crankshaft axis) Cr4 of the crankshaft 142 extends in the left-right direction. Lubricating oil is stored in the crankcase main body 138. The oil is conveyed by an oil pump (not illustrated) and is circulated in the engine main body 133.

The fan of the water cooler 135 is connected to a right end portion of the crankshaft 142 to be rotatable in an integrated manner. The fan is driven by the rotation of the crankshaft 142. The fan generates an air flow for cooling the engine main body 133. To be more specific, air is introduced into the cover member 135a by the rotation of the fan. As heat exchange occurs between the introduced air and the coolant in the radiator, the coolant is cooled. The engine main body 133 is cooled by the cooled coolant.

The cylinder member 137 includes a cylinder body 139, a cylinder head 140, a head cover 141, and components housed in the members 139 to 141. As shown in FIG. 16 and FIG. 17, the cylinder body 139 is connected to a front portion of the crankcase main body 138. The cylinder head 140 is connected to a front portion of the cylinder body 139. As shown in FIG. 16, the head cover 141 is connected to a front portion of the cylinder head 140.

As shown in FIG. 18, a cylinder hole 139a is formed in the cylinder body 139. The cylinder hole 139a houses a piston 143 so that the piston 143 is able to reciprocate. The piston 143 is connected to the crankshaft 142 via a connecting rod. Hereinafter, the central axis Cy4 of the cylinder hole 139a is referred to as a cylinder axis Cy4. As shown in FIG. 16, the engine main body 133 is disposed so that the cylinder axis Cy4 extends in the front-rear direction. To be more specific, the direction in which the cylinder axis Cy4 extends from the crankcase member 136 to the cylinder member 137 is frontward and upward. The angle of inclination of the cylinder axis Cy4 with respect to the horizontal direction is 0 degrees or greater and 45 degrees or less.

As shown in FIG. 18, one combustion chamber 144 is formed in the cylinder member 137. The combustion chamber 144 is formed of an inner surface of the cylinder hole 139a of the cylinder body 139, the cylinder head 140, and the piston 143. As shown in FIG. 16, the combustion chamber 144 is positioned frontward of the crankshaft axis Cr4. In other words, a linear line which passes the crankshaft axis Cr4 and is parallel to the up-down direction is L7. When viewed in the left-right direction, the combustion chamber 144 is positioned in front of the linear line L7.

As shown in FIG. 18, a cylinder intake passage member 145 and a cylinder exhaust passage member 146 (a single-combustion-chamber cylinder exhaust passage member) are formed in the cylinder head 140. In the cylinder head 140, an intake port 145a and an exhaust port 146a are formed in a wall portion forming the combustion chamber 144. The cylinder intake passage member 145 extends from the intake port 145a to an inlet formed in the outer surface (upper surface) of the cylinder head 140. The cylinder exhaust passage member 146 extends from the exhaust port 146a to an outlet formed in the outer surface (lower surface) of the cylinder head 140. Air passes through the inside of the cylinder intake passage member 145 and is then supplied to the combustion chamber 144. Exhaust gas exhausted from the combustion chamber 144 passes through the cylinder exhaust passage member 146.

An intake valve V7 is provided in the cylinder intake passage member 145. An exhaust valve V8 is provided in the cylinder exhaust passage member 146. The intake port 145a is opened and closed by movement of the intake valve V7. The exhaust port 146a is opened and closed by movement of the exhaust valve V8. An intake pipe 148 is connected to an end portion (inlet) of the cylinder intake passage member 145. An exhaust pipe 149 is connected to an end portion (outlet) of the cylinder exhaust passage member 146. The path length of the cylinder exhaust passage member 146 is referred to as a4.

As shown in FIG. 17, the exhaust pipe 149 is connected to the lower surface of the cylinder head 140. When viewed from below, the upstream end of the exhaust pipe 149 is positioned between the right link component 130R and the left link component 130L. Furthermore, as shown in FIG. 16, when viewed in the left-right direction, a part of the exhaust pipe 149 is overlapped with the right link component 130R and the left link component 130L. The exhaust pipe 149 therefore passes between the right link component 130R and the left link component 130L.

The single-cylinder four-stroke engine unit 132 includes an ignition plug, a valve operating mechanism, an injector, and a throttle valve in the same manner as Embodiment 1. Furthermore, in the same manner as Embodiment 1, the single-cylinder four-stroke engine unit 132 includes sensors such as an engine rotation speed sensor and a throttle position sensor.

As described above, the single-cylinder four-stroke engine unit 132 includes the engine main body 133, the exhaust pipe 149, the silencer 150, the main catalyst 154, and the upstream oxygen detector 152. The exhaust pipe 149 includes an exhaust pipe member 157 which forms at least a part of the exhaust pipe 149. The exhaust pipe member 157 is a part of the exhaust pipe 149, which is exposed to the outside. The single-cylinder four-stroke engine unit 132 is provided with an exhauster 151. This exhauster 151 includes the exhaust pipe 149, the silencer 150, and the main catalyst 154. The silencer 150 is provided with a discharge port 150e which is exposed to the atmosphere. The path extending from the combustion chamber 144 to the discharge port 150e is referred to as an exhaust path 156 (see FIG. 14). The exhaust path 156 is formed of the cylinder exhaust passage member 146, the exhaust pipe 149, and the silencer 150. The exhaust path 156 is a space through which exhaust gas passes.

As shown in FIG. 18, the upstream end of the exhaust pipe 149 is connected to the downstream end 146b of the cylinder exhaust passage member 146. In other words, the upstream end of the exhaust pipe member 157 is connected to the downstream end 146b of the cylinder exhaust passage member 146. The exhaust pipe 149 is supported by the engine main body 133. The downstream end 146b of the cylinder exhaust passage member 146 is equivalent to an outlet of the cylinder exhaust passage member 146. The upstream end of the exhaust pipe 149 may be inserted into the cylinder exhaust passage member 146. The exhaust gas flows into the upstream end of the exhaust pipe 149. The downstream end of the exhaust pipe member 157 is connected to the silencer 150. A catalyst unit 153 is provided in the middle of the exhaust pipe member 157. A part of the exhaust pipe member 157, which is upstream of the catalyst unit 153, is referred to as an upstream exhaust pipe member 149a. A part of the exhaust pipe member 157, which is downstream of the catalyst unit 153, is referred to as a downstream exhaust pipe member 149b. While FIG. 18 depicts the exhaust pipe 149 (exhaust pipe member 157) as a linear pipe for simplification, the exhaust pipe 149 is not a linear pipe.

As shown in FIG. 15 and FIG. 17, most of the exhaust pipe 149 is provided in the right side part of the motorcycle 120. The upstream end of the exhaust pipe 149 is positioned at a substantially central part in the left-right direction of the motorcycle 120. As shown in FIG. 16, when viewed in the left-right direction, the upstream end of the exhaust pipe 149 is positioned frontward of the crankshaft axis Cr4. The downstream end of the exhaust pipe 149 is positioned rearward of the crankshaft axis Cr1. The exhaust pipe 149 is positioned partially below the crankshaft axis Cr4. The exhaust pipe 149 has two bended portions. The upstream one of the two bended portions is simply referred to as an upstream bended portion. The downstream one of the two bended portions is simply referred to as a downstream bended portion. When viewed in the left-right direction, the upstream bended portion changes the flow direction of the exhaust gas from a direction along the up-down direction to a direction along the front-rear direction. To be more specific, when viewed in the left-right direction, the upstream bended portion changes the flow direction of the exhaust gas - from downward to rearward and downward. When viewed in the left-right direction, the downstream bended portion changes the flow direction of the exhaust gas from rearward and downward to rearward. A part which is downstream of the downstream bended portion is positioned below the crankshaft axis Cr4. The main catalyst 154 is provided between the two bended portions.

The exhaust gas exhausted from the downstream end of the exhaust pipe 149 flows into the silencer 150. The upstream end 150a of the silencer 150 is connected to the downstream end of the exhaust pipe member 157. The silencer 150 allows the exhaust gas to flow from the downstream end of the exhaust pipe 149 to the discharge port 159e. The silencer 150 is configured to restrain pulsation in the exhaust gas. With this, the silencer 150 restrains the volume of the sound (exhaust sound) generated by the exhaust gas. Multiple expansion chambers and multiple pipes connecting the expansion chambers with one another are provided inside the silencer 150. The downstream end of the exhaust pipe 149 is provided inside an expansion chamber of the silencer 150. The downstream end of the exhaust pipe 149 may be connected to the upstream end 150a of the silencer 150. The discharge port 150e exposed to the atmosphere is provided at the downstream end of the silencer 150. As shown in FIG. 18, the path length of the exhaust path extending from the downstream end of the exhaust pipe 149 to the discharge port 150e is referred to as e4. The exhaust gas having passed the silencer 150 is discharged to the atmosphere via the discharge port 150e. As shown in FIG. 16, the discharge port 150e is rearward of the crankshaft axis Cr4.

The silencer 150 is supported by the engine main body 133. The silencer 150 is supported by the engine main body 133 via a connecting member 150c.

As shown in FIG. 15, when viewed in the up-down direction, the upstream end 150a of the silencer 150 and the downstream end 146b of the cylinder exhaust passage member 146 are distant from each other in the direction parallel to the cylinder axis Cy4. Furthermore, when viewed in the up-down direction, the upstream end 150a of the silencer 150 and the downstream end 146b of the cylinder exhaust passage member 146 are distant from each other in the direction vertical to the cylinder axis Cy4.

The main catalyst 154 is provided inside the exhaust pipe member 157. The catalyst unit 153 includes a hollow cylindrical casing 155 and the catalyst unit 153. The upstream end of the casing 155 is connected to the upstream exhaust pipe member 149a. The downstream end of the casing 155 is connected to the downstream exhaust pipe member 149b. The casing 155 forms a part of the exhaust pipe member 157. The main catalyst 154 is fixed to the inside of the casing 155. The exhaust gas is purified while passing through the main catalyst 154. All exhaust gas exhausted from the exhaust port 146a of the combustion chamber 144 passes through the main catalyst 154. The main catalyst 154 purifies the exhaust gas exhausted from the combustion chamber 144 most into the exhaust path 156.

The materials of the main catalyst 154 are identical to those of the main catalyst 39 of Embodiment 1. The main catalyst 154 has a porous structure. In the main catalyst 154, pores each of which is sufficiently narrower than the width of the path in the upstream exhaust pipe member 149a are formed. As shown in FIG. 18, the length of the main catalyst 154 in the path direction is referred to as c4. Furthermore, the maximum width of the main catalyst 154 in the direction orthogonal to the path direction is referred to as w4. The length c4 of the main catalyst 154 is longer than the maximum width w4 of the main catalyst 154.

As shown in FIG. 18, the casing 155 includes a catalyst-provided passage member 155b, an upstream passage member 155a, and a downstream passage member 155c. The main catalyst 154 is provided in the catalyst-provided passage member 155b. In the path direction, the upstream end and the downstream end of the catalyst-provided passage member 155b are respectively at the same positions as the upstream end and the downstream end of the main catalyst 154. The cross-sectional area of the catalyst-provided passage member 155b cut along the direction orthogonal to the path direction is substantially constant. The upstream passage member 155a is connected to the upstream end of the catalyst-provided passage member 155b. The downstream passage member 155c is connected to the upstream end of the catalyst-provided passage member 155b.

The upstream passage member 155a is at least partially tapered. The tapered part increases its inner diameter toward the downstream side. The downstream passage member 155c is at least partially tapered. The tapered part decreases its inner diameter toward the downstream side. The cross-sectional area of the catalyst-provided passage member 155b cut along the direction orthogonal to the path direction is referred to as B4. In at least a part of the upstream passage member 155a, the cross-sectional area of the upstream passage member 155a cut along the direction orthogonal to the path direction is smaller than the area B4. The at least part of the upstream passage member 155a includes the upstream end of the upstream passage member 155a. In at least a part of the downstream passage member 155c, the cross-sectional area of the downstream passage member 155c cut along the direction orthogonal to the path direction is smaller than the area B4. The at least part of the downstream passage member 155c includes the downstream end of the downstream passage member 155c.

As shown in FIG. 16, the main catalyst 154 is provided partially rearward of the crankshaft axis Cr4. In other words, when viewed in the left-right direction, the main catalyst 154 is provided partially behind the linear line L7. In addition to the above, the main catalyst 154 is provided partially frontward of the crankshaft axis Cr4. In other words, when viewed in the left-right direction, the main catalyst 154 is provided partially in front of the linear line L7. As described above, the linear line L7 is a linear line which passes the crankshaft axis Cr4 and extends in a direction parallel to the up-down direction. Furthermore, as shown in FIG. 16, when viewed in the left-right direction, the main catalyst 154 is positioned in front of (below) the cylinder axis Cy4.

As shown in FIG. 16, it is assumed that the linear line which is orthogonal to the cylinder axis Cy4 and orthogonal to the crankshaft axis Cr4 is L8. When viewed in the left-right direction, the main catalyst 154 is positioned partially behind the linear line L8. When viewed in the left-right direction, the main catalyst 154 is positioned partially in front of the linear line L8.

As shown in FIG. 18, the path length from the downstream end 146b of the cylinder exhaust passage member 146 to the upstream end of the main catalyst 154 is referred to as b5. The path length b5 is a path length of a passage member formed of the upstream exhaust pipe member 149a and the upstream passage member 155a of the catalyst unit 153. Furthermore, the path length from the downstream end of the main catalyst 154 to the downstream end of the exhaust pipe 149 is referred to as d5. Furthermore, the path length from the downstream end of the main catalyst 154 to the upstream end 150a of the silencer 150 is referred to as g4. The path length g4 is the path length of a passage member formed of the downstream passage member 155c of the catalyst unit 153 and the downstream exhaust pipe member 149b. The path length from the combustion chamber 144 to the upstream end of the main catalyst 154 is a4+b5. The path length from the downstream end of the main catalyst 154 to the discharge port 150e is d5+e4. The path length of the exhaust pipe member 157 is b5+c4+g4.

The main catalyst 154 is provided so that the path length g4 is shorter than the path length b5. The main catalyst 154 is provided so that the path length d5 is shorter than the path length b5. The main catalyst 154 is provided so that the path length g4 is shorter than the path length a4+b5. Furthermore, the main catalyst 154 is provided so that the path length d5 is shorter than the path length a4+b5. Furthermore, the main catalyst 154 is provided so that the path length d5+e4 is longer than the path length a4+b5.

As shown in FIG. 15, the center of the downstream end 146b of the cylinder exhaust passage member 146 is referred to as A41. Furthermore, the center of the upstream end 150a of the silencer 150 is referred to as A42. Furthermore, a virtual linear line connecting the center A41 with the center A42 is referred to as a virtual linear line f41. The virtual linear line f41 is inclined with respect to the cylinder axis Cy4 when viewed in the up-down direction.

A virtual linear line connecting the center of the upstream end and the center of the downstream end of the main catalyst 154 is referred to as a virtual linear line f42. The main catalyst 154 is positioned so that the virtual linear line f42 is inclined with respect to the cylinder axis Cy4 when viewed in the up-down direction.

The center A42 of the upstream end 150a of the silencer 150 is provided rightward of the center A41 of the downstream end 146b of the cylinder exhaust passage member 146 when viewed in the up-down direction. Furthermore, when viewed in the up-down direction, the center of the downstream end of the main catalyst 154 is also positioned rightward of the center of the upstream end of the main catalyst 154. When viewed in the up-down direction, the virtual linear line f41 and the virtual linear line f42 are both inclined with respect to the front-rear direction and the left-right direction. In other words, when viewed in the up-down direction, the virtual linear line f41 and the virtual linear line f42 extend in one direction (e.g., R direction in FIG. 15) vertical to the cylinder axis Cy4and another one direction (e.g., Re direction in FIG. 15) parallel with the cylinder axis Cy4.

When viewed in the up-down direction, the main catalyst 154 is provided in an area which at least partially overlaps a quadrangle S40. The quadrangle S40 is an area surrounded by sides (line segments) S41 to S44. The side S41 is a linear line segment which passes the center A41 of the downstream end 146b of the cylinder exhaust passage member 146 and is parallel to the cylinder axis Cy4. The side S42 is a linear line segment which passes the center A41 of the downstream end 146b of the cylinder exhaust passage member 146 and is parallel to the crankshaft axis Cr4. The side S43 is a linear line segment which passes the center A42 of the upstream end 150a of the silencer 150 and is parallel to the cylinder axis Cy4. The side S44 is a linear line segment which passes the center A42 of the upstream end 150a of the silencer 150 and is parallel to the crankshaft axis Cr4. In FIG. 15, when viewed in the up-down direction, the main catalyst 154 is positioned to partially overlap the area (quadrangle S40) formed of the sides S41 to S44.

The upstream oxygen detector 152 is provided on the exhaust pipe 149. The upstream oxygen detector 152 is provided upstream of the main catalyst 154. The upstream oxygen detector 152 is a sensor configured to detect the oxygen density in the exhaust gas. The structure of the upstream oxygen detector 152 is identical to that of the upstream oxygen detector of Embodiment 1.

As described above, in the motorcycle 120 of Embodiment 3, the downstream end 146b of the cylinder exhaust passage member 146, the upstream end 150a of the silencer 150, and the main catalyst 154 are disposed to satisfy the positional relationship explained in Embodiment 1. Apart from the above, the arrangements of the components are similar to those in the motorcycle 1 of Embodiment 1. The arrangements similar to those in Embodiment 1 exert effects similar to those described in Embodiment 1.

Preferred embodiments of the present teaching have been described above. However, the present teaching is not limited to the above-described embodiments, and various changes can be made within the scope of the claims. Further, modifications described below may be used in combination as needed.

In Embodiment 1 to Embodiment 3 above, the casing 40, 117, 155 of the catalyst unit 38, 115, 153 and the upstream exhaust pipe member 34a, 111a, 149a are joined with each other after they are independently formed. Alternatively, the casing 40, 117, 155 of the catalyst unit 38, 115, 153 and the upstream exhaust pipe member 34a, 111a, 149a may be integrally formed.

In Embodiment 1 to Embodiment 3 above, the casing 40, 117, 155 of the catalyst unit 38, 115, 153 and the downstream exhaust pipe member 34b, 111b, 149b are joined with each other after they are independently formed. Alternatively, the casing 40, 117, 155 of the catalyst unit 38, 115, 153 and the downstream exhaust pipe member 34b, 111b, 149b may be integrally formed.

The shape of the exhaust pipe 34 in Embodiment 1 above is not limited to the shape shown in FIG. 1 to FIG. 3. Furthermore, the internal structure of the silencer 35 is not limited to the structure indicated by the schematic diagram of FIG. 5. The same holds true for the exhaust pipes 111 and 149 and the silencers 112 and 150 in Embodiments 2 and 3 above.

In Embodiments 1 to 3 above, the main catalyst 39, 116, 154 and the silencer 35, 112, 150 are provided rightward of the center in the left-right direction of the motorcycle 1, 80, 120. Alternatively, the main catalyst and the silencer may be provided leftward of the center in the left-right direction of the motorcycle. The center in the left-right direction of the motorcycle indicates the position of a linear line which passes the center in the left-right direction of the front wheel and the center in the left-right direction of the rear wheel, when viewed in the up-down direction.

In Embodiments 1 to 3 above, a part of the exhaust pipe 34, 111, 149 is provided below the crankshaft axis Cr1, Cr3, Cr4. Alternatively, a part of the exhaust pipe may be provided above the combustion crankshaft axis.

The position of the main catalyst 39, 116, 154 is not limited to the position shown in each figure. However, the main catalyst 39, 116, 154 is provided inside the exhaust pipe member 42, 109, 157. Furthermore, when viewed in the up-down direction, the relationship between the virtual linear line f2, f32, f42 connecting upstream end and the downstream end of the main catalyst 39, 116, 154 and the virtual linear line f1, f31, f41 connecting the downstream end 31b, 108b, 146b of the cylinder exhaust passage member 31, 108, 146 and the upstream end 35a, 112a, 150a of the silencer 35, 112, 150 is arranged to be the relationship described in Embodiments 1 to 3. Furthermore, when viewed in the up-down direction, the main catalyst 39, 116, 154 is provided to at least partially overlap the quadrangle S10, S30, S40. The following describes specific modifications of the position of the main catalyst.

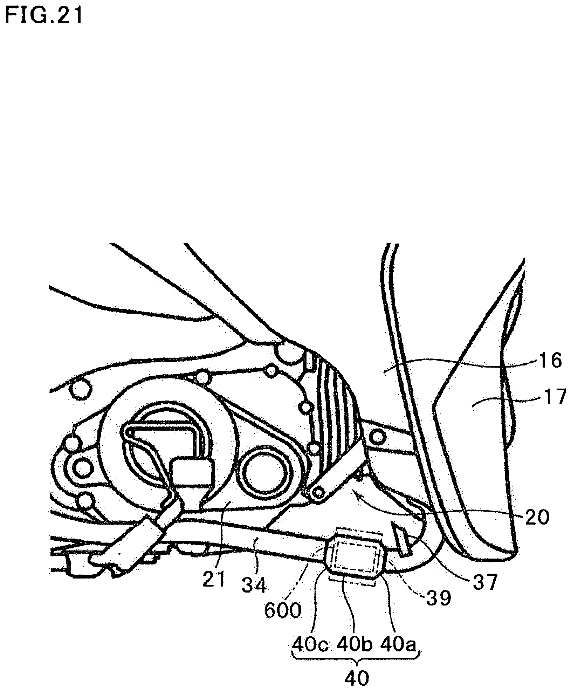

In Embodiments 1 to 3 above, the main catalyst 39, 116, 154 is provided partially frontward of the crankshaft axis Cr1, Cr3, Cr4 when viewed in the left-right direction. The main catalyst, however, may be positioned entirely frontward of the crankshaft axis Cr1, Cr3, Cr4. For example, as shown in FIG. 21, the main catalyst 39 is provided entirely frontward of the crankshaft axis Cr1.

The main catalyst 39, 116, 154 of Embodiments 1 to 3 above is provided partially behind the linear line L2, L6, L8 when viewed in the left-right direction. Alternatively, the main catalyst 39, 116, 154 may be provided entirely behind the linear line L2, L6, L8 when viewed in the left-right direction.

The main catalyst 39, 116, 154 of Embodiments 1 to 3 above is provided partially in front of the linear line L2, L6, L8 when viewed in the left-right direction. Alternatively, the main catalyst 39, 116, 154 may be provided entirely in front of the linear line L2, L6, L8 when viewed in the left-right direction.

The main catalyst 39 of Embodiment 1 above is provided so that the path length d1+e2 is longer than the path length a1+b1. Alternatively, the main catalyst 39 may be provided so that the path length d1+e2 is shorter than the path length a1+b1. The path length a1+b1 is the path length from the combustion chamber 29 to the upstream end of the main catalyst 39. The path length d1+e2 is the path length from the downstream end of the main catalyst 39 to the discharge port 35e. This modification may be used in the main catalysts 116 and 154 of Embodiments 2 and 3.

The main catalyst 39 of Embodiment 1 above is provided so that the path length g1 is shorter than the path length a1+b1. Alternatively, the main catalyst 39 may be provided so that the path length g1 is longer than the path length a1+b1. The path length a1+b1 is the path length from the combustion chamber 29 to the upstream end of the main catalyst 39. The path length g1 is a path length from the downstream end of the main catalyst 39 to the upstream end 35a of the silencer 35. This modification may be used in the main catalysts 116 and 154 of Embodiments 2 and 3.

In Embodiments 1 to 3 above, the number of catalysts provided in the single-cylinder four-stroke engine unit is one. In the present teaching, the number of catalysts provided in the single-cylinder four-stroke engine unit may be more than one. When multiple catalysts are provided, a catalyst which purifies the exhaust gas exhausted from the combustion chamber most into the exhaust path is equivalent to the single-combustion-chamber main catalyst of the present teaching. When the number of catalysts is one, the one catalyst is the single-combustion-chamber main catalyst of the present teaching.

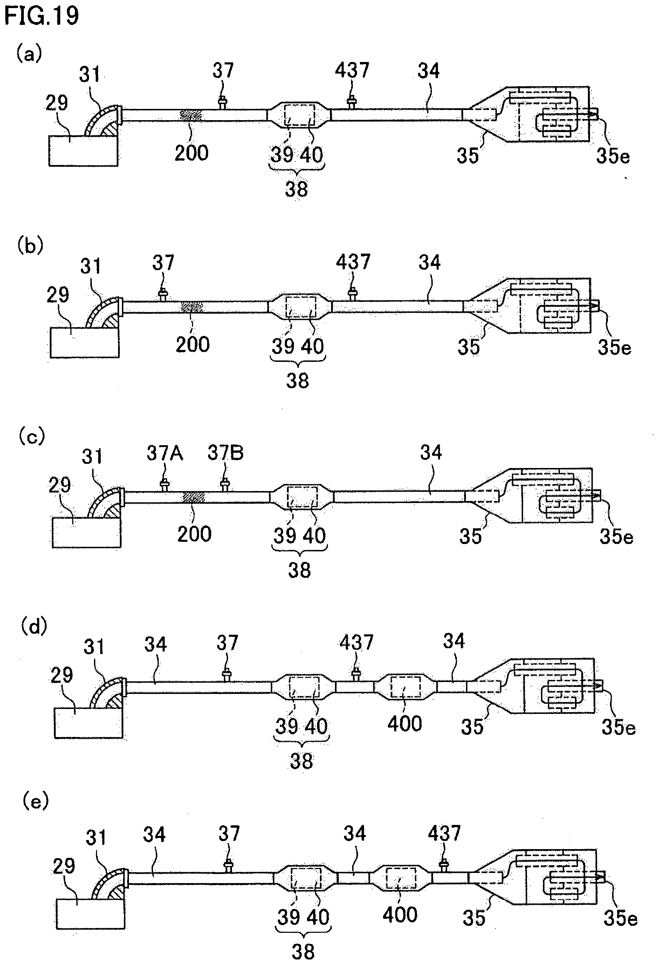

Upstream of the main catalyst, at least one upstream sub-catalyst (a single-combustion-chamber upstream sub-catalyst) may be provided. For example, as shown in FIG. 19(a), FIG. 19(b), and FIG. 19(c), an upstream sub-catalyst 200 is provided on the exhaust pipe 34. The upstream sub-catalyst 200 may be provided on the cylinder exhaust passage member.

The upstream sub-catalyst 200 may be formed solely of catalytic materials attached to an inner wall of the exhaust pipe 34. In such a case, the base to which the catalytic materials of the upstream sub-catalyst 200 are attached is the inner wall of the exhaust pipe 34. The upstream sub-catalyst 200 may include a base which is provided on the inner side of the exhaust pipe 34. In such a case, the upstream sub-catalyst 200 is formed of the base and the catalytic materials. The base of the upstream sub-catalyst 200 is, for example, plate-shaped. The plate-shaped base may be S-shaped, circular in shape, or C-shaped cross-sectionally in the direction orthogonal to the path direction. The upstream sub-catalyst 200 may have a porous structure.

The main catalyst 39 purifies the exhaust gas exhausted from the combustion chamber 29 most into the exhaust path 41. In other words, the main catalyst 39 more purifies the exhaust gas exhausted from the combustion chamber 29 in the exhaust path 41 than the upstream sub-catalyst 200. That is, the degree of contribution to the purification by the upstream sub-catalyst 200 of the exhaust gas is lower than that of the main catalyst 39.

The degree of contribution to the purification by the main catalyst 39 and the upstream sub-catalyst 200 may be measured by the following method. In the explanation of the measuring method, among the main catalyst 39 and the upstream sub-catalyst 200, a catalyst provided upstream is termed a front catalyst whereas a catalyst provided downstream is termed a rear catalyst. In other words, the upstream sub-catalyst 200 is the front catalyst whereas the main catalyst 39 is the rear catalyst. Hereinafter, an engine unit including a front catalyst and a rear catalyst is referred to as an engine unit of a modification.

The engine unit of modification is driven, and in a warm-up state, the density of harmful substances in the exhaust gas exhausted from the discharge port 35e is measured. The method of measuring the exhaust gas is in compliance with European regulations. In the warm-up state, the main catalyst 39 and the upstream sub-catalyst 200 are hot and activated. The main catalyst 39 and the upstream sub-catalyst 200 can therefore sufficiently exert their purification performances in the warm-up state.

Subsequently, the rear catalyst of the engine unit used in the experiment is detached, and only the base of the rear catalyst is attached. The engine unit in this state is assumed to be a measurement engine unit A. In a manner similar to the above, the density of harmful substances in the exhaust gas exhausted from the discharge port 35e in a warm-up state is measured.

Furthermore, the front catalyst of the measurement engine unit A is detached, and only the base of the front catalyst is attached. The engine unit in this state is assumed to be a measurement engine unit B. In a manner similar to the above, the density of harmful substances in the exhaust gas exhausted from the discharge port 35e in a warm-up state is measured. In a case where the upstream sub-catalyst 200 (front catalyst) is arranged such that catalytic materials are directly attached to the inner wall of the exhaust pipe 34, the exhaust pipe 34 is equivalent to the base. Attaching only the base of an upstream sub-catalyst 200 instead of attaching the above-described upstream sub-catalyst 200 is equivalent to not attaching catalytic materials to the inner wall of the exhaust pipe 34.

The measurement engine unit A includes the front catalyst and does not include the rear catalyst. The measurement engine unit B includes neither the front catalyst nor the rear catalyst. Due to this, the degree of contribution to the purification by the front catalyst (upstream sub-catalyst 200) is calculated as a difference between a measurement result from the measurement engine unit A and a measurement result from the measurement engine unit B. Furthermore, the degree of contribution to the purification by the rear catalyst (main catalyst 39) is calculated as a difference between a measurement result from the measurement engine unit A and a measurement result from the engine unit of Modification.

The purification capability of the upstream sub-catalyst 200 may be higher than or lower than that of the main catalyst 39. When the purification capability of the upstream sub-catalyst 200 is lower than the purification capability of the main catalyst 39, the purification rate of the exhaust gas when only the upstream sub-catalyst 200 is provided is lower than the purification rate of the exhaust gas when only the main catalyst 39 is provided.

In this modification, the upstream sub-catalyst 200 is provided upstream of the main catalyst 39. The upstream sub-catalyst 200 purifies the exhaust gas. Therefore the exhaust gas is purified in the upstream sub-catalyst 200 in addition to the main catalyst 39. The purification performance of the catalysts purifying the exhaust gas is therefore improved.

Downstream of the main catalyst, at least one downstream sub-catalyst (a single-combustion-chamber downstream sub-catalyst) may be provided. The downstream sub-catalyst may or may not have a porous structure. A specific example when the downstream sub-catalyst does not have a porous structure is identical to the specific example in the case of the upstream sub-catalyst 200. For example, as shown in FIG. 19(d) and FIG. 19(e), a downstream sub-catalyst 400 is provided on the exhaust pipe 34. The downstream sub-catalyst may be provided inside the silencer 35. The downstream sub-catalyst may be provided downstream of the downstream end of the exhaust pipe 34. When the downstream sub-catalyst is provided, the upstream sub-catalyst 200 may be provided upstream of the main catalyst.

Providing the downstream sub-catalyst downstream of the main catalyst produces the following effects. The exhaust gas is purified not only in the main catalyst but also in the downstream sub-catalyst. The purification performance of the catalysts purifying the exhaust gas is therefore further improved.

When the downstream sub-catalyst is provided downstream of the main catalyst, the main catalyst purifies the exhaust gas exhausted from the combustion chamber most into the exhaust path. The degree of contribution to the purification by each of the main catalyst and the downstream sub-catalyst can be measured by the measuring method recited in Modification 1. The front catalyst in the method recited in Modification 1 is deemed as a main catalyst, whereas the rear catalyst is deemed as a downstream sub-catalyst.

When the downstream sub-catalyst is provided downstream of the main catalyst, the purification capability of the downstream sub-catalyst may be higher than or lower than the purification capability of the main catalyst. In other words, the purification rate of the exhaust gas when only the downstream sub-catalyst is provided may be higher than or lower than the purification rate of the exhaust gas when only the main catalyst is provided.

When the downstream sub-catalyst is provided downstream of the main catalyst, the main catalyst rapidly deteriorates when compared to the downstream sub-catalyst. For this reason, even if the degree of contribution to the purification of the main catalyst is at first higher than that of the downstream sub-catalyst, the degree of contribution to the purification of the downstream sub-catalyst may become higher than that of the main catalyst when the accumulative mileage becomes great. The single-combustion-chamber main catalyst of the present teaching purifies the exhaust gas exhausted from the combustion chamber most into the exhaust path. This holds true before the reversal above occurs. In other words, the arrangement holds true before the accumulative mileage reaches a predetermined distance (e.g., 1000km).

In Embodiments 1 to 3 above, the main catalyst 39, 116, 154 is a three-way catalyst. The single-combustion-chamber main catalyst of the present teaching, however, may not be a three-way catalyst. The single-combustion-chamber main catalyst may be a catalyst which removes one or two of hydrocarbon, carbon monoxide, and nitrogen oxide. The single-combustion-chamber main catalyst may not be an oxidation reduction catalyst. The main catalyst may be an oxidation catalyst or a reduction catalyst which removes harmful substances by only oxidation or reduction. An example of the reduction catalyst is a catalyst which removes nitrogen oxide by reduction. This modification may be used in the upstream sub-catalyst and the downstream sub-catalyst.

In Embodiment 1 above, the length c1 in the path direction of the main catalyst 39 is longer than the maximum width w1 of the main catalyst 39. The same holds true for the main catalysts 116 and 154 of Embodiments 2 and 3 above. The single-combustion-chamber main catalyst of the present teaching may be arranged such that the length in the path direction is shorter than the maximum width in the direction vertical to the path direction. However, the single-combustion-chamber main catalyst of the present teaching is arranged so that the exhaust gas is purified most into the exhaust path. The exhaust path is a path extending from the combustion chamber to the discharge port exposed to the atmosphere.

The single-combustion-chamber main catalyst of the present teaching may consist of multiple catalysts provided to be close to one another. Each catalyst includes a base and a catalyst material. The catalysts are close to one another in the sense that the distance between neighboring catalysts is short, rather than the length of each catalyst is short in the path direction. The bases of the catalysts may be made of one type or multiple types of materials. The noble metal of the catalytic materials of the catalysts may be one type or multiple types of noble metals. The carriers of the catalytic materials may be made of one type or multiple types of materials. This modification may be used in the upstream sub-catalyst and the downstream sub-catalyst.

In Embodiments 1 to 3 above, the motorcycle 1, 80, 120 is provided with the upstream oxygen detector 37, 114, 152. In this regard, the motorcycle 1, 80, 120 may not be provided with the upstream oxygen detector 37, 114, 152.

The position of the upstream oxygen detector 37, 114, 152 (the single-combustion-chamber upstream oxygen detector) is not limited to the position shown in each figure. However, the upstream oxygen detector 37, 114, 152 must be provided upstream of the main catalyst 39, 116, 154. Furthermore, the number of the upstream oxygen detectors provided upstream of the main catalyst may be two or more. Subsequently, modifications of the position of the upstream oxygen detector are specifically described.

When the upstream sub-catalyst is provided upstream of the main catalyst, the upstream oxygen detector 37 is preferably provided upstream of the upstream sub-catalyst 200 as shown in FIG. 19(b), for example. However, when the upstream sub-catalyst 200 is provided upstream of the main catalyst 39, the position of the upstream oxygen detector 37 may be arranged as below. For example, as shown in FIG. 19(a), the upstream oxygen detector 37 may be provided downstream of the upstream sub-catalyst 200. Furthermore, for example, as shown in FIG. 19(c), upstream oxygen detectors 37A and 37B may be provided upstream and downstream of the upstream sub-catalyst 200, respectively. The upstream oxygen detector 37A is provided upstream of the upstream sub-catalyst 200. The upstream oxygen detector 37B is provided downstream of the main catalyst upstream sub-catalyst 200 and upstream of the main catalyst 39.

Downstream of the main catalyst, at least one downstream oxygen detector (a single-combustion-chamber downstream oxygen detector) may be provided. The specific structure of the downstream oxygen detector is identical to that of the upstream oxygen detector 37 of Embodiment 1 above. For example, as shown in FIG. 19(a), FIG. 19(b), FIG. 19(d), and FIG. 19(e), a downstream oxygen detector 437 may be provided on the exhaust pipe 34. Alternatively, the downstream oxygen detector may be provided on the silencer 35. The downstream oxygen detector may be provided so that the detection target is exhaust gas downstream of the downstream end of the exhaust pipe 34. When the main catalyst is provided on the cylinder exhaust passage member, the downstream oxygen detector may be provided on the cylinder exhaust passage member.

When a downstream sub-catalyst 400 is provided downstream of the main catalyst 39, the position of the downstream oxygen detector 437 may be one of the following two positions. For example, as shown in FIG. 19(d), the downstream oxygen detector 437 is provided downstream of the main catalyst 39 and upstream of the downstream sub-catalyst 400. Furthermore, for example, as shown in FIG. 19(e), the downstream oxygen detector 437 is provided downstream of the downstream sub-catalyst 400. Alternatively, the downstream oxygen detectors may be provided upstream and downstream of the downstream sub-catalyst 400, respectively.

When the downstream oxygen detector is provided downstream of the main catalyst, the electronic control unit (controller) processes a signal from the downstream oxygen detector. The electronic control unit (controller) may determine the purification capability of the main catalyst based on a signal from the downstream oxygen detector. Alternatively, the electronic control unit (controller) may determine the purification capability of the main catalyst based on a signal from the upstream oxygen detector and a signal from the downstream oxygen detector. Furthermore, the electronic control unit (controller) may perform combustion control based on a signal from the upstream oxygen detector and a signal from the downstream oxygen detector.

The following describes an example of how the purification capability of the main catalyst is specifically determined based on a signal from the downstream oxygen detector. To begin with, a fuel injection amount is controlled so that the gas mixture repeatedly and alternately changes between rich and lean. Then the delay of a change in a signal from the downstream oxygen detector due to a change in the fuel injection amount is detected. When the change in the signal from the downstream oxygen detector is significantly delayed, it is determined that the purification capability of the main catalyst is lower than a predetermined level. In this case, a signal is sent from the electronic control unit to the display. A warning lamp (not illustrated) of the display is turned on. This prompts the rider to replace the main catalyst.

As such, the deterioration of the main catalyst is detectable by means of a signal from the downstream oxygen detector provided downstream of the main catalyst. This makes it possible to suggest the replacement of the main catalyst by providing information before the deterioration of the main catalyst reaches a predetermined level. The initial performance of the straddled vehicle in connection with the exhaust gas purification is therefore maintained for a long time.

The following describes an example of how the purification capability of the main catalyst is specifically determined based on a signal from the upstream oxygen detector and a signal from the downstream oxygen detector. For example, the purification capability of the main catalyst may be determined by comparing a change in a signal from the upstream oxygen detector with a change in a signal from the downstream oxygen detector. The degree of deterioration of the main catalyst is more precisely detectable when signals from two oxygen detectors upstream and downstream of the main catalyst, respectively, are used. It is therefore possible to suggest the replacement of the single-combustion-chamber main catalyst at a more suitable time as compared to cases where the deterioration of the main catalyst is determined based solely on a signal from the downstream oxygen detector. One main catalyst can therefore be used for a longer time while the initial performance of the vehicle in connection with the exhaust gas purification is maintained.

The following describes an example of how combustion control is specifically carried out based on a signal from the upstream oxygen detector and a signal from the downstream oxygen detector. To begin with, in a manner similar to Embodiment 1 above, a basic fuel injection amount is corrected based on a signal from the upstream oxygen detector 37 and fuel is injected from the injector 48. The exhaust gas generated due to the combustion of the fuel is detected by the downstream oxygen detector. The fuel injection amount is then corrected based on a signal from the downstream oxygen detector. In this way, a deviation of the air-fuel ratio of the gas mixture from a target air-fuel ratio is further restrained.

The actual state of purification by the main catalyst is understood by using signals from two oxygen detectors provided upstream and downstream of the main catalyst. Due to this, the precision of the fuel control is improved when the fuel control is carried out based on signals from two oxygen detectors. Furthermore, the upstream oxygen detector stably detects the oxygen density in the exhaust gas. The precision of the fuel control is therefore further improved. For this reason, the progress of the deterioration of the main catalyst can be restrained. The initial performance of the straddled vehicle in connection with the exhaust gas purification can therefore be maintained for a longer time.

In Embodiment 1 above, the ignition timing and the fuel injection amount are controlled based on a signal from the upstream oxygen detector 37. This applies to Embodiments 2 to 3 above. However, the control process based on a signal from the upstream oxygen detector 37 is not particularly limited, and may be carried out for only one of the ignition timing and the fuel injection amount. Furthermore, the control process based on a signal from the upstream oxygen detector 37 may include a control process other than the above.

The upstream oxygen detector 37, 114, 152 may include a heater. The detecting portion of the upstream oxygen detector 37, 114, 152 is able to detect the oxygen density when it is heated to a high temperature and activated. Due to this, when the upstream oxygen detector 37, 114, 152 includes the heater, the detection portion is able to detect oxygen more rapidly as the heater heats the detecting portion at the same time as the start of the engine running. When the downstream oxygen detector is provided downstream of the main catalyst, the modification may be used in the downstream oxygen detector.

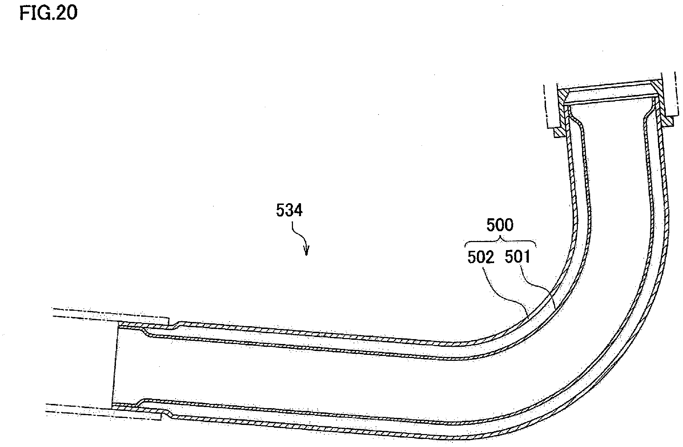

At least a part of the exhaust pipe, which is upstream of the main catalyst, may be formed of a multi-walled pipe. The multi-walled pipe includes an inner pipe and at least one outer pipe which covers the inner pipe. FIG. 20 shows an example in which at least a part of an exhaust pipe 534, which is upstream of the main catalyst, is formed of a double-walled pipe 500. As shown in FIG. 20, for example, at least a part of an exhaust pipe 534, which is upstream of the main catalyst, may be formed of a double-walled pipe. The double-walled pipe 500 includes an inner pipe 501 and an outer pipe 502 covering the inner pipe 501. In FIG. 20, the inner pipe 501 and the outer pipe 502 are in contact with each other only at end portions. The inner pipe and the outer pipe of the multi-walled pipe may be in contact with each other at a portion other than the end portions. For example, the inner pipe and the outer pipe may be in contact with each other at a bended portion. The contact area is preferably smaller than the non-contact area. The inner pipe and the outer pipe may be entirely in contact with each other. When an exhaust pipe includes a multi-walled pipe, an upstream oxygen detector is preferably provided in the middle of or downstream of the multi-walled pipe. The multi-walled pipe restrains the decrease in the temperature of the exhaust gas. The purification performance of the main catalyst purifying the exhaust gas is therefore improved.

For example, as shown in FIG. 21, at least a part of the outer surface of the catalyst-provided passage member 40b may be covered with a catalyst protector 600. The catalyst protector 600 is formed to be substantially cylindrical in shape. The catalyst protector 600 protects the catalyst-provided passage member 40b and the main catalyst 39. Furthermore, the catalyst protector 600 improve the appearance. This modification may be used in Embodiments 2 and 3 above.

In Embodiments 1 to 3 above, gas flowing in the exhaust path 41, 118, 156 during engine running is only the exhaust gas exhausted from the combustion chamber 29, 106, 144. In this regard, the single-cylinder four-stroke engine unit of the present teaching may include a secondary air supply mechanism which is configured to supply air to the exhaust path. A known arrangement is used for the specific arrangement of the secondary air supply mechanism. The secondary air supply mechanism may forcibly supply air to the exhaust path by means of an air pump. Furthermore, the secondary air supply mechanism may take air into the exhaust path by means of a negative pressure in the exhaust path. In this case, the secondary air supply mechanism includes a reed valve which is opened and closed in accordance with pressure pulsation by the exhaust gas. When the secondary air supply mechanism is included, the upstream oxygen detector may be provided upstream or downstream of a position of air inflow.

In Embodiments 1 to 3 above, the injector is provided to supply fuel to the combustion chamber 29, 106, 144. A fuel supplier for supplying fuel to the combustion chamber is not limited to the injector. For example, a fuel supplier configured to supply fuel to the combustion chamber by a negative pressure may be provided.

In Embodiments 1 to 3 above, only one exhaust port 31a, 108a, 146a is provided for one combustion chamber 29, 106, 144. Alternatively, multiple exhaust ports may be provided for one combustion chamber. For example, this modification applies to cases where a variable valve mechanism is included. The exhaust paths extending from the respective exhaust ports are gathered at a location upstream of the main catalyst. The exhaust paths extending from the respective exhaust ports are preferably gathered at the cylinder member.

The combustion chamber of the present teaching may include a main combustion chamber and an auxiliary combustion chamber connected to the main combustion chamber. In this case, one combustion chamber is formed of the main combustion chamber and the auxiliary combustion chamber.

In Embodiments 1 to 3 above, the entirety of the combustion chamber 29, 106, 144 is positioned frontward of the crankshaft axis Cr1, Cr3, Cr4. The combustion chamber of the present teaching, however, may be differently positioned on condition that at least a part thereof is positioned frontward of the crankshaft axis. In other words, a part of the combustion chamber may be provided rearward of the crankshaft axis. This modification is applicable when the cylinder axis extends in the up-down direction.

In Embodiments 1 to 3 above, the crankcase main body 23, 100, 138 and the cylinder body 24, 101, 139 are different members. Alternatively, the crankcase main body and the cylinder body may be integrally formed. In Embodiments 1 to 3 above, the cylinder body 24, 101, 139, the cylinder head 25, 102, 140, and the head cover 26, 103, 141 are different members. Alternatively, two or three of the cylinder body, the cylinder head, and the head cover may be integrally formed.

In Embodiments 1 to 3 above, the motorcycle is exemplified as the straddled vehicle including the single-cylinder four-stroke engine unit. The straddled vehicle of the present teaching, however, may be any type of straddled vehicle on condition that the straddled vehicle is moved by the power of a single-cylinder four-stroke engine unit. The straddled vehicle of the present teaching may be a straddled vehicle which is not a motorcycle, The straddled vehicle indicates all types of vehicles on which a rider rides in a manner of straddling a saddle. The straddled vehicle includes motorcycles, tricycles, four-wheeled buggies (ATVs: All Terrain Vehicles), personal water crafts, snowmobiles, and the like.

The single-cylinder four-stroke engine units 93 and 132 of Embodiments 2 and 3 above are of a unit-swing type. The engine main body 94, 133 is arranged to be swingable with respect to the vehicle body frame 81, 121. Due to this, the position of the crankshaft axis Cr3, Cr4 with respect to the main catalyst 116, 154 changes in accordance with the running state. In this specification and the present teaching, the expression "the main catalyst is positioned in front of the crankshaft axis" indicates that the main catalyst is positioned in front of the crankshaft axis when the engine main body is at a position within a movable range. The positional relations other than this are also realized within the movable range of the engine main body.

In this specification and the present teaching, the upstream end of the main catalyst is an end of the main catalyst, at which the path length from the combustion chamber is the shortest. The downstream end of the main catalyst indicates an end of the main catalyst, at which the path length from the combustion chamber is the longest. The upstream ends and the downstream ends of elements other than the main catalyst are similarly defined, too.

In this specification and the present teaching, a passage member indicates walls and the like which form a path by surrounding the path. A path indicates a space through which a target passes. The exhaust passage member indicates walls or the like which form the exhaust path by surrounding the exhaust path. The exhaust path indicates a space through which exhaust gas passes.

In this specification and the present teaching, the path length of the exhaust path indicates the path length of the center of the exhaust path. The path length of the expansion chamber in the silencer indicates the length of the path which connects the center of the inflow port of the expansion chamber with the center of the outflow port of the expansion chamber in the shortest distance.

Specifically, the path direction indicates the direction of the path which passes the center of the exhaust path and the direction in which the exhaust gas flows.

This specification uses an expression "the cross-sectional area of the passage member cut along the direction orthogonal to the path direction". Furthermore, the specification and the present teaching use an expression "the cross-sectional area of the passage member cut along the direction orthogonal to the flow direction of the exhaust gas". The cross-sectional area of the passage member may be the area of the inner circumferential surface of the passage member or the area of the outer circumferential surface of the passage member.

In this specification and the present teaching, expressions that a member or a linear line extends in a direction A and a direction along the direction A are not limited to cases where the member or the linear line is parallel to the direction A. The expression that a member or a linear line extends in a direction A includes cases where the member or the linear line intersects with the direction A at an angle which falls within the range from -45 degrees to 45 degrees, and the expression that a direction is along a direction A includes cases where the direction intersects with the direction A at an angle which falls within the range from -45 degrees to 45 degrees. The direction A does not indicate any specific direction. The direction A may be the horizontal direction or the front-rear direction.

The crankcase main bodies 23, 100, and 138 of this specification are equivalent to the crankcase members 18, 95, and 135 of the specification of the basic application of the subject application, respectively. The cylinder bodies 24, 101, and 139 of this specification are equivalent to the cylinder members 24, 96, and 136 of the specification of the basic application above, respectively. The engine main bodies 20, 94, and 133 of this specification are equivalent to the engines 20, 93, and 131 of the specification of the basic application above, respectively. The cylinder exhaust passage member 31 of this specification is equivalent to the passage member forming the passage for exhaust gas in the specification of the basic application above.

### [Reference Signs List]

1, 80, 120 motorcycle (straddled vehicle)
2, 81, 121 vehicle body frame
19, 93, 132 single-cylinder four-stroke engine unit
20, 94, 133 engine main body
21, 98, 136 crankcase member
22, 99, 137 cylinder member (horizontal cylinder member)
24a, 101a, 139a cylinder hole
27, 104, 142 crankshaft
28, 105, 143 piston
29, 106, 144 combustion chamber
31, 108, 146 cylinder exhaust passage member (single-combustion-chamber cylinder exhaust passage member)
31b, 108b, 146b downstream end
34, 111, 149, 234, 534 exhaust pipe (single-combustion-chamber exhaust pipe)
35, 112, 150 silencer
35a, 112a, 150a upstream end
35e, 112e, 150e discharge port
36, 113, 151 exhauster
37, 114, 152 upstream oxygen detector (single-combustion-chamber upstream oxygen detector)
38, 115, 153 catalyst unit
39, 116, 154 main catalyst (single-combustion-chamber main catalyst)
40a, 117a, 155a upstream passage member
40b, 117b, 155b catalyst-provided passage member
40c, 117c, 155c downstream passage member
41, 118, 156 exhaust path
42, 109, 157 exhaust pipe member (single-combustion-chamber exhaust pipe member)
200 upstream sub-catalyst (single-combustion-chamber upstream sub-catalyst)
400 downstream sub-catalyst (single-combustion-chamber downstream sub-catalyst)
437 downstream oxygen detector (single-combustion-chamber downstream oxygen detector)
500 double-walled pipe (multi-walled pipe)
501 inner pipe
502 outer pipe
600 catalyst protector
Cr1, Cr3, Cr4 crankshaft axis (central axis of crankshaft)
Cy1, Cy3, Cy4 cylinder axis (central axis of cylinder hole)
L2, L6, L8 linear line orthogonal to crankshaft axis and cylinder axis

## Claims

1. A straddled vehicle (1, 80, 120) comprising a single-cylinder four-stroke engine unit, the single-cylinder four-stroke engine unit comprising:
an engine main body (20, 94, 133) including a crankcase member (21, 98, 136) and a horizontal cylinder member (22, 99, 137), the crankcase member (21, 98, 136) including a crankshaft (27, 104, 142) extending in a left-right direction of the straddled vehicle, and the horizontal cylinder member (22, 99, 137) including one combustion chamber (29, 106, 144) which is partially formed of an inner surface of a cylinder hole (24a, 101a, 139a) and a single-combustion-chamber cylinder exhaust passage member (31, 108, 146) in which exhaust gas exhausted from the one combustion chamber (29, 106, 144) flows is formed, a central axis (Cy1, Cy3, Cy4) of the cylinder hole (24a, 101a, 139a) extending in a front-rear direction of the straddled vehicle;
a single-combustion-chamber exhaust pipe (34, 111, 149, 234, 534) which forms a part of an exhauster (36, 113, 151), the single-combustion-chamber exhaust pipe (34, 111, 149, 234, 534) including, at least at a part thereof, a single-combustion-chamber exhaust pipe member (42, 109, 157) having an upstream end connected to a downstream end (31b, 108b, 146b) of the single-combustion-chamber cylinder exhaust passage member (31, 108, 146);
a single-combustion-chamber silencer (35, 112, 150) including a discharge port (35e, 112e, 150e) exposed to the atmosphere and connected to the downstream end of the single-combustion-chamber exhaust pipe member (42, 109, 157), the single-combustion-chamber silencer (35, 112, 150) being configured to restrain sound generated by the exhaust gas by allowing the exhaust gas to flow from the downstream end of the single-combustion-chamber exhaust pipe (34, 111, 149, 234, 534) to the discharge port (35e, 112e, 150e), the single-combustion-chamber silencer (35, 112, 150) being arranged so that, when the straddled vehicle is viewed in an up-down direction, an upstream end (35a, 112a, 150a) of the single-combustion-chamber silencer (35, 112, 150) is distant from the downstream end (31b, 108b, 146b) of the single-combustion-chamber cylinder exhaust passage member (31, 108, 146) in a direction parallel with the central axis (Cy1, Cy3, Cy4) of the cylinder hole (24a, 101a, 139a) and in a direction vertical to the central axis (Cy1, Cy3, Cy4) of the cylinder hole (24a, 101a, 139a), and the single-combustion-chamber silencer (35, 112, 150) constituting a part of the exhauster (36, 113, 151); and
a single-combustion-chamber main catalyst (39, 116, 154) provided in the single-combustion-chamber exhaust pipe member (42, 109, 157), the single-combustion-chamber main catalyst (39, 116, 154) purifying the exhaust gas exhausted from the one combustion chamber (29, 106, 144) most in an exhaust path (41, 118, 156) extending from the one combustion chamber (29, 106, 144) to the discharge port (35e, 112e, 150e), and the single-combustion-chamber main catalyst (39, 116, 154) constituting a part of the exhauster (36, 113, 151), the single-combustion-chamber main catalyst (39, 116, 154) is arranged such that,
when the straddled vehicle is viewed in the up-down direction, an upstream end and a downstream end of the single-combustion-chamber main catalyst (39, 116, 154) are distant from each other in a direction in parallel to the central axis (Cy1, Cy3, Cy4) of the cylinder hole (24a, 101a, 139a) and in a direction orthogonal to the central axis (Cy1, Cy3, Cy4) of the cylinder hole (24a, 101a, 139a),
when the straddled vehicle is viewed in the up-down direction, the center of the upstream end (35a, 112a, 150a) of the single-combustion-chamber silencer (35, 112, 150) is positioned one of leftward and rightward of the center of the downstream end (31b, 108b, 146b) of the single-combustion-chamber cylinder exhaust passage member (31, 108, 146) in a left-right direction of the straddled vehicle,
when the straddled vehicle is viewed in the up-down direction, the center of the downstream end of the single-combustion-chamber main catalyst (39, 116, 154) is positioned the one of leftward and rightward of the center of the upstream end of the single-combustion-chamber main catalyst (39, 116, 154) in the left-right direction of the straddled vehicle, and
when the straddled vehicle is viewed in the up-down direction, the single-combustion-chamber main catalyst (39, 116, 154) being provided to at least partially overlap a quadrangle (S10) formed of a linear line (S11) which passes the downstream end (31b, 108b, 146b) of the single-combustion-chamber cylinder exhaust passage member (31, 108, 146) and is parallel to the central axis (Cy1, Cy3, Cy4) of the cylinder hole (24a, 101a, 139a), a linear line (S12) which passes the downstream end (31b, 108b, 146b) of the single-combustion-chamber cylinder exhaust passage member (31, 108, 146) and is parallel to the central axis (Cr1, Cr3, Cr4) of the crankshaft (27, 104, 142), a linear line (S13) which passes the upstream end (35a, 112a, 150a) of the single-combustion-chamber silencer (35, 112, 150) and is parallel to the central axis (Cy1, Cy3, Cy4) of the cylinder hole (24a, 101a, 139a), and a linear line (S14) which passes the upstream end (35a, 112a, 150a) of the single-combustion-chamber silencer (35, 112, 150) and is parallel to the central axis (Cr1, Cr3, Cr4) of the crankshaft (27, 104, 142),
wherein the single-combustion-chamber main catalyst (39, 116, 154) is provided so that a path length (g1, g3, g4) from the downstream end of the single-combustion-chamber main catalyst (39, 116, 154) to the upstream end (35a, 112a, 150a) of the single-combustion-chamber silencer (35, 112, 150) is shorter than a path length (b1, b4, b5) from the downstream end (31b, 108b, 146b) of the single-combustion-chamber cylinder exhaust passage member (31, 108, 146) to the upstream end of the single-combustion-chamber main catalyst (39, 116, 154) so that it is possible to utilize the supporting structure that supports the single-combustion-chamber silencer (35, 112, 150) as the supporting structure to support the single-combustion-chamber main catalyst (39, 116, 154),
**characterized in that**
the single-combustion-chamber main catalyst (39, 116, 154) is provided at least partially frontward of the central axis (Cr1, Cr3, Cr4) of the crankshaft (27, 104, 142) in the front-rear direction of the straddled vehicle.

2. The straddled vehicle according to claim 1, wherein
the single-combustion-chamber exhaust pipe member (42, 109, 157) includes a catalyst-provided passage member (40b, 117b, 155b) in which the single-combustion-chamber main catalyst (39, 116, 154) is provided and an upstream passage member (40a, 117a, 155a) connected to an upstream end of the catalyst-provided passage member (40b, 117b, 155b), and
a cross-sectional area of the catalyst-provided passage member (40b, 117b, 155b) cut along the direction orthogonal to the flow direction of the exhaust gas is larger than a cross-sectional area of at least a part of the upstream passage member (40a, 117a, 155a) cut along a direction orthogonal to the flow direction of the exhaust gas.

3. The straddled vehicle according to claim 1 or 2, wherein
the single-combustion-chamber main catalyst (39, 116, 154) is provided so that the path length (g1, g3, g4) from the downstream end of the single-combustion-chamber main catalyst (39, 116, 154) to the upstream end (35a, 112a, 150a) of the single-combustion-chamber silencer (35, 112, 150) is shorter than a path length (a1+b1, a3+b3, a4+b4) from the one combustion chamber (29, 106, 144) to the upstream end of the single-combustion-chamber main catalyst (39, 116, 154).

4. The straddled vehicle according to any one of claims 1 to 3, wherein
the single-combustion-chamber main catalyst (39, 116, 154) is provided at least partially rearward of the central axis (Cr1, Cr3, Cr4) of the crankshaft (27, 104, 142) in the front-rear direction of the straddled vehicle.

5. The straddled vehicle according to any one of claims 1 to 4, wherein
the single-combustion-chamber main catalyst (39, 116, 154) is provided at least partially behind a linear line (L2, L6, L8) orthogonal to the central axis (Cy1, Cy3, Cy4) of the cylinder hole (24a, 101a, 139a) and orthogonal to the central axis (Cr1, Cr3, Cr4) of the crankshaft (27, 104, 142), in the front-rear direction of the straddled vehicle.

6. The straddled vehicle according to any one of claims 1 to 5, wherein
the single-combustion-chamber main catalyst (39, 116, 154) is provided at least partially in front of a linear line (L2, L6, L8) orthogonal to the central axis (Cy1, Cy3, Cy4) of the cylinder hole (24a, 101a, 139a) and orthogonal to the central axis (Cr1, Cr3, Cr4) of the crankshaft (27, 104, 142), in the front-rear direction of the straddled vehicle.

7. The straddled vehicle according to any one of claims 1 to 6, wherein
the single-combustion-chamber exhaust pipe member (42, 109, 157) includes a catalyst-provided passage member (40b, 117b, 155b) in which the single-combustion-chamber main catalyst (39, 116, 154) is provided, and
the single-cylinder four-stroke engine unit includes a catalyst protector (600) which at least partially covers an outer surface of the catalyst-provided passage member (40b, 117b, 155b).

8. The straddled vehicle according to any one of claims 1 to 7, wherein
at least a part of the single-combustion-chamber exhaust pipe member (42, 109, 157), which is upstream in the flow direction of the single-combustion-chamber main catalyst (39, 116, 154), is formed of a multi-walled pipe (500) which includes an inner pipe (501) and at least one outer pipe (502) covering the inner pipe (501).

9. The straddled vehicle according to any one of claims 1 to 8, wherein, the single-cylinder four-stroke engine unit includes
a single-combustion-chamber upstream sub-catalyst (200) which is provided upstream in the flow direction of the single-combustion-chamber main catalyst (39, 116, 154) in the single-combustion-chamber cylinder exhaust passage member (31, 108, 146) or the single-combustion-chamber exhaust pipe (34, 111, 149, 234, 534), the single-combustion-chamber upstream sub-catalyst (200) being configured to purify the exhaust gas.

10. The straddled vehicle according to any one of claims 1 to 9, wherein, the single-cylinder four-stroke engine unit includes
a single-combustion-chamber downstream sub-catalyst (400) which is provided downstream in the flow direction of the single-combustion-chamber main catalyst (39, 116, 154) in the single-combustion-chamber exhaust pipe (34, 111, 149, 234, 534) or the single-combustion-chamber silencer (35, 112, 150), the single-combustion-chamber downstream sub-catalyst (400) being configured to purify the exhaust gas.

11. The straddled vehicle according to any one of claims 1 to 10, wherein, the single-cylinder four-stroke engine unit includes:
a single-combustion-chamber upstream oxygen detector (37, 114, 152) which is provided upstream in the flow direction of the single-combustion-chamber main catalyst (39, 116, 154) in the single-combustion-chamber cylinder exhaust passage member (31, 108, 146) or the single-combustion-chamber exhaust pipe (34, 111, 149, 234, 534), the single-combustion-chamber upstream oxygen detector (37, 114, 152) being configured to detect the oxygen density in the exhaust gas; and
a controller (45) configured to process a signal from the single-combustion-chamber upstream oxygen detector (37, 114, 152).

12. The straddled vehicle according to claim 11, wherein, the single-cylinder four-stroke engine unit includes
a fuel supplier which is configured to supply fuel to the one combustion chamber (29, 106, 144), wherein the controller (45) is configured to control an amount of the fuel supplied to the one combustion chamber (29, 106, 144) by the fuel supplier based on a signal from the single-combustion-chamber upstream oxygen detector (37, 114, 152).

13. The straddled vehicle according to claim 11 or 12, wherein, the single-cylinder four-stroke engine unit includes
a single-combustion-chamber downstream oxygen detector (437) which is provided downstream in the flow direction of the single-combustion-chamber main catalyst (39, 116, 154) in the single-combustion-chamber exhaust pipe (34, 111, 149, 234, 534) or the single-combustion-chamber silencer (35, 112, 150),
wherein the controller (45) is configured to process a signal from the single-combustion-chamber upstream oxygen detector (37, 114, 152) and a signal from the single-combustion-chamber downstream oxygen detector (437).

14. The straddled vehicle according to claim 13, wherein, the single-cylinder four-stroke engine unit includes
a fuel supplier which is configured to supply fuel to the one combustion chamber (29, 106, 144),
wherein the controller (45) is configured to control an amount of the fuel supplied to the one combustion chamber (29, 106, 144) by the fuel supplier based on the signal from the single-combustion-chamber upstream oxygen detector (37, 114, 152) and the signal from the single-combustion-chamber downstream oxygen detector (437).

15. The vehicle according to claim 13 or 14, wherein
the controller (45) determines the purification capability of the single-combustion-chamber main catalyst (39, 116, 154) based on the signal from the single-combustion-chamber downstream oxygen detector (437), and
a notification unit is provided, the notification unit configured to perform notification when the controller (45) determines that the purification capability of the single-combustion-chamber main catalyst (39, 116, 154) has lowered to a predetermined level.

## Patentansprüche

1. Ein Grätschsitzfahrzeug (1, 80, 120), das eine Einzylinder-Viertakt-Motoreinheit aufweist, wobei die Einzylinder-Viertakt-Motoreinheit folgende Merkmale aufweist:
einen Motorhauptkörper (20, 94, 133), der ein Kurbelgehäusebauglied (21, 98, 136) und ein horizontales Zylinderbauglied (22, 99, 137) aufweist, wobei das Kurbelgehäusebauglied (21, 98, 136) eine Kurbelwelle (27, 104, 142) aufweist, die sich in einer Links-Rechts-Richtung des Grätschsitzfahrzeugs erstreckt, und das horizontale Zylinderbauglied (22, 99, 137) eine Verbrennungskammer (29, 106, 144), die teilweise aus einer Innenoberfläche eines Zylinderlochs (24a, 101a, 139a) gebildet ist, und ein Einzel-Verbrennungskammer-Zylinderabgaskanalbauglied (31, 108, 146) umfasst, in dem Abgas, das von der einen Verbrennungskammer (29, 106, 144) abgelassen wird, fließt, gebildet ist, wobei sich eine Mittelachse (Cy1, Cy3, Cy4) des Zylinderlochs (24a, 101a, 139a) in einer Vorne-Hinten-Richtung des Grätschsitzfahrzeugs erstreckt;
ein Einzel-Verbrennungskammer-Abgasrohr (34, 111, 149, 234, 534), das einen Teil einer Abgasvorrichtung (36, 113, 151) bildet, wobei das Einzel-Verbrennungskammer-Abgasrohr (34, 111, 149, 234, 534) zumindest an einem Teil desselben ein Einzel-Verbrennungskammer-Abgasrohrbauglied (42, 109, 157) umfasst, von dem ein stromaufwärtiges Ende mit einem stromabwärtigen Ende (31b, 108b, 146b) des Einzel-Verbrennungskammer-Zylinderabgaskanalbauglieds (31, 108, 146) verbunden ist;
einen Einzel-Verbrennungskammer-Schalldämpfer (35, 112, 150), der eine Auslassöffnung (35e, 112e, 150e) umfasst, die zu der Atmosphäre hin offen ist und mit dem stromabwärtigen Ende des Einzel-Verbrennungskammer-Abgasrohrbauglieds (42, 109, 157) verbunden ist, wobei der Einzel-Verbrennungskammer-Schalldämpfer (35, 112, 150) konfiguriert ist, um Schall zu dämpfen, der durch das Abgas erzeugt wird, indem es dem Abgas ermöglicht wird, von dem stromabwärtigen Ende des Einzel-Verbrennungskammer-Abgasrohrs (34, 111, 149, 234, 534) zu der Auslassöffnung (35e, 112e, 150e) zu fließen, wobei der Einzel-Verbrennungskammer-Schalldämpfer (35, 112, 150) angeordnet ist, so dass, wenn das Grätschsitzfahrzeug in einer Oben-Unten-Richtung betrachtet wird, ein stromaufwärtiges Ende (35a, 112a, 150a) des Einzel-Verbrennungskammer-Schalldämpfers (35, 112, 150) von dem stromabwärtigen Ende (31b, 108b, 146b) des Einzel-Verbrennungskammer-Zylinderabgaskanalbauglieds (31, 108, 146) in einer Richtung parallel zu der Mittelachse (Cy1, Cy3, Cy4) des Zylinderlochs (24a, 101a, 139a) und in einer Richtung vertikal zu der Mittelachse (Cy1, Cy3, Cy4) des Zylinderlochs (24a, 101a, 139a) entfernt ist, und der Einzel-Verbrennungskammer-Schalldämpfer (35, 112, 150) einen Teil der Abgasvorrichtung (36, 113, 151) bildet; und
einen Einzel-Verbrennungskammer-Hauptkatalysator (39, 116, 154), der in dem Einzel-Verbrennungskammer-Abgasrohrbauglied (42, 109, 157) vorgesehen ist, wobei der Einzel-Verbrennungskammer-Hauptkatalysator (39, 116, 154) das Abgas reinigt, das von der einen Verbrennungskammer (29, 106, 144) überwiegend in einem Abgasweg (41, 118, 156) abgelassen wird, der sich von der einen Verbrennungskammer (29, 106, 144) zu der Auslassöffnung (35e, 112e, 150e) erstreckt, und wobei der Einzel-Verbrennungskammer-Hauptkatalysator (39, 116, 154) einen Teil der Abgasvorrichtung (36, 113, 151) bildet, wobei der Einzel-Verbrennungskammer-Hauptkatalysator (39, 116, 154) angeordnet ist, so dass
wenn das Grätschsitzfahrzeug in der Oben-Unten-Richtung betrachtet wird, ein stromaufwärtiges Ende und ein stromabwärtiges Ende des Einzel-Verbrennungskammer-Hauptkatalysators (39, 116, 154) in einer Richtung parallel zu der Mittelachse (Cy1, Cy3, Cy4) des Zylinderlochs (24a, 101a, 139a) und in einer Richtung orthogonal zu der Mittelachse (Cy1, Cy3, Cy4) des Zylinderlochs (24a, 101a, 139a) entfernt voneinander sind,
wenn das Grätschsitzfahrzeug in der Oben-Unten-Richtung betrachtet wird, die Mitte des stromaufwärtigen Endes (35a, 112a, 150a) des Einzel-Verbrennungskammer-Schalldämpfers (35, 112, 150) in einer Links-Rechts-Richtung des Grätschsitzfahrzeugs entweder links oder rechts von der Mitte des stromabwärtigen Endes (31b, 108b, 146b) des Einzel-Verbrennungskammer-Zylinder-Abgaskanalbauglieds (31, 108, 146) positioniert ist,
wenn das Grätschsitzfahrzeug in der Oben-Unten-Richtung betrachtet wird, die Mitte des stromabwärtigen Endes des Einzel-Verbrennungskammer-Hauptkatalysators (39, 116, 154) in der Links-Rechts-Richtung des Grätschsitzfahrzeugs entweder links oder rechts von der Mitte des stromaufwärtigen Endes des Einzel-Verbrennungskammer-Hauptkatalysators (39, 116, 154) positioniert ist, und
wenn das Grätschsitzfahrzeug in der Oben-Unten-Richtung betrachtet wird, der Einzel-Verbrennungskammer-Hauptkatalysator (39, 116, 154) vorgesehen ist, um zumindest teilweise ein Viereck (S10) zu überlappen, das aus einer linearen Linie (S11), die durch das stromabwärtige Ende (31b, 108b, 146b) des Einzel-Verbrennungskammer-Zylinderabgaskanalbauglieds (31, 108, 146) verläuft und parallel zu der Mittelachse (Cy1, Cy3, Cy4) des Zylinderlochs (24a, 101a, 139a) ist, einer linearen Linie (S12), die durch das stromabwärtige Ende (31b, 108b, 146b) des Einzel-Verbrennungskammer-Zylinderabgaskanalbauglieds (31, 108, 146) verläuft und parallel zu der Mittelachse (Cr1, Cr3, Cr4) der Kurbelwelle (27, 104, 142) ist, einer linearen Linie (S13), die durch das stromaufwärtige Ende (35a, 112a, 150a) des Einzel-Verbrennungskammer-Schalldämpfers (35, 112, 150) verläuft und parallel zu der Mittelachse (Cy1, Cy3, Cy4) des Zylinderlochs (24a, 101a, 139a) ist, und einer linearen Linie (S14) gebildet ist, die durch das stromaufwärtige Ende (35a, 112a, 150a) des Einzel-Verbrennungskammer-Schalldämpfers (35, 112, 150) verläuft und parallel zu der Mittelachse (Cr1, Cr3, Cr4) der Kurbelwelle (27, 104, 142) ist,
wobei der Einzel-Verbrennungskammer-Hauptkatalysator (39, 116, 154) vorgesehen ist, so dass eine Weglänge (g1, g3, g4) von dem stromabwärtigen Ende des Einzel-Verbrennungskammer-Hauptkatalysators (39, 116, 154) zu dem stromaufwärtigen Ende (35a, 112a, 150a) des Einzel-Verbrennungskammer-Schalldämpfers (35, 112, 150) kürzer ist als eine Weglänge (b1, b4, b5) von dem stromabwärtigen Ende (31b, 108b, 146b) des Einzel-Verbrennungskammer-Zylinderabgaskanalbauglieds (31, 108, 146) zu dem stromaufwärtigen Ende des Einzel-Verbrennungskammer-Hauptkatalysators (39, 116, 154), so dass es möglich ist, die Tragestruktur, die den Einzel-Verbrennungs-Schalldämpfer (35, 112, 150) trägt, als die Tragestruktur zu verwenden, um den Einzel-Verbrennungskammer-Hauptkatalysator (39, 116, 154) zu tragen,
**dadurch gekennzeichnet, dass**
der Einzel-Verbrennungskammer-Hauptkatalysator (39, 116, 154) in der Vorne-Hinten-Richtung des Grätschsitzfahrzeugs zumindest teilweise vor der Mittelachse (Cr1, Cr3, Cr4) der Kurbelwelle (27, 104, 142) vorgesehen ist.

2. Das Grätschsitzfahrzeug gemäß Anspruch 1, bei dem
das Einzel-Verbrennungskammer-Abgasrohrbauglied (42, 109, 157) ein von dem Katalysator bereitgestelltes Kanalbauglied (40b, 117b, 155b), in dem der Einzel-Verbrennungskammer-Hauptkatalysator (39, 116, 154) vorgesehen ist, und ein stromaufwärtiges Kanalbauglied (40a, 117a, 155a) umfasst, das mit einem stromaufwärtigen Ende des von dem Katalysator bereitgestellten Kanalbauglieds (40b, 117b, 155b) verbunden ist und
eine Querschnittsfläche des von dem Katalysator bereitgestellten Kanalbauglieds (40b, 117b, 155b), geschnitten entlang der Richtung orthogonal zu der Flussrichtung des Abgases, größer ist als eine Querschnittsfläche von zumindest einem Teil des stromaufwärtigen Kanalbauglieds (40a, 117a, 155a), geschnitten entlang einer Richtung orthogonal zu der Flussrichtung des Abgases.

3. Das Grätschsitzfahrzeug gemäß Anspruch 1 oder 2, bei dem
der Einzel-Verbrennungskammer-Hauptkatalysator (39, 116, 154) vorgesehen ist, so dass die Weglänge (g1, g3, g4) von dem stromabwärtigen Ende des Einzel-Verbrennungskammer-Hauptkatalysators (39, 116, 154) zu dem stromaufwärtigen Ende (35a, 112a, 150a) des Einzel-Verbrennungskammer-Schalldämpfers (35, 112, 150) kürzer ist als eine Weglänge (a1+b1, a3+b3, a4+b4) von der einen Verbrennungskammer (29, 106, 144) zu dem stromaufwärtigen Ende des Einzel-Verbrennungskammer-Hauptkatalysators (39, 116, 154).

4. Das Grätschsitzfahrzeug gemäß einem der Ansprüche 1 bis 3, bei dem
der Einzel-Verbrennungskammer-Hauptkatalysator (39, 116, 154) in der Vorne-Hinten-Richtung des Grätschsitzfahrzeugs zumindest teilweise hinter der Mittelachse (Cr1, Cr3, Cr4) der Kurbelwelle (27, 104, 142) vorgesehen ist.

5. Das Grätschsitzfahrzeug gemäß einem der Ansprüche 1 bis 4, bei dem
der Einzel-Verbrennungskammer-Hauptkatalysator (39, 116, 154) in der Vorne-Hinten-Richtung des Grätschsitzfahrzeugs zumindest teilweise hinter einer linearen Linie (L2, L6, L8) orthogonal zu der Mittelachse (Cy1, Cy3, Cy4) des Zylinderlochs (24a, 101a, 139a) und orthogonal zu der Mittelachse (Cr1, Cr3, Cr4) der Kurbelwelle (27, 104, 142) vorgesehen ist.

6. Das Grätschsitzfahrzeug gemäß einem der Ansprüche 1 bis 5, bei dem
der Einzel-Verbrennungskammer-Hauptkatalysator (39, 116, 154) in der Vorne-Hinten-Richtung des Grätschsitzfahrzeugs zumindest teilweise vor einer linearen Linie (L2, L6, L8) orthogonal zu der Mittelachse (Cy1, Cy3, Cy4) des Zylinderlochs (24a, 101a, 139a) und orthogonal zu der Mittelachse (Cr1, Cr3, Cr4) der Kurbelwelle (27, 104, 142) vorgesehen ist.

7. Das Grätschsitzfahrzeug gemäß einem der Ansprüche 1 bis 6, bei dem
das Einzel-Verbrennungskammer-Abgasrohrbauglied (42, 109, 157) ein von dem Katalysator bereitgestelltes Kanalbauglied (40b, 117b, 155b) umfasst, in dem der Einzel-Verbrennungskammer-Hauptkatalysator (39, 116, 154) vorgesehen ist und
die Einzelzylinder-Viertakt-Motoreinheit eine Katalysatorschutzvorrichtung (600) umfasst, die eine Außenoberfläche des von dem Katalysator bereitgestellten Kanalbauglieds (40b, 117b, 155b) zumindest teilweise bedeckt.

8. Das Grätschsitzfahrzeug gemäß einem der Ansprüche 1 bis 7, bei dem
zumindest ein Teil des Einzel-Verbrennungskammer-Abgasrohrbauglieds (42, 109, 157), das in der Flussrichtung des Einzel-Verbrennungskammer-Hauptkatalysators (39, 116, 154) stromaufwärts liegt, aus einem Mehrfachwandrohr (500) gebildet ist, das ein Innenrohr (501) und zumindest ein Außenrohr (502) umfasst, das das Innenrohr (501) bedeckt.

9. Das Grätschsitzfahrzeug gemäß einem der Ansprüche 1 bis 8, bei dem die Einzelzylinder-Viertakt-Motoreinheit folgendes Merkmal umfasst:
einen stromaufwärtigen Einzel-Verbrennungskammer-Teilkatalysator (200), der in der Flussrichtung des Einzel-Verbrennungskammer-Hauptkatalysators (39, 116, 154) stromaufwärts in dem Einzel-Verbrennungskammer-Zylinderabgaskanalbauglied (31, 108, 146) oder dem Einzel-Verbrennungskammer-Abgasrohr (34, 111, 149, 234, 534) vorgesehen ist, wobei der stromaufwärtige Einzel-Verbrennungskammer-Teilkatalysator (200) konfiguriert ist, um das Abgas zu reinigen.

10. Das Grätschsitzfahrzeug gemäß einem der Ansprüche 1 bis 9, bei dem Einzylinder-Viertakt-Motoreinheit folgendes Merkmal umfasst:
einen stromabwärtigen Einzel-Verbrennungskammer-Teilkatalysator (400), der in der Flussrichtung des Einzel-Verbrennungskammer-Hauptkatalysators (39, 116, 154) stromabwärts in dem Einzel-Verbrennungskammer-Abgasrohr (34, 111, 149, 234, 534) oder dem Einzel-Verbrennungskammer-Schalldämpfer (35, 112, 150) vorgesehen ist, wobei der stromabwärtige Einzel-Verbrennungskammer-Teilkatalysator (400) konfiguriert ist, um das Abgas zu reinigen.

11. Das Grätschsitzfahrzeug gemäß einem der Ansprüche 1 bis 10, bei dem die Einzylinder-Viertakt-Motoreinheit folgende Merkmale umfasst:
einen stromaufwärtigen Einzel-Verbrennungskammer-Sauerstoffdetektor (37, 114, 152), der in der Flussrichtung des Einzel-Verbrennungskammer-Hauptkatalysators (39, 116, 154) stromaufwärts in dem Einzel-Verbrennungskammer-Zylinderabgaskanalbauglied (31, 108, 146) oder dem Einzel-Verbrennungskammer-Abgasrohr (34, 111, 149, 234, 534) vorgesehen ist, wobei der stromaufwärtige Einzel-Verbrennungskammer-Sauerstoffdetektor (37, 114, 152) konfiguriert ist, um die Sauerstoffdichte in dem Abgas zu erfassen; und
eine Steuerung (45), die konfiguriert ist, um ein Signal von dem stromaufwärtigen Einzel-Verbrennungskammer-Sauerstoffdetektor (37, 114, 152) zu verarbeiten.

12. Das Grätschsitzfahrzeug gemäß Anspruch 11, bei dem die Einzylinder-Viertakt-Motoreinheit folgendes Merkmal umfasst:
eine Kraftstoffzufuhrvorrichtung, die konfiguriert ist, um der einen Verbrennungskammer (29, 106, 144) Kraftstoff zuzuführen, wobei die Steuerung (45) konfiguriert ist, um eine Kraftstoffmenge, die der einen Verbrennungskammer (29, 106, 144) durch die Kraftstoffzufuhrvorrichtung zugeführt wird, basierend auf einem Signal von dem stromaufwärtigen Einzel-Verbrennungskammer-Sauerstoffdetektor (37, 114, 152) zu steuern.

13. Das Grätschsitzfahrzeug gemäß Anspruch 11 oder 12, bei dem die Einzylinder-Viertakt-Motoreinheit folgendes Merkmal umfasst:
einen stromabwärtigen Einzel-Verbrennungskammer-Sauerstoffdetektor (437), der in der Flussrichtung des Einzel-Verbrennungskammer-Hauptkatalysators (39, 116, 154) stromabwärts in dem Einzel-Verbrennungskammer-Abgasrohr (34, 111, 149, 234, 534) oder dem Einzel-Verbrennungskammer-Schalldämpfer (35, 112, 150) vorgesehen ist,
wobei die Steuerung (45) konfiguriert ist, um ein Signal von dem stromaufwärtigen Einzel-Verbrennungskammer-Sauerstoffdetektor (37, 114, 152) und ein Signal von dem stromabwärtigen Einzel-Verbrennungskammer-Sauerstoffdetektor (437) zu verarbeiten.

14. Das Grätschsitzfahrzeug gemäß Anspruch 13, bei dem Einzylinder-Viertakt-Motoreinheit folgendes Merkmal umfasst:
eine Kraftstoffzufuhreinrichtung, die konfiguriert ist, um der einen Verbrennungskammer (29, 106, 144) Kraftstoff zuzuführen,
wobei die Steuerung (45) konfiguriert ist, um eine Kraftstoffmenge, die der einen Verbrennungskammer (29, 106, 144) durch die Kraftstoffzufuhreinrichtung zugeführt wird, basierend auf dem Signal von dem stromaufwärtigen Einzel-Verbrennungskammer-Sauerstoffdetektor (37, 114, 152) und dem Signal von dem stromabwärtigen Einzel-Verbrennungskammer-Sauerstoffdetektor (437) zu steuern.

15. Das Fahrzeug gemäß Anspruch oder 13 oder 14, bei dem
die Steuerung (45) die Reinigungsfähigkeit des Einzel-Verbrennungskammer-Hauptkatalysators (39, 116, 154) basierend auf dem Signal von dem stromabwärtigen Einzel-Verbrennungskammer-Sauerstoffdetektor (437) bestimmt und
eine Benachrichtigungseinheit vorgesehen ist, wobei die Benachrichtigungseinheit konfiguriert ist, um eine Benachrichtigung durchzuführen, wenn die Steuerung (45) bestimmt, dass die Reinigungsfähigkeit des Einzel-Verbrennungskammer-Hauptkatalysators (39, 116, 154) auf einen vorbestimmten Pegel gesunken ist.

## Revendications

1. Véhicule à enfourcher (1, 80, 120) comprenant un groupe moteur à quatre temps monocylindre, le groupe moteur à quatre temps monocylindre comprenant:
un corps principal de moteur (20, 94, 133) comportant un élément de carter (21, 98, 136) et un élément de cylindre horizontal (22, 99, 137), l'élément de carter (21, 98, 136) comportant un vilebrequin (27, 104, 142) s'étendant dans une direction gauche-droite du véhicule à enfourcher, et l'élément de cylindre horizontal (22, 99, 137) comportant une chambre de combustion unique (29, 106, 144) qui est partiellement formée d'une surface intérieure d'un trou de cylindre (24a, 101a, 139a) et d'un élément de passage d'échappement de cylindre de chambre de combustion unique (31, 108, 146) dans lequel circule le gaz d'échappement évacué de la chambre de combustion unique (29, 106, 144), un axe central (Cy1, Cy3, Cy4) du trou de cylindre (24a, 101a, 139a) s'étendant dans une direction avant-arrière du véhicule à enfourcher;
un tuyau d'échappement de chambre de combustion unique (34, 111, 149, 234, 534) qui fait partie d'un extracteur (36, 113, 151), le tuyau d'échappement de chambre de combustion unique (34, 111, 149, 234, 534) comportant, au moins dans une partie de ce dernier, un élément de tuyau d'échappement de chambre de combustion unique (42, 109, 157) présentant une extrémité amont connectée à une extrémité aval (31b, 108b, 146b) de l'élément de passage d'échappement de cylindre de chambre de combustion unique (31, 108, 146);
un silencieux de chambre de combustion unique (35, 112, 150) comportant un orifice de décharge (35e, 112e, 150e) exposé à l'atmosphère et connecté à l'extrémité aval de l'élément de tuyau d'échappement de chambre de combustion unique (42, 109, 157), le silencieux de chambre de combustion unique (35, 112, 150) étant configuré pour restreindre le bruit généré par le gaz d'échappement en permettant que le gaz d'échappement circule de l'extrémité aval du tuyau d'échappement de chambre de combustion unique (34, 111, 1.49, 234, 534) vers l'orifice de décharge (35e, 112e, 150e), le silencieux de chambre de combustion unique (35, 112, 150) étant disposé de sorte que, lorsque le véhicule à enfourcher est vu dans une direction de haut en bas, une extrémité amont (35a, 112a, 150a) du silencieux de chambre de combustion unique (35, 112, 150) soit distante de l'extrémité aval (31b, 108b, 146b) de l'élément de passage d'échappement de cylindre de chambre de combustion unique (31, 108, 146) dans une direction parallèle à l'axe central (Cy1, Cy3, Cy4) du trou de cylindre (24a, 101a, 139a) et dans une direction verticale par rapport à l'axe central (Cy1, Cy3, Cy4) du trou de cylindre (24a, 101a, 139a), et le silencieux de chambre de combustion unique (35, 112, 150) constituant une partie de l'extracteur (36, 113 151); et
un catalyseur principal de chambre de combustion unique (39, 116, 154) prévu dans l'élément de tuyau d'échappement de chambre de combustion unique (42, 109, 157), le catalyseur principal de chambre de combustion unique (39, 116, 154) purifiant le gaz d'échappement évacué de la chambre de combustion unique (29, 106, 144) en majeure partie dans un trajet d'échappement (41, 118, 156) s'étendant de la chambre de combustion unique (29, 106, 144) à l'orifice de décharge (35e, 112e, 150e), et le catalyseur principal de chambre de combustion unique (39, 116, 154) constituant une partie de l'extracteur (36, 113, 151), le catalyseur principal de chambre de combustion unique (39, 116, 154) étant disposé de sorte que,
lorsque le véhicule à enfourcher est vu dans la direction de haut en bas, une extrémité amont et une extrémité aval du catalyseur principal de chambre de combustion unique (39, 116, 154) soient distantes l'une de l'autre dans une direction parallèle à l'axe central (Cy1, Cy3, Cy4) du trou de cylindre (24a, 101a, 139a) et dans une direction orthogonale à l'axe central (Cy1, Cy3, Cy4) du trou de cylindre (24a, 101a, 139a),
lorsque le véhicule à enfourcher est vu dans la direction de haut en bas, le centre de l'extrémité amont (35a, 112a, 150a) du silencieux de chambre de combustion unique (35, 112, 150) soit positionné soit à gauche, soit à droite du centre de l'extrémité aval (31b, 108b, 146b) de l'élément de passage d'échappement de cylindre de chambre de combustion unique (31, 108, 146) dans une direction gauche-droite du véhicule à enfourcher,
lorsque le véhicule à enfourcher est vu dans la direction de haut en bas, le centre de l'extrémité aval du catalyseur principal de chambre de combustion unique (39, 116, 154) soit positionné soit à gauche, soit à droite du centre de l'extrémité amont du catalyseur principal de chambre de combustion unique (39, 116, 154) dans la direction gauche-droite du véhicule à enfourcher, et
lorsque le véhicule à enfourcher est vu dans la direction de haut en bas, le catalyseur principal de chambre de combustion unique (39, 116, 154) soit prévu de manière à venir au moins partiellement en recouvrement avec un quadrilatère (S10) formé par une ligne linéaire (S11) qui passe par l'extrémité aval (31b, 108b, 146b) de l'élément de passage d'échappement de cylindre de chambre de combustion unique (31, 108, 146) et est parallèle à l'axe central (Cy1, Cy3, Cy4) du trou de cylindre (24a, 101a, 139a), une ligne linéaire (S12) qui passe par l'extrémité aval (31b, 108b, 146b) de l'élément de passage d'échappement de cylindre de chambre de combustion unique (31, 108, 146) et est parallèle à l'axe central (Cr1, Cr3, Cr4) du vilebrequin (27, 104, 142), une ligne linéaire (S13) qui passe par l'extrémité amont (35a, 112a, 150a) du silencieux de chambre de combustion unique (35, 112, 150) et est parallèle à l'axe central (Cy1, Cy3, Cy4) du trou de cylindre (24a, 101a, 139a) et une ligne linéaire (S14) qui passe par l'extrémité amont (35a, 112a, 150a) du silencieux de chambre de combustion unique (35, 112, 150) et est parallèle à l'axe central (Cr1, Cr3, Cr4) du vilebrequin (27, 104, 142),
dans lequel le catalyseur principal de chambre de combustion unique (39, 116, 154) est prévu de sorte qu'une longueur de trajet (g1, g3, g4) de l'extrémité aval du catalyseur principal de chambre de combustion unique (39, 116, 154) à l'extrémité amont (35a, 112a, 150a) du silencieux de chambre de combustion unique (35, 112, 150) soit plus courte qu'une longueur de trajet (b1, b4, b5) de l'extrémité aval (31b, 108b, 146b) de l'élément de passage d'échappement de cylindre de chambre de combustion unique (31, 108, 146) à l'extrémité amont du catalyseur principal de chambre de combustion unique (39, 116, 154), de sorte qu'il soit possible d'utiliser la structure de support qui supporte le silencieux de chambre de combustion unique (35, 112, 150) comme structure de support pour supporter le catalyseur principal de chambre de combustion unique (39, 116, 154),
**caractérisé par le fait que**
le catalyseur principal (39, 116, 154) de chambre de combustion unique est prévu au moins partiellement à l'avant de l'axe central (Cr1, Cr3, Cr4) du vilebrequin (27, 104, 142) dans la direction avant-arrière du véhicule à enfourcher.

2. Véhicule à enfourcher selon la revendication 1, dans lequel
l'élément de tuyau d'échappement de chambre de combustion unique (42, 109, 157) comporte un élément de passage pourvu de catalyseur (40b, 117b, 155b), dans lequel est prévu le catalyseur principal de chambre de combustion unique (39, 116, 154) et un élément de passage amont (40a, 117a, 155a) est connecté à une extrémité amont de l'élément de passage pourvu de catalyseur (40b, 117b, 155b), et
une superficie de section de l'élément de passage pourvu de catalyseur (40b, 117b, 155b) découpée dans la direction orthogonale à la direction de circulation du gaz d'échappement est supérieure à la superficie de section d'au moins une partie de l'élément de passage amont (40a, 117a, 155a) découpée dans la direction orthogonale à la direction de circulation du gaz d'échappement.

3. Véhicule à enfourcher selon la revendication 1 ou 2, dans lequel
le catalyseur principal de chambre de combustion unique (39, 116, 154) est prévu de sorte que la longueur de trajet (g1, g3, g4) de l'extrémité aval du catalyseur principal de chambre de combustion unique (39, 116, 154) à l'extrémité amont (35a, 112a, 150a) du silencieux de chambre de combustion unique (35, 112, 150) soit plus courte qu'une longueur de trajet (a1 + b1, a3 + b3, a4 + b4) de la chambre de combustion unique (29, 106, 144) à l'extrémité amont du catalyseur principal de chambre de combustion unique (39, 116, 154).

4. Véhicule à enfourcher selon l'une quelconque des revendications 1 à 3, dans lequel
le catalyseur principal de chambre de combustion unique (39, 116, 154) est prévu au moins partiellement à l'arrière de l'axe central (Cr1, Cr3, Cr4) du vilebrequin (27, 104, 142) dans la direction avant-arrière du véhicule à enfourcher.

5. Véhicule à enfourcher selon l'une quelconque des revendications 1 à 4, dans lequel
le catalyseur principal de chambre de combustion unique (39, 116, 154) est prévu au moins partiellement à l'arrière d'une ligne linéaire (L2, L6, L8) orthogonale à l'axe central (Cy1, Cy3, Cy4) du trou de cylindre (24a, 101a, 139a) et orthogonale à l'axe central (Cr1, Cr3, Cr4) du vilebrequin (27, 104, 142), dans la direction avant-arrière du véhicule à enfourcher.

6. Véhicule à enfourcher selon l'une quelconque des revendications 1 à 5, dans lequel
le catalyseur principal de chambre de combustion unique (39, 116, 154) est prévu au moins partiellement à l'avant d'une ligne linéaire (L2, L6, L8) orthogonale à l'axe central (Cy1, Cy3, Cy4) du trou de cylindre (24a, 101a, 139a) et orthogonale à l'axe central (Cr1, Cr3, Cr4) du vilebrequin (27, 104, 142), dans la direction avant-arrière du véhicule à enfourcher.

7. Véhicule à enfourcher selon l'une quelconque des revendications 1 à 6, dans lequel
l'élément de tuyau d'échappement de chambre de combustion unique (42, 109, 157) comporte un élément de passage pourvu de catalyseur (40b, 117b, 155b) dans lequel est prévu le catalyseur principal de chambre de combustion unique (39, 116, 154), et
l'unité de moteur à quatre temps monocylindre comporte un protecteur de catalyseur (600) qui recouvre au moins partiellement une surface extérieure de l'élément de passage pourvu de catalyseur (40b, 117b, 155b).

8. Véhicule à enfourcher selon l'une quelconque des revendications 1 à 7, dans lequel
au moins une partie de l'élément de tuyau d'échappement de chambre de combustion unique (42, 109, 157) qui se trouve en amont dans la direction de circulation du catalyseur principal de chambre de combustion unique (39, 116, 154) est formée d'un tuyau à parois multiples (500) qui comporte un tuyau intérieur (501) et au moins un tuyau extérieur (502) recouvrant le tuyau intérieur (501).

9. Véhicule à enfourcher selon l'une quelconque des revendications 1 à 8, dans lequel l'unité de moteur à quatre temps monocylindre comporte
un sous-catalyseur amont de chambre de combustion unique (200) qui est prévu en amont dans la direction de circulation du catalyseur principal de chambre de combustion unique (39, 116, 154) dans l'élément de passage d'échappement de cylindre de chambre de combustion unique (31, 108, 146) ou le tuyau d'échappement de chambre de combustion unique (34, 111, 149, 234, 534), le sous-catalyseur amont de chambre de combustion unique (200) étant configuré pour purifier le gaz d'échappement.

10. Véhicule à enfourcher selon l'une quelconque des revendications 1 à 9, dans lequel l'unité de moteur à quatre temps monocylindre comporte
un sous-catalyseur aval de chambre de combustion unique (400) qui est prévu en aval dans la direction de circulation du catalyseur principal de chambre de combustion unique (39, 116, 154) dans le tuyau d'échappement de chambre de combustion unique (34, 111, 149, 234, 534) ou le silencieux de chambre de combustion unique (35, 112, 150), le sous-catalyseur aval de chambre de combustion unique (400) étant configuré pour purifier le gaz d'échappement.

11. Véhicule à enfourcher selon l'une quelconque des revendications 1 à 10, dans lequel l'unité de moteur à quatre temps monocylindre comporte:
un détecteur d'oxygène amont de chambre de combustion unique (37, 114, 152) qui est prévu en amont dans la direction de circulation du catalyseur principal de chambre de combustion unique (39, 116, 154) dans l'élément de passage d'échappement de cylindre de chambre de combustion unique (31, 108, 146) ou le tuyau d'échappement de chambre de combustion unique (34, 111, 149, 234, 534), le détecteur d'oxygène amont de chambre de combustion unique (37, 114, 152) étant configuré pour détecter la densité d'oxygène dans le gaz d'échappement; et
un moyen de commande (45) configuré pour traiter un signal du détecteur d'oxygène amont de chambre de combustion unique (37, 114, 152).

12. Véhicule à enfourcher selon la revendication 11, dans lequel l'unité de moteur à quatre temps monocylindre comporte
un alimentateur de carburant qui est configuré pour alimenter du carburant vers la chambre de combustion unique (29, 106, 144), où le moyen de commande (45) est configuré pour commander une quantité de carburant alimentée vers la chambre de combustion unique (29, 106, 144) par l'alimentateur de carburant sur base d'un signal du détecteur d'oxygène amont de chambre de combustion unique (37, 114, 152).

13. Véhicule à enfourcher selon la revendication 11 ou 12, dans lequel l'unité de moteur à quatre temps monocylindre comporte
un détecteur d'oxygène aval de chambre de combustion unique (437) qui est prévu en aval dans la direction de circulation du catalyseur principal de chambre de combustion unique (39, 116, 154) dans le tuyau d'échappement de chambre de combustion unique (34, 111, 149, 234, 534) ou le silencieux de chambre de combustion unique (35, 112, 150),
dans lequel le moyen de commande (45) est configuré pour traiter un signal du détecteur d'oxygène amont de chambre de combustion unique (37, 114, 152) et un signal du détecteur d'oxygène aval de chambre de combustion unique (437).

14. Véhicule à enfourcher selon la revendication 13, dans lequel l'unité de moteur à quatre temps monocylindre comporte
un alimentateur de carburant qui est configuré pour alimenter du carburant vers la chambre de combustion unique (29, 106, 144),
dans lequel le moyen de commande (45) est configuré pour commander une quantité de carburant alimentée vers la chambre de combustion unique (29, 106, 144) par l'alimentateur de carburant sur base du signal du détecteur d'oxygène amont de chambre de combustion unique (37, 114, 152) et du signal du détecteur d'oxygène aval de chambre de combustion unique (437).

15. Véhicule selon la revendication 13 ou 14, dans lequel
le moyen de commande (45) détermine la capacité de purification du catalyseur principal de chambre de combustion unique (39, 116, 154) sur base du signal du détecteur d'oxygène aval de chambre de combustion unique (437), et
est prévue une unité de notification, l'unité de notification étant configurée pour effectuer une notification lorsque le moyen de commande (45) détermine que la capacité de purification du catalyseur principal de chambre de combustion unique (39, 116, 154) est descendue à un niveau prédéterminé.
